(19) Europäisches Patentamt
European Patent Office
Office européen des brevets

(11) EP 4 660 251 A1

(12) **EUROPEAN PATENT APPLICATION**
published in accordance with Art. 153(4) EPC

(43) Date of publication:
**10.12.2025 Bulletin 2025/50**

(21) Application number: **24750418.6**

(22) Date of filing: **02.02.2024**

(51) International Patent Classification (IPC):
***C08L 83/06*** (2006.01) ***C08K 3/04*** (2006.01)
***C08K 3/22*** (2006.01) ***C08K 3/28*** (2006.01)
***C08L 83/05*** (2006.01) ***C08L 83/07*** (2006.01)

(52) Cooperative Patent Classification (CPC):
**C08K 3/04; C08K 3/22; C08K 3/28; C08L 83/04; C08L 83/06**

(86) International application number:
**PCT/JP2024/003495**

(87) International publication number:
**WO 2024/162469 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.02.2023 JP 2023014921**

(71) Applicants:
- **Sekisui Chemical Co., Ltd.**
  **Osaka-shi, Osaka 530-8565 (JP)**
- **Sekisui Polymatech Co., Ltd.**
  **Saitama-city, Saitama 338-0837 (JP)**

(72) Inventors:
- **KEKURA, Yu**
  **Saitama-city, Saitama 338-0837 (JP)**
- **ISHIKUBO, Masamichi**
  **Saitama-city, Saitama 338-0837 (JP)**
- **KUDOH, Hiroki**
  **Saitama-city, Saitama 338-0837 (JP)**
- **SAWA, Ryunosuke**
  **Saitama-city, Saitama 338-0837 (JP)**
- **ISHIHARA, Miho**
  **Mishima-gun, Osaka 618-0021 (JP)**
- **KADOWAKI, Kazuki**
  **Mishima-gun, Osaka 618-0021 (JP)**
- **ISHIDA, Hiroya**
  **Mishima-gun, Osaka 618-0021 (JP)**

(74) Representative: **Ter Meer Steinmeister & Partner Patentanwälte mbB**
**Nymphenburger Straße 4**
**80335 München (DE)**

(54) **THERMALLY CONDUCTIVE COMPOSITION AND THERMALLY CONDUCTIVE MOLDED BODY**

(57) The present invention is a thermally conductive composition comprising (A) an organopolysiloxane that is in a liquid form at 25°C, and (B) a thermally conductive filler, the (A) organopolysiloxane containing an organopolysiloxane having a hydroxyl group at part of ends of a main chain or on a side chain, or at both the sites. According to the present invention, there can be provided a thermally conductive composition which comprises an organopolysiloxane, and a thermally conductive filler, and has a reduced viscosity as compared to the conventional compositions.



Processed by Luminess, 75001 PARIS (FR)

## Description

### Technical Field

The present invention relates to a thermally conductive composition, and a thermally conductive formed product.

### Background Art

In electronic equipment such as computers, automobile parts and mobile phones, heat dissipating elements such as heat sinks are commonly used for releasing heat generated from heating elements such as semiconductor elements and machine parts. It is known that a thermally conductive formed product made from a thermally conductive composition containing a thermally conductive filler is disposed between a heating element and a heat dissipating element for enhancing the efficiency of heat transfer to the heat dissipating element.

For example, Patent Literature 1 discloses an invention that relates to a thermally conductive silicone composition containing a thermally conductive filler containing magnesium oxide, aluminum oxide and aluminum hydroxide, and a surface treating agent for the thermally conductive filler. A characteristic is that the surface treating agent is dimethylpolysiloxane in which one end of a molecular chain is blocked with a trialkoxy group and the number of siloxane (Si-O) repeat units is 5 to 100. In addition, it is indicated that the surface treating agent is blended for uniformly dispersing the thermally conductive filler in a silicone matrix, and a thermally conductive silicone composition containing the surface treating agent has a low viscosity, and is easy to process.

### Citation List

### Patent Literature

PTL1: JP 7136065 B

### Summary of Invention

### Technical Problem

With the recent improved characteristics and reduced sizes of devices, thermally conductive compositions have been required to have a further improved heat releasing property. To respond to this, a technique for further reducing the viscosity of a composition containing a thermally conductive filler, and thus improving the filling ability of the thermally conductive filler to increase the thermal conductivity is desired.

When the specific surface treating agent having an alkoxy group, which is disclosed in Patent Literature 1, is used, a certain effect of reducing the viscosity of a thermally conductive silicone composition is exhibited, but is not sufficient to increase the thermal conductivity by further improving filling with the thermally conductive filler, and therefore improvement is needed.

Accordingly, an object of the present invention is to provide a thermally conductive composition which contains an organopolysiloxane, and a thermally conductive filler, and has a reduced viscosity as compared to the conventional compositions, and a thermally conductive formed product.

### Solution to Problem

The present inventors have found that the above-described problem can be solved by a thermally conductive composition containing (A) an organopolysiloxane that is in a liquid form at 25°C, and (B) a thermally conductive filler, the (A) organopolysiloxane containing an organopolysiloxane having a hydroxyl group at part of ends of a main chain or on a side chain, or at both the sites. As a result, the following invention has been completed. That is, the present invention provides the following [1] to [15].

[1] A thermally conductive composition comprising (A) an organopolysiloxane that is in a liquid form at 25°C, and (B) a thermally conductive filler, the (A) organopolysiloxane comprising an organopolysiloxane having a hydroxyl group at part of ends of a main chain or on a side chain, or at both the sites.

[2] The thermally conductive composition according to [1], wherein the organopolysiloxane having a hydroxyl group has a hydroxyl group at one end of the main chain.

[3] The thermally conductive composition according to [1] or [2], wherein in the organopolysiloxane having a hydroxyl

group, a number n of repeat units represented by a siloxane backbone (-Si-O-) is 11 or more.

[4] The thermally conductive composition according to any one of [1] to [3], wherein the organopolysiloxane having a hydroxyl group has a structure represented by the following formula (X):

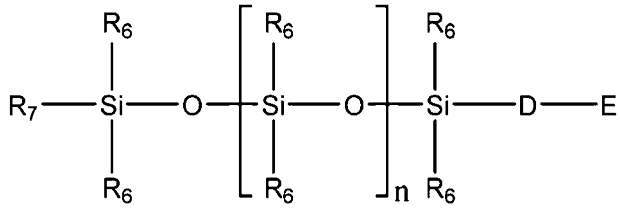 formula (X)

wherein $R_6$ and $R_7$ are each independently an alkyl group, D is ester, amide, ether, an alkylene group, an alkylene ether group, ethylene oxide, or oxime ester, E is an organic group having 1 to 10 carbon atoms and one or more hydroxyl groups, and n is an integer of 1 or more.

[5] The thermally conductive composition according to any one of [1] to [4], wherein a viscosity at a shear rate of 0.1 (1/s) at 25°C is 10 Pa•s or more and $20 \times 10^3$ Pa•s or less.

[6] The thermally conductive composition according to any one of [1] to [5], wherein the (A) organopolysiloxane comprises addition reaction type silicone.

[7] The thermally conductive composition according to any one of [1] to [6], wherein a concentration of hydroxyl groups derived from the organopolysiloxane having a hydroxyl group in the entire thermally conductive composition is 0.5 μmol/g or more and 250 μmol/g or less.

[8] The thermally conductive composition according to any one of [1] to [7], wherein the (B) thermally conductive filler comprises at least one selected from the group consisting of a metal oxide and a metal hydroxide.

[9] The thermally conductive composition according to any one of [1] to [8], wherein the (B) thermally conductive filler comprises an anisotropic filler.

[10] The thermally conductive composition according to [9], wherein the anisotropic filler comprises one or more selected from the group consisting of carbon fiber, scale-like graphite and boron nitride.

[11] The thermally conductive composition according to any one of [1] to [10], wherein the (B) thermally conductive filler comprises a thermally conductive filler having at least one polar group selected from the group consisting of a metal oxide, a metal hydroxide and a metal, and a value obtained by dividing a concentration of hydroxyl groups of the organopolysiloxane having a hydroxyl group contained in the thermally conductive composition (the number of moles of hydroxyl groups in the composition) by a total specific surface area of the thermally conductive filler having a polar group is 0.01 $\mu mol/m^2$ or more and 30 $\mu mol/m^2$ or less.

[12] The thermally conductive composition according to any one of [1] to [11], wherein the (A) organopolysiloxane comprises an organopolysiloxane having an alkoxy group.

[13] The thermally conductive composition according to any one of [1] to [12], further comprising a volatile compound.

[14] A thermally conductive formed product comprising a matrix comprising a cured product of an organopolysiloxane, and a thermally conductive filler, the organopolysiloxane comprising an organopolysiloxane having a hydroxyl group.

[15] The thermally conductive formed product according to [14], wherein the thermally conductive filler comprises an anisotropic filler oriented in a predetermined direction.

Advantageous Effects of Invention

According to the present invention, there can be provided a thermally conductive composition which contains an organopolysiloxane, and a thermally conductive filler, and has a reduced viscosity as compared to the conventional compositions, and a thermally conductive formed product.

Brief Description of Drawings

[Fig. 1] Fig. 1 shows schematic perspective views showing an example of a method for producing a thermally conductive formed product.

[Fig. 2] Fig. 2 is a diagram illustrating a measuring machine for measuring heat resistance.

Description of Embodiments

[Thermally conductive composition]

A thermally conductive composition of the present invention contains (A) an organopolysiloxane that is in a liquid form at 25°C, and (B) a thermally conductive filler. The (A) organopolysiloxane contains an organopolysiloxane having a hydroxyl group at part of ends of a main chain or on a side chain, or at both the sites. Hereinafter, the components forming the thermally conductive composition will be described in detail.

(Organopolysiloxane having hydroxyl group)

The thermally conductive composition of the present invention contains, as the (A) organopolysiloxane that is in a liquid form at 25°C, an organopolysiloxane having a hydroxyl group.

The organopolysiloxane having a hydroxyl group in the present invention has a hydroxyl group at part of ends of the main chain or on a side chain, or at both the sites. That is, the organopolysiloxane having a hydroxyl group in the present invention may be an organopolysiloxane having a hydroxyl group at part of ends of the main chain or on a side chain, or may be an organopolysiloxane having a hydroxyl group at part of ends of the main chain and on a side chain respectively. The organopolysiloxane having a hydroxyl group is a hydroxyl group-containing organopolysiloxane other than an organopolysiloxane having a hydroxyl group at both ends of a main chain. Here, the term "end of a main chain" means an end portion of the longest portion of an organopolysiloxane chain (a linear portion having the largest number of constituent atoms in the organopolysiloxane chain) in the molecular structure.

An organopolysiloxane having a hydroxyl group and having the specific structure easily reacts or interacts with functional groups on the surface of the thermally conductive filler because the organopolysiloxane has a hydroxyl group. In particular, when an organopolysiloxane having a hydroxyl group is used with a later-described thermally conductive filler having a polar group (polar filler), the viscosity of the composition is easily reduced because they are close in polarity.

The organopolysiloxane having a hydroxyl group, which does not have a hydroxyl group at both ends, thus does not react or interact with the thermally conductive filler at both ends. Therefore, it is considered that the dispersibility of the thermally conductive filler in the composition can be enhanced to effectively reduce the viscosity.

The organopolysiloxane having a hydroxyl group in the present invention may have only one hydroxyl group, or may have two or more hydroxyl groups. The upper limit of the number of hydroxyl groups is not limited, but the number of hydroxyl groups is preferably 6 or less, and more preferably 3 or less. In particular, an organopolysiloxane having two hydroxyl groups has a high viscosity reducing effect, thus being preferable.

The number of hydroxyl groups in the organopolysiloxane having a hydroxyl group may be 1, and in an embodiment, the organopolysiloxane is an organopolysiloxane having a hydroxyl group at one end of a main chain, or the like. The hydroxyl group may be directly bonded to an end portion of the organopolysiloxane chain, but is preferably bonded via another atom, and the hydroxyl group is more preferably bonded to a carbon atom.

Preferably, the organopolysiloxane having a hydroxyl group in the present invention has a siloxane backbone (-Si-O-), and the number n of repeat units of the siloxane backbone is 11 or more. The number n of repeat units of the siloxane backbone is preferably 11 or more and 350 or less, more preferably 20 or more and 300 or less, further more preferably 50 or more and 270 or less, and further more preferably 100 or more and 250 or less. When the number n of repeat units of the siloxane backbone is equal to or larger than the lower limit value, the compatibility with an organopolysiloxane forming a matrix is likely to be enhanced. When the number n of repeat units of the siloxane backbone is equal to or smaller than the upper limit value, the viscosity of the composition is easily adjusted to be low.

The organopolysiloxane having a hydroxyl group in the present invention preferably has a structure represented by the following formula (X).

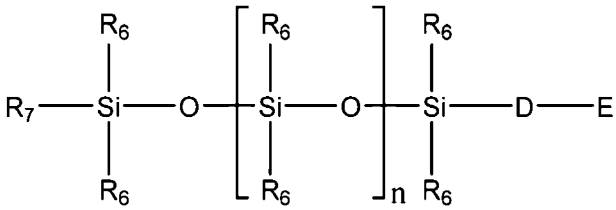

formula (X)

In the above formula (X), $R_6$ and $R_7$ are each independently an alkyl group, D is ester, amide, ether, an alkylene group, or an alkylene ether group, E is an organic group having 1 to 10 carbon atoms and one or more hydroxyl groups, and n is an integer of 1 or more.

In the above formula (X), $R_6$ is an alkyl group, and preferably an alkyl group having 1 to 10 carbon atoms. The alkyl group may be any of a linear alkyl group, a branched alkyl group and a cyclic alkyl group, but is preferably a linear alkyl group. The linear alkyl group is preferably an alkyl group having 1 to 6 carbon atoms, more preferably an alkyl group having

1 to 4 carbon atoms, and further more preferably a methyl group. A plurality of $R_6$ may be the same or different.

In the above formula (X), $R_7$ is an alkyl group, and preferably an alkyl group having 1 to 10 carbon atoms. The alkyl group may be any of a linear alkyl group, a branched alkyl group and a cyclic alkyl group, but is preferably a linear alkyl group. The linear alkyl group is preferably an alkyl group having 1 to 8 carbon atoms, more preferably an alkyl group having 1 to 6 carbon atoms, and further more preferably a butyl group.

In the above formula (X), D is ester, amide, ether, an alkylene group, an alkylene ether group, ethylene oxide, or oxime ester. The oxime ester means "-C=N-O-C(=O)-". In particular, D is preferably an alkylene group or an alkylene ether group, and more preferably an alkylene ether group. When the organopolysiloxane has such a structure as D, the distance between the hydroxyl group and the organopolysiloxane chain increases, and a polarity derived from the structure of D is generated. Thus, as compared to a structure in which a hydroxyl group is directly bonded to an organopolysiloxane chain, affinity for the polar filler increases, so that the viscosity of the composition can be effectively reduced.

The number of carbon atoms in the alkylene group is, for example, 1 to 10, and preferably 2 to 6.

The number of carbon atoms forming the alkylene ether group is, for example, 2 to 10, and preferably 2 to 6. The alkylene ether group, which has a structure in which an oxygen atom is present between two alkylene groups, is represented by "$-R_1-O-R_2-$", where each of $R_1$ and $R_2$ is an alkylene group, and the total number of carbon atoms in $R_1$ and $R_2$ is, for example, 2 to 10, and preferably 2 to 6.

Among alkylene ether groups, "$-CH_2CH_2CH_2OCH_2-$" is particularly preferable. In "$-CH_2CH_2CH_2OCH_2-$" in the formula (X), the carbon atom at the left end is bonded to a silicon atom, and the carbon atom at the right end is bonded to E.

In the formula (X), E is an organic group having 1 to 10 carbon atoms and having one or more hydroxyl groups. In other words, E has a structure in which one or more hydroxyl groups are bonded to an organic group having 1 to 10 carbon atoms. E may have only one hydroxyl group, or may have two or more hydroxyl groups. The upper limit of the number of hydroxyl groups is not limited, but is preferably 6 or less, and more preferably 3 or less. The number of hydroxyl groups is preferably 1 or 2, and more preferably 2.

E preferably has a structure in which one or more hydroxyl groups are bonded to a hydrocarbon group having 1 to 10 carbon atoms, and E more preferably has a structure in which one or more hydroxyl groups are bonded to a hydrocarbon group having 2 to 6 carbon atoms.

E in the formula (X) preferably has a structure represented by the following formula (15).

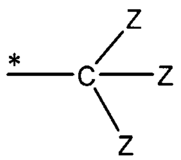

formula (15)

In the formula (15), Z is each independently a hydrogen atom, a hydroxyl group, or a group having a hydroxyl group, and at least one of a plurality of Z is a hydroxyl group, or a group having a hydroxyl group. The asterisk * represents a bond bonding to D.

Examples of the group having a hydroxyl group include groups in which a hydroxyl group is bonded to a hydrocarbon group having 1 to 4 carbon atoms, with "$-CH_2OH$" being preferable.

Among the structures of the formula (15), one represented by the following formula (16) or (17) is particularly preferable.

$*-CH_2-OH$ formula (16)

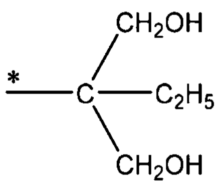

formula (17)

In the formulae (16) and (17), * represents a bond bonding to D.

In the formula (X), n means the number of repetitions, and n is an integer of 1 or more. The subscript n is preferably 10 or more, more preferably 11 or more, further more preferably 11 or more and 350 or less, further more preferably 20 or more and 300 or less, further more preferably 50 or more and 270 or less, and further more preferably 100 or more and 250 or less.

From the viewpoint of enhancing the dispersibility of the thermally conductive filler to reduce the viscosity of the thermally conductive composition, the molecular weight of the organopolysiloxane having a hydroxyl group is preferably 1,000 or more and 25,000 or less, more preferably 3,000 or more and 20,000 or less, and further more preferably 7,000 or more and 18,000 or less. The molecular weight means a number average molecular weight. In the present specification, the number average molecular weight is a standard polystyrene-equivalent value obtained by gel permeation chromatography (GPC) measurement.

From the viewpoint of enhancing the dispersibility of the thermally conductive filler to reduce the viscosity of the thermally conductive composition, the hydroxyl equivalent of the organopolysiloxane having a hydroxyl group is preferably 300 g/eq or more and 25,000 g/eq or less, and more preferably 500 g/eq or more and 7,500 g/eq or less. The hydroxyl equivalent is a value obtained by dividing a number average molecular weight by the number of hydroxyl groups per molecule.

In the organopolysiloxane having a hydroxyl group, the ratio of the number of molecular chains m and the number of hydroxyl groups h (m/h) is preferably 0.3 or more, and preferably 0.5 or more, and preferably 1 or less. When the ratio of the number of molecular chains m and the number of hydroxyl groups h (m/h) is within the above-described range, the viscosity of the thermally conductive composition is easily reduced.

From the viewpoint of effectively reducing the viscosity of the composition, the content of the organopolysiloxane having a hydroxyl group in the (A) organopolysiloxane is preferably 1 mass% or more and 70 mass% or less, more preferably 3 mass% or more and 50 mass% or less, and further more preferably 5 mass% or more and 30 mass% or less.

From the viewpoint of enhancing the dispersibility of the polar filler, the hydroxyl group concentration 2 of the organopolysiloxane having a hydroxyl group contained in the thermally conductive composition is preferably 0.5 μmol/g or more and 250 μmol/g or less, more preferably 1.0 μmol/g or more and 150 μmol/g or less, and further more preferably 2.0 μmol/g or more and 80 μmol/g or less. The hydroxyl group concentration in the organopolysiloxane can be determined from a structure of an organopolysiloxane blended (a number average molecular weight and the number of functional groups as hydroxyl groups) and the blending amount, and can be determined by titrimetric measurement of a hydroxyl value.

From the viewpoint of enhancing the dispersibility of the polar filler, the value obtained by dividing the concentration of hydroxyl groups of the organopolysiloxane having a hydroxyl group contained in the thermally conductive composition (the number of moles of hydroxyl groups in the composition) by the total specific surface area of the thermally conductive filler having a polar group (polar filler) is preferably 0.01 $\mu mol/m^2$ or more and 30 $\mu mol/m^2$ or less, more preferably 0.1 $\mu mol/m^2$ or more and 15 $\mu mol/m^2$ or less, and further more preferably 0.5 $\mu mol/m^2$ or more and 15 $\mu mol/m^2$ or less. The specific surface area of the thermally conductive filler can be measured by a nitrogen adsorption BET method.

The thermally conductive filler having a polar group (polar filler) is a filler having a polar group such as a hydroxyl group on the filler surface as described later, and for example, metal oxides, metal hydroxides and metals correspond thereto. For example, aluminum oxide, aluminum hydroxide, aluminum and the like correspond to the polar filler.

Besides the above-described fillers, a polar filler can be obtained by performing surface treatment, modification or the like on a thermally conductive filler having no polar group. For example, when scale-like graphite (a later-described thermally conductive filler having π electrons) is treated with a silane coupling agent having an aromatic group, the aromatic group is attached to the surface of the scale-like graphite, so that it is possible to obtain a filler having an alkoxysilyl group which is a polar group.

Part of alkyl groups as $R_6$ and $R_7$ in the above formula (X) may be any of an alkenyl group and a (meth)acryloyl group, or may be a hydrosilyl group.

When the organopolysiloxane having a hydroxyl group has any of an alkenyl group and a (meth)acryloyl group, or a hydrosilyl group, the organopolysiloxane can be reacted with addition reaction type silicone, and occurrence of oil bleeding from a thermally conductive formed product which is a cured product of the thermally conductive composition can be prevented. The compression set can be reduced, and the tensile elongation at break and the tensile strength at break can be increased.

The organopolysiloxane having a hydroxyl group may have two or more alkenyl groups or (meth)acryloyl groups, or two or more hydrosilyl groups, but preferably has one thereof. When the organopolysiloxane has a hydroxyl group at one end, it preferably has any of an alkenyl group and a (meth)acryloyl group, or a hydrosilyl group at the other end. The number of alkenyl groups or (meth)acryloyl groups or the number of hydrosilyl groups in one molecule of the organopolysiloxane having a hydroxyl group is only required to be 0 or more, but is preferably 1 to 10, more preferably 1 to 5, and further more preferably 2. When the number of alkenyl groups and (meth)acryloyl groups or the number of hydrosilyl groups is 1 or more, the bleeding out and the tensile elongation at break can be enhanced. When the number of those groups is 2 or more, the compression set can be reduced, and the tensile strength at break can be increased. One molecule of the organopolysiloxane having a hydroxyl group may have both of "any of an alkenyl group and a (meth)acryloyl group" and a "hydrosilyl group", but preferably has only one thereof from the viewpoint of preservation stability.

(Organopolysiloxane having alkoxy group)

The (A) organopolysiloxane preferably contains an organopolysiloxane having an alkoxy group.

The organopolysiloxane having an alkoxy group is an organopolysiloxane having at least one alkoxy, and the number of alkoxy groups is preferably 1 to 3, and more preferably 3. The alkoxy group is preferably an alkoxy group bonded to a silicon atom, and the organopolysiloxane preferably has an alkoxy group at an end thereof.

By using an organopolysiloxane having an alkoxy group together with the organopolysiloxane having a hydroxyl group, the dispersibility of the thermally conductive filler is further enhanced, so that the viscosity of the thermally conductive composition is easily reduced.

The organopolysiloxane having an alkoxy group preferably has a structure represented by the following formula (Y).

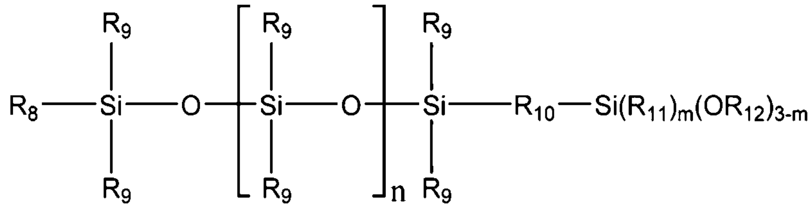

formula (Y)

In the formula (Y), $R^8$, $R^9$, $R^{11}$ and $R^{12}$ are each independently a saturated hydrocarbon group, $R_{10}$ is an oxygen atom or a divalent hydrocarbon group, n is an integer of 10 to 350, and m is an integer of 0 to 2.

By using an organopolysiloxane having an alkoxy group represented by the formula (Y), the effect of reducing the viscosity of the thermally conductive composition is further increased. This is presumed to be because the organopolysiloxane having an alkoxy group and represented by the formula (Y) has the alkoxy group at an end, and thus easily reacts or interacts with, for example, functional groups present on the surface of the thermally conductive filler, which, along with a specific polysiloxane structure, reduces the friction of the filler, so that the viscosity easily decreases.

In the formula (Y), $R^8$, $R^9$, $R^{11}$ and $R^{12}$ are each independently a saturated hydrocarbon group.

Examples of the saturated hydrocarbon group include alkyl groups such as linear alkyl groups, branched alkyl groups and cyclic alkyl groups, aryl groups, aralkyl groups, and alkyl halide groups.

Examples of the linear alkyl group include a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an eicosyl group.

Examples of the branched alkyl group include an isopropyl group, a tertiary butyl group, an isobutyl group, a 2-methylundecyl group, and a 1-hexylheptyl group.

Examples of the cyclic alkyl group include a cyclopentyl group, a cyclohexyl group, and a cyclododecyl group.

Examples of the aryl group include a phenyl group, a tolyl group, and a xylyl group.

Examples of the aralkyl group include a benzyl group, a phenethyl group, and a 2-(2,4,6-trimethylphenyl)propyl group.

Examples of the alkyl halide group include a 3,3,3-trifluoropropyl group, and a 3-chlororpropyl group.

Preferably, $R^8$ to $R^{12}$, m and n in the formula (Y) are as follows from the viewpoint of enhancing the viscosity reducing effect.

$R^8$ in the formula (Y) is preferably an alkyl group having 1 to 8 carbon atoms, more preferably an alkyl group having 2 to 6 carbon atoms, and particularly preferably a butyl group.

$R^9$, $R^{11}$ and $R^{12}$ in the formula (Y) are, each independently, preferably an alkyl group having 1 to 8 carbon atoms, more preferably an alkyl group having 1 to 4 carbon atoms, and particularly preferably a methyl group.

$R^{10}$ in the formula (Y) is an oxygen atom or a divalent hydrocarbon group, and preferably a divalent hydrocarbon group. Examples of the divalent hydrocarbon group include a methylene group, an ethylene group, a propylene group, a butylene group, and a methylethylene group, with an ethylene group ($-CH_2CH_2-$) being preferable.

In the formula (Y), n is preferably an integer of 15 to 315, more preferably an integer of 18 to 280, and further more preferably an integer of 20 to 220.

In the formula (Y), m is an integer of 0 to 2, preferably 0 or 1, and more preferably 0.

The organopolysiloxane having an alkoxy group in the present invention is contained in the (A) organopolysiloxane that is in a liquid form at 25°C. When the total amount of the (A) organopolysiloxane is defined as 100 mass%, the content of the organopolysiloxane having an alkoxy group in the (A) organopolysiloxane is preferably 1 mass% or more and 70 mass% or less, more preferably 3 mass% or more and 50 mass% or less, and further more preferably 5 mass% or more and 30 mass% or less, from the viewpoint of effectively reducing the viscosity of the composition.

The organopolysiloxane having a hydroxyl group and the organopolysiloxane having an alkoxy group are commercially available from, for example, Shin-Etsu Chemical Co., Ltd., and JNC Corporation.

Part of saturated hydrocarbon groups as $R^8$ and $R^9$ in the formula (Y) may be any of an alkenyl group and a (meth) acryloyl group, or may be a hydrosilyl group.

When the organopolysiloxane having an alkoxy group has any of an alkenyl group and a (meth)acryloyl group, or a hydrosilyl group, the organopolysiloxane can be reacted with addition reaction type silicone, and occurrence of oil bleeding from a thermally conductive formed product which is a cured product of the thermally conductive composition can be prevented. The compression set can be reduced, and the tensile elongation at break and the tensile strength at break can be increased.

The organopolysiloxane having an alkoxy group may have two or more alkenyl groups or (meth)acryloyl groups, or two or more hydrosilyl groups, but preferably has one thereof. When the organopolysiloxane has an alkoxy group at one end, it preferably has any of an alkenyl group and a (meth)acryloyl group, or a hydrosilyl group at the other end.

The number of alkenyl groups or (meth)acryloyl groups, or the number of hydrosilyl groups, in one molecule in the organopolysiloxane having an alkoxy group is only required to be 0 or more, but is preferably 1 to 10, more preferably 1 to 5, and further more preferably 2. When the number of alkenyl groups and (meth)acryloyl groups or the number of hydrosilyl groups is 1 or more, the bleeding out and the tensile elongation at break can be enhanced. When the number of those groups is 2 or more, the compression set can be reduced, and the tensile strength at break can be increased. One molecule of the organopolysiloxane having an alkoxy group may have both of "any of an alkenyl group and a (meth)acryloyl group" and a "hydrosilyl group", but preferably has only one thereof from the viewpoint of preservation stability.

(Fluorescent polysiloxane)

The (A) organopolysiloxane that is in a liquid form at 25°C in the present invention preferably contains a fluorescent polysiloxane. When the (A) organopolysiloxane contains a fluorescent polysiloxane, it becomes easy to reduce the viscosity of a composition in which a thermally conductive filler having $\pi$ electrons is blended.

The fluorescent polysiloxane is a compound which has a polysiloxane backbone, and functions to generate fluorescence. Examples of the structure that functions to generate fluorescence include structures having a wide conjugated system, such as polycyclic aromatic structures. That is, the fluorescent polysiloxane in the present invention preferably has a polycyclic aromatic structure. Examples of the polycyclic aromatic structure include structures having conjugated 3 or more aromatic six-membered rings as described later.

The fluorescent polysiloxane in the present invention, which has a structural portion that functions to generate fluorescence such as polycyclic aromatic structures described above, thus easily interacts through $\pi$-$\pi$ stacking with a thermally conductive filler having $\pi$ electrons. Further, since the fluorescent polysiloxane has a polysiloxane structure, it has high compatibility with an organopolysiloxane (matrix) other than a fluorescent polysiloxane. For this reason, the fluorescent polysiloxane in the present invention may be capable of reducing the viscosity of the composition by enhancing the dispersibility of the thermally conductive filler having $\pi$ electrons.

As described later, the polycyclic aromatic structure is preferably a condensed ring compound such as pyrene, a pyrene derivative, perylene or a perylene derivative, and more preferably pyrene or perylene.

In the thermally conductive composition of the present invention, the fluorescent polysiloxane has a non-associated body fluorescence peak X, or a non-associated body fluorescence peak X and an exciplex fluorescence peak Y.

Here, the non-associated body fluorescence peak X is a fluorescence peak which individual fluorescent molecules forming the fluorescent polysiloxane generate in a state where an associated body is not formed.

The exciplex fluorescence peak Y is a fluorescence peak which individual fluorescent molecules forming the fluorescent polysiloxane generate in a state where an associated body is formed. The term "associated body" means that fluorescent molecules are stacked (piled) by $\pi$-$\pi$ interaction or the like.

When fluorescent molecules that do not form an associated body and fluorescent molecules that form an associated body are present in the thermally conductive composition, both a non-associated body fluorescence peak X and an exciplex fluorescence peak Y are observed. The non-associated body fluorescence peak X is observed on a short-wavelength side with respect to the exciplex fluorescence peak Y.

In the thermally conductive composition of the present invention, the fluorescent polysiloxane preferably has the non-associated body fluorescence peak X at a wavelength of 370 nm or more and 430 nm or less, and the exciplex fluorescence peak Y at a wavelength of 430 nm or more and 550 nm or less. When the fluorescent polysiloxane has specific fluorescence peaks as described above, the viscosity of the thermally conductive composition is effectively reduced. For example, when the fluorescent polysiloxane has a polycyclic aromatic structure, and the polycyclic aromatic structure is pyrene or a pyrene derivative described later, the fluorescent polysiloxane has the non-associated body fluorescence peak X at a wavelength of 370 nm or more and 430 nm or less, and the exciplex fluorescence peak Y at a wavelength of 430 nm or more and 550 nm or less.

The range of wavelengths at which the non-associated body fluorescence peak X is observed (370 nm or more and 430 nm or less) is preferably 370 nm or more and 410 nm or less, and more preferably 370 nm or more and 390 nm or less.

The range of wavelengths at which the exciplex fluorescence peak Y is observed (430 nm or more and 550 nm or less) is preferably 450 nm or more and 530 nm or less, and more preferably 460 nm or more and 500 nm or less.

In the thermally conductive composition of the present invention, it is also preferable that the fluorescent polysiloxane have the non-associated body fluorescence peak X at a wavelength of 430 nm or more and 530 nm or less, and the exciplex fluorescence peak Y at a wavelength of 490 nm or more and 700 nm or less. When the fluorescent polysiloxane has specific fluorescence peaks as described above, the viscosity of the thermally conductive composition is effectively reduced. For example, when the fluorescent polysiloxane has a polycyclic aromatic structure, and the polycyclic aromatic structure is perylene or a perylene derivative described later, the fluorescent polysiloxane has the non-associated body fluorescence peak X at a wavelength of 430 nm or more and 530 nm or less, and the exciplex fluorescence peak Y at a wavelength of 490 nm or more and 700 nm or less.

The range of wavelengths at which the non-associated body fluorescence peak X is observed (430 nm or more and 530 nm or less) is preferably 430 nm or more and 500 nm or less, and more preferably 440 nm or more and 460 nm or less.

The range of wavelengths at which the exciplex fluorescence peak Y is observed (490 nm or more and 700 nm or less) is preferably 500 nm or more and 650 nm or less, and more preferably 520 nm or more and 600 nm or less.

Preferably, the fluorescent polysiloxane has a non-associated body fluorescence peak X and an exciplex fluorescence peak Y, and the ratio of exciplex fluorescence peak intensity FY to non-associated body fluorescence peak intensity FX (FY/FX) is 0.01 or more and 6.0 or less.

The ratio of fluorescence intensity (FY/FX) changes depending mainly on the concentrations of the thermally conductive filler and the fluorescent polysiloxane in the thermally conductive composition, but as described above, when the ratio of fluorescence intensity (FY/FX) is in the range of 0.01 or more and 6.0 or less, it becomes easy to effectively reduce the viscosity of the thermally conductive composition.

From the viewpoint of enhancing the effect of reducing the viscosity of the thermally conductive composition, the ratio of fluorescence intensity (FX/FY) is preferably 0.02 or more and 0.55 or less, and more preferably 0.03 or more and 0.5 or less.

If a plurality of peaks are observed in a wavelength range where the non-associated body fluorescence peak is observed, a peak at the shortest wavelength is defined as the non-associated body fluorescence peak. Similarly, if a plurality of peaks are observed in a wavelength range where the exciplex fluorescence peak is observed, a peak at the shortest wavelength is defined as the exciplex fluorescence peak.

The ratio of fluorescence intensity (FY/FX) is calculated by determining the intensity ratio of the fluorescence peaks in a measured fluorescence spectrum.

The presence or absence of the non-associated body fluorescence peak X and the exciplex fluorescence peak Y of the fluorescent polysiloxane and the ratio of fluorescence intensity (FY/FX) in the thermally conductive composition are measured after heat treatment is performed after the thermally conductive composition is prepared. The heat treatment is performed at 80°C to 160°C for 2 hours or more.

The molecular weight of the fluorescent polysiloxane is preferably 4,000 or more and 25,000 or less, more preferably 5,000 or more and 25,000 or less, more preferably 10,000 or more and 19,000 or less, more preferably 12,000 or more and 18,000 or less, and further more preferably 13,000 or more and 17,000 or less. When the molecular weight of the fluorescent polysiloxane is equal to or larger than the lower limit value, compatibility of the fluorescent polysiloxane and components other than the fluorescent polysiloxane in the (A) organopolysiloxane is enhanced, and the dispersibility of the fluorescent polysiloxane is likely to be enhanced. When the molecular weight of the fluorescent polysiloxane is equal to or smaller than the upper limit value, the viscosity of the thermally conductive composition is easily adjusted to be low. The molecular weight means a number average molecular weight. In the present specification, the number average molecular weight is a standard polystyrene-equivalent value obtained by gel permeation chromatography (GPC) measurement.

<Fluorescent polysiloxane represented by formula (1)>

The fluorescent polysiloxane in the present invention preferably has a structure represented by the following formula (1).

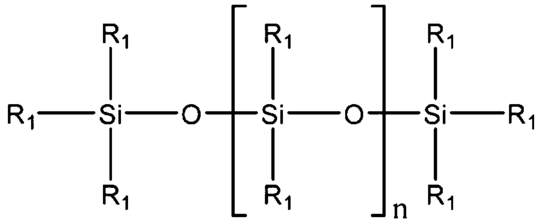

formula (1)

In the formula (1), $R_1$ is each independently a group represented by A-B, or a monovalent hydrocarbon group having 1 to 4 carbon atoms, and at least one $R_1$ among a plurality of $R_1$ is a group represented by A-B. A is a divalent organic group bonded to a silicon atom, and B has conjugated 3 or more and 6 or less aromatic six-membered rings. When among atoms forming A, an atom bonded to the aromatic six-membered ring of B is an $\alpha$-position atom, an atom bonded to the $\alpha$-position atom is a $\beta$-position atom, and an atom bonded to the $\beta$-position atom which is other than the $\alpha$-position atom is a $\gamma$-position atom, any of the $\alpha$-position atom, the $\beta$-position atom and the $\gamma$-position atom is a heteroatom; and n is an integer of 1 or more.

The fluorescent polysiloxane having the structure represented by the formula (1) has conjugated 3 or more and 6 or less aromatic six-membered rings, and includes a portion having a large conjugated system in the molecular structure. Therefore, the fluorescent polysiloxane exhibits a high ability to adsorb to a thermally conductive filler having $\pi$ electrons by $\pi$-$\pi$ interaction, so that the thermally conductive filler is easily dispersed.

$R_1$ in the formula (1) is each independently a group represented by A-B, or a monovalent hydrocarbon group having 1 to 4 carbon atoms.

At least one $R_1$ among a plurality of $R_1$ is a group represented by A-B. A is a divalent organic group, and is bonded to a silicon atom in the formula (1).

Among atoms forming A, any of the $\alpha$-position atom, the $\beta$-position atom and the $\gamma$-position atom is a heteroatom. This enhances the fluidity of the fluorescent polysiloxane. From the viewpoint of enhancing the fluidity of the fluorescent polysiloxane, it is preferable that the $\alpha$-position atom or the $\beta$-position atom be a heteroatom, and it is more preferable that the $\alpha$-position atom be a heteroatom.

Here, the $\alpha$-position atom is an atom bonded to the aromatic six-membered ring of B (that is, one of conjugated 3 or more and 6 or less aromatic six-membered rings of B), among atoms forming A. The $\beta$-position atom is an atom bonded to the $\alpha$-position atom, among atoms forming A. The $\gamma$-position atom is an atom bonded to the $\beta$-position atom which is other than the $\alpha$-position atom. Note that A may have a heteroatom at a moiety other than the $\alpha$-position atom, the $\beta$-position atom and the $\gamma$-position atom.

The heteroatom is not limited, and examples thereof include an oxygen atom, a nitrogen atom, a sulfur atom, and a boron atom. Among them, an oxygen atom is preferable from the viewpoint of effectively enhancing the fluidity of the fluorescent polysiloxane.

A is preferably a divalent organic group having 11 or less carbon atoms, more preferably a divalent organic group having 10 or less carbon atoms. A fluorescent polysiloxane in which the number of carbon atoms in A is equal to or smaller than a certain number as described above is likely to enhance the dispersibility of the thermally conductive filler, thus being preferable. The lower limit of the number of carbon atoms in A is not limited, but A is preferably a divalent organic group having 4 or more carbon atoms.

A has a heteroatom as described above, and hence a structural unit having a heteroatom. Examples of the structural unit include ether, ester, amide, urethane, thioether, and thioester. Among them, ether or ester is preferable, ether is more preferable, and cyclic ether is particularly preferable, from the viewpoint of enhancing the dispersibility in the thermally conductive filler, and enhancing the fluidity. Note that the cyclic ether is ether having a structure in which carbon of a cyclic hydrocarbon is substituted with oxygen.

From the viewpoint of enhancing the dispersibility of the thermally conductive filler, and enhancing the fluidity, A preferably has a backbone represented by the following formula (5-1) or (5-2).

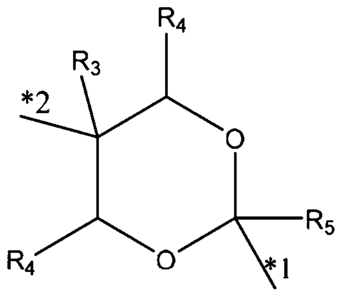

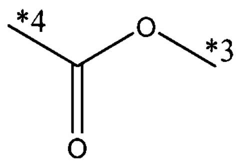

formula (5-1) formula (5-2)

In the formula (5-1), *1 and *2 are bonds, $R_4$ is a hydrogen atom or a hydrocarbon group having 1 to 4 carbon atoms, and preferably a hydrogen atom. Two $R_4$ may be the same or different. $R_3$ is a hydrogen atom or a hydrocarbon group having 1 to 4 carbon atoms, preferably a hydrocarbon group having 1 to 4 carbon atoms, more preferably a hydrocarbon group having 1 to 3 carbon atoms, and further more preferably an ethyl group. $R_5$ is a hydrogen atom or a hydrocarbon group having 1 to 4 carbon atoms, and preferably a hydrogen atom. The oxygen atom in the formula (5-1) is the β-position atom or γ-position atom, and preferably the β-position atom.

In the formula (5-2), *3 and *4 are bonds. The oxygen atom having a bond of *3 is the α-position atom, β-position atom or γ-position atom.

Among the above, A preferably has a backbone represented by the formula (5-1).

Further, from the viewpoint of enhancing the dispersibility of the thermally conductive filler, and enhancing the fluidity, A preferably has any of structures of the following formulae (6) to (10).

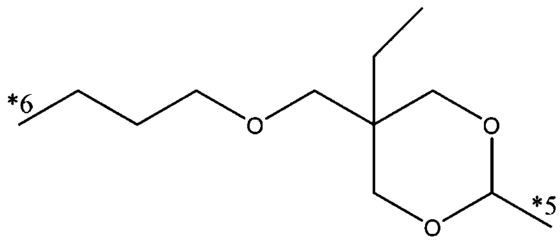

formula (6)

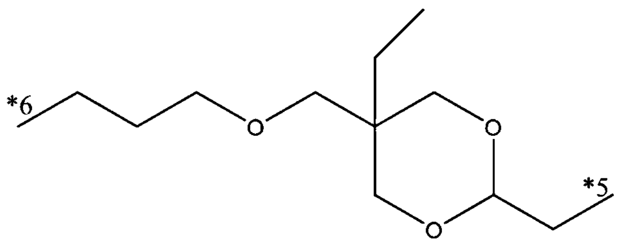

formula (7)

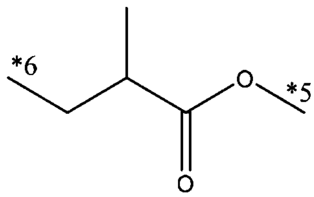

formula (8)

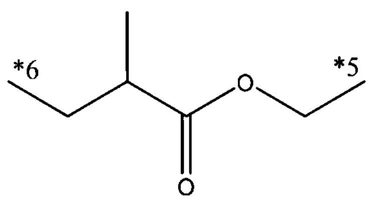

formula (9)

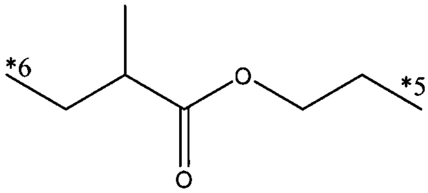

formula (10)

In the formulae (6) to (10), *5 is a bond bonded to the aromatic six-membered ring of B, and *6 is a bond bonded to a silicon atom in the formula (1).

In the formula (1), B has conjugated 3 or more and 6 or less aromatic six-membered rings. The conjugate means that in the molecular structure, unsaturated bonds and single bonds are alternately connected, and stabilization by interaction of p orbitals, delocalization (existence throughout the conjugated system) of electrons, and the like occur. Note that the concept of the polycyclic aromatic structure includes the conjugated 3 or more and 6 or less aromatic six-membered rings.

When the number of aromatic six-membered rings is 6 or less, the fluidity of the fluorescent polysiloxane is enhanced. When the number of aromatic six-membered rings is 2 or more, the ability to adsorb to the thermally conductive filler is enhanced, and the dispersibility of the thermally conductive filler is enhanced.

From the viewpoint of well-balanced enhancement of the ability to adsorb to the thermally conductive filler and the fluidity, the number of aromatic six-membered rings is preferably 4 or more and 5 or less.

The conjugated 3 or more and 6 or less aromatic six-membered rings may be a condensed ring compound having 3 or more and 6 or less aromatic six-membered rings, or may be a non-condensed ring compound, but is preferably a condensed ring compound. When B contains a condensed ring compound as described above, or B is a condensed ring compound, the ability to adsorb to the thermally conductive filler is further enhanced, which is preferable from the viewpoint of enhancing the dispersibility.

Examples of the condensed ring compound include anthracene, anthracene derivatives, phenanthrene, phenanthrene derivatives, triphenylene, triphenylene derivatives, pyrene, pyrene derivatives, tetracene, tetracene derivatives, picene, picene derivatives, perylene, perylene derivatives, pentaphene, pentaphene derivatives, pentacene, pentacene derivatives, hexaphene, and hexaphene derivatives. Among them, pyrene, pyrene derivatives, perylene or perylene derivatives are preferable. Here, the term "derivative" means having a substituent. For example, the term "anthracene derivative" means anthracene having a substituent, and the same applies to the other derivatives.

When the condensed ring compound has a substituent, at least one or more of the hydrogen atoms forming the condensed ring compound is substituted with a substituent. Examples of the substituent include organic groups having 1 to 10 carbon atoms.

From the viewpoint of enhancing the fluidity of the fluorescent polysiloxane in the present invention, the condensed ring compound preferably has no substituent. Therefore, B is particularly preferably pyrene or perylene.

In the condensed ring compound, any of the carbon atoms forming the condensed ring is bonded to A.

In the present invention, as B, any of the forms described above can be used without limitation. Preferred structures of B are shown below.

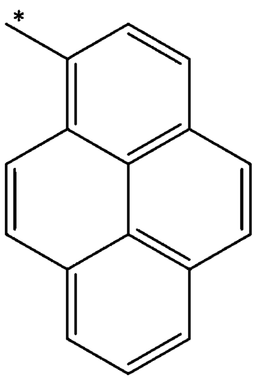

formula (11)

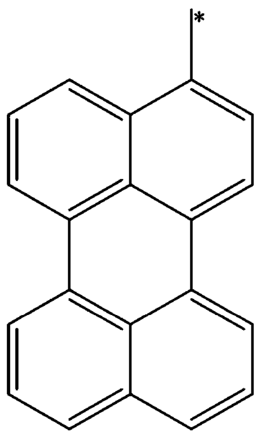

formula (12)

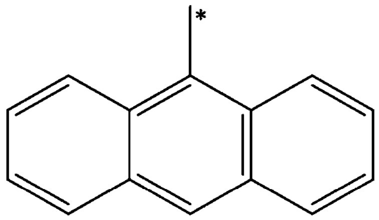

formula (13)

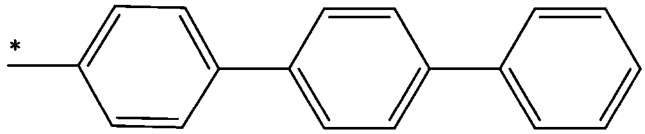

formula (14)

In the above formulae (11) to (14), * is a bond bonding to A.

Among the compounds of the above formulae (11) to (14), any of the compounds of formulae (11) to (13) which are condensed ring compounds is preferable. Among them, pyrene of the formula (11) or perylene of the formula (12) is more preferable, and perylene of the formula (12) is further more preferable.

In the formula (1), at least one $R_1$ is a group represented by A-B, and remaining $R_1$ is a hydrocarbon group having 1 to 4 carbon atoms. In the formula (1), the number of groups represented by A-B, among a plurality of $R_1$, is preferably 1 or more and 5 or less, and more preferably 1 or 2, and the remaining groups are each preferably a monovalent hydrocarbon group having 1 to 4 carbon atoms. When there are a plurality of groups represented by A-B, the plurality of groups represented by A-B may be the same or different.

Examples of the monovalent hydrocarbon group having 1 to 4 carbon atoms include a methyl group, an ethyl group, a propyl group, and a butyl group, with a methyl group being preferable. When there are a plurality of monovalent hydrocarbon groups having 1 to 4 carbon atoms, the plurality of monovalent hydrocarbon groups having 1 to 4 carbon atoms may be the same or different.

In the formula (1), n denotes the number of repetitions, and n is an integer of 1 or more. The subscript n is not limited as long as it is an integer of 1 or more, but from the viewpoint of enhancing the fluidity, n is preferably 400 or less, more preferably 300 or less, and further more preferably 250 or less, and preferably 10 or more, more preferably 40 or more, and further more preferably 200 or more.

The polyorganosiloxane having a structure represented by the formula (1) may have a group represented by A-B at one end, at both ends, on a side chain, at one end and on a side chain, or at both ends and on a side chain. In particular, the polyorganosiloxane having a structure represented by the formula (1) preferably has a group represented by A-B at one end.

The fluorescent polysiloxane in the present invention may be a compound having the following formula (a-1) or (a-2) instead of A-B in the formula (1), or A-B in formulae (2) to (4) described later.

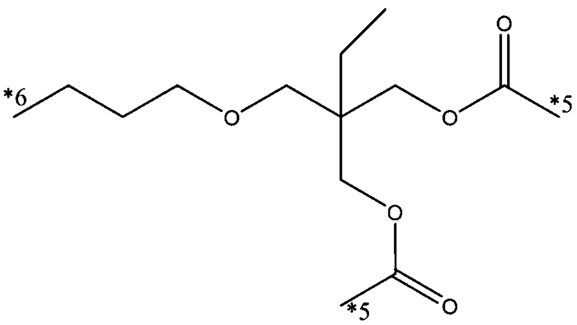

formula (a-1)

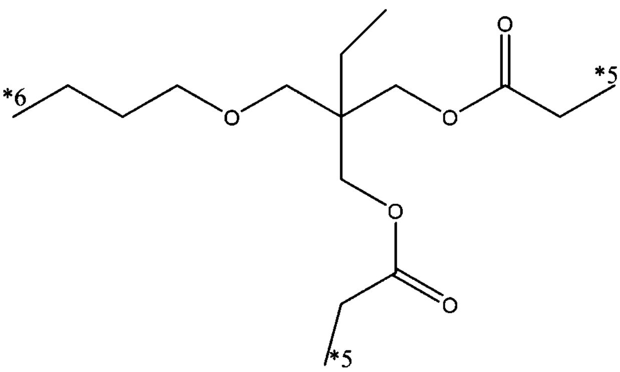

formula (a-2)

In the formula (a-1) and the formula (a-2), *5 is a bond bonding to the aromatic six-membered ring of B, and *6 is a bond bonding to a silicon atom in the formulae (1) to (4).

<Fluorescent polysiloxane represented by formula (2)>

The fluorescent polysiloxane according to an embodiment of the present invention preferably has a structure represented by the following formula (2). The fluorescent polysiloxane has a group represented by A-B at one end.

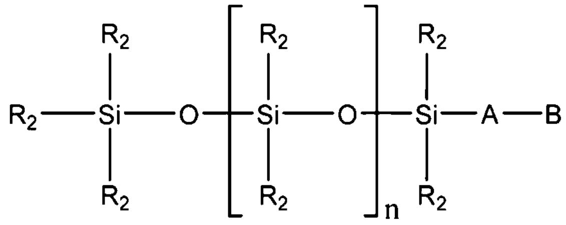

formula (2)

wherein $R_2$ is a monovalent hydrocarbon group having 1 to 4 carbon atoms, and A, B and n are the same as in the formula (1).

In the formula (2), $R_2$ is a monovalent hydrocarbon group having 1 to 4 carbon atoms, and examples thereof include a methyl group, an ethyl group, a propyl group, a butyl group, with a methyl group being preferable. A plurality of $R_2$ may be the same or different. In the formula (2), A, B and n are the same as in the formula (1), and are as defined above.

The fluorescent polysiloxane represented by the formula (2) has a group represented by A-B at one end, and is likely to enhance the dispersibility of the thermally conductive filler, thus being preferable.

<Fluorescent polysiloxane represented by formula (3)>

The fluorescent polysiloxane according to an embodiment of the present invention has a structure represented by the following formula (3). The fluorescent polysiloxane has a group represented by A-B at both ends.

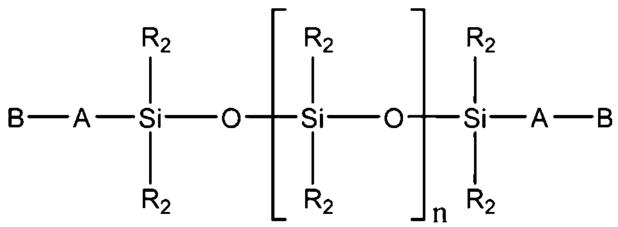

formula (3)

wherein $R_2$ is a monovalent hydrocarbon group having 1 to 4 carbon atoms, and A, B and n are the same as in the formula (1).

In the formula (3), $R_2$ is the same as $R_2$ in the formula (2), and A, B and n are the same as in the formula (1).

<Fluorescent polysiloxane represented by formula (4)>

The fluorescent polysiloxane according to an embodiment of the present invention has a structure represented by the following formula (4). The fluorescent polysiloxane has a group represented by A-B on a side chain.

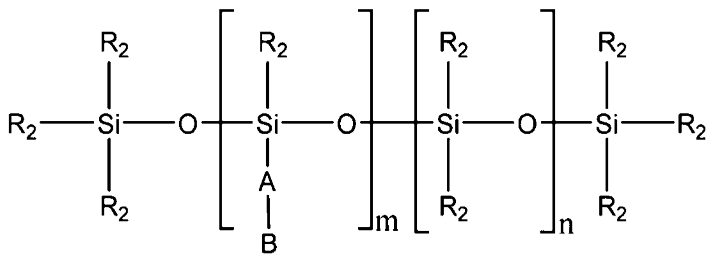

formula (4)

wherein $R_2$ is a monovalent hydrocarbon group having 1 to 4 carbon atoms, m is an integer of 1 or more and 10 or less, and A, B and n are the same as in the formula (1).

In the formula (4), $R_2$ is the same as $R_2$ in the formula (2), and A, B and n are the same as in the formula (1).

In the formula (4), m is an integer of 1 or more and 10 or less, preferably an integer of 1 or more and 5 or less, and more preferably 1 or 2. When m is in this range, the fluidity can be enhanced while the ability to adsorb to the thermally conductive filler is enhanced, which is preferable.

The fluorescent polysiloxane represented by the formula (4) may be a random polymer, or a block polymer. More specifically, the unit shown in the bracket with m and the unit shown in the bracket with n may exist in a block form or in a random form in the molecule.

Part of $R_1$ in the above formula (1) and part of $R_2$ in the above formulae (2) to (4) may be a monovalent hydrocarbon group having 1 to 4 carbon atoms, part of which is any of an alkenyl group and a (meth)acryloyl group, or a hydrosilyl group. As described above, at least one $R_1$ among a plurality of $R_1$ is a group represented by A-B.

When the fluorescent polysiloxane has any of an alkenyl group and a (meth)acryloyl group, or a hydrosilyl group, the fluorescent polysiloxane can be reacted with addition reaction type silicone, and occurrence of oil bleeding from a thermally conductive formed product which is a cured product of the thermally conductive composition can be prevented. The compression set can be reduced, and the tensile elongation at break and the tensile strength at break can be increased.

The fluorescent polysiloxane may have two or more alkenyl groups or (meth)acryloyl groups, or two or more hydrosilyl groups, but preferably has one thereof. When the fluorescent polysiloxane has a group represented by A-B at one end, it preferably has any of an alkenyl group and a (meth)acryloyl group, or a hydrosilyl group at the other end.

The number of alkenyl groups or (meth)acryloyl groups or the number of hydrosilyl groups in one molecule of the fluorescent organopolysiloxane is only required to be 0 or more, but is preferably 1 to 10, more preferably 1 to 5, and further more preferably 2. When the number of alkenyl groups or (meth)acryloyl groups, or the number of hydrosilyl groups is 1 or more, bleeding-out and the tensile elongation at break can be enhanced. When the number of those groups is 2 or more, the compression set can be reduced, and the tensile strength at break can be increased. One molecule of the fluorescent organopolysiloxane may have both of "any of an alkenyl group and a (meth)acryloyl group" and a "hydrosilyl group", but preferably has only one thereof from the viewpoint of preservation stability.

The thermally conductive composition of the present invention contains the fluorescent polysiloxane, and may further contain by-products generated in production of the fluorescent polysiloxane. The fluorescent polysiloxane can be obtained by reacting a polyorganosiloxane having a functional group and a compound having a plurality of aromatic six-membered rings conjugated and a functional group capable of reacting the functional group of the polyorganosiloxane as described later. Examples of the by-product include condensed products of polyorganosiloxanes which are formed by a condensation reaction of functional groups of polyorganosiloxanes having a functional group such as a hydroxyl group.

<Method for producing fluorescent polysiloxane represented by any of formulae (1) to (4)>

The method for producing a fluorescent polysiloxane represented by any of the above formulae (1) to (4) is not limited. The fluorescent polysiloxane can be obtained by reacting a commonly available polyorganosiloxane having a functional group and a compound having conjugated 3 or more and 6 or less aromatic six-membered rings and a functional group capable of reacting the functional group of the polyorganosiloxane. As an example, a fluorescent polysiloxane can be produced by, for example, an acetalization reaction between an aldehyde and a diol, or a hydrosilylation reaction between a hydrosilyl group and a carbon-carbon unsaturated bond.

For example, the fluorescent polysiloxane in the present invention can be produced by a reaction between a polyorganosiloxane having a diol structure and a compound having an aldehyde group and conjugated 3 or more and 6 or less aromatic six-membered rings. Alternatively, the fluorescent polysiloxane in the present invention can be produced by a reaction between a polyorganosiloxane having a hydrosilyl group at an end and/or on a side chain and a compound having a group having a carbon-carbon unsaturated bond such as an acrylate group or a methacrylate group and conjugated 3 or more and 6 or less aromatic six-membered rings.

The fluorescent polysiloxane in the present invention is contained in the (A) organopolysiloxane that is in a liquid form at 25°C. When the total amount of the (A) organopolysiloxane that is in a liquid form at 25°C is 100 mass%, the content of the fluorescent polysiloxane in the (A) organopolysiloxane is preferably 1 mass% or more and 95 mass% or less, more preferably 5 mass% or more and 70 mass% or less, and further more preferably 10 mass% or more and 50 mass% or less, from the viewpoint of effectively reducing the viscosity of the composition.

When the total amount of the (A) organopolysiloxane that is in a liquid form at 25°C is 100 mass%, the content of the fluorescent polysiloxane in the (A) organopolysiloxane is preferably 1 mass% or more and 50 mass% or less, more preferably 5 mass% or more and 40 mass% or less, and further more preferably 10 mass% or more and 25 mass% or less, from the viewpoint of effectively reducing the viscosity of the composition, preventing oil bleeding from a thermally conductive formed product which is a cured product of the composition, and reducing the compression set.

In the thermally conductive composition of the present invention, the ratio of the amount of the fluorescent polysiloxane to the amount of the thermally conductive filler having $\pi$ electrons (amount of fluorescent polysiloxane/amount of thermally conductive filler having π electrons) is preferably 0.003 or more and 0.5 or less, more preferably 0.01 or more and 0.4 or less, and further more preferably 0.02 or more and 0.3 or less.

In the thermally conductive composition of the present invention, the ratio of the amount of the fluorescent polysiloxane to the total specific surface area of the thermally conductive filler having π electrons (amount of fluorescent polysiloxane/total specific surface area of thermally conductive filler having π electron: unit $mg/m^2$) is preferably 3.00 or more and 500 or less, more preferably 10.0 or more and 400 or less, and further more preferably 20.0 or more and 300 or less.

(Addition reaction type silicone)

The (A) organopolysiloxane that is in a liquid form at 25°C in the present invention preferably contains addition reaction type silicone. The addition reaction type silicone preferably becomes a matrix after curing. Therefore, the addition reaction type silicone is preferably a main component in the (A) organopolysiloxane that is in a liquid form at 25°C. Here, the term "main component" means that the amount of the main component is larger than that of any other organopolysiloxane forming the component (A), and the content of the main component is, for example, 25 mass% or more, preferably 50 mass% or more, and further more preferably 70 mass% or more with respect to the total amount of the component (A).

From the viewpoint of being likely to enhance filling with the thermally conductive filler, the addition reaction type silicone preferably contains at least one of an alkenyl group-containing organopolysiloxane and a (meth)acryloyl group-containing organopolysiloxane as a base agent, and a hydrogen organopolysiloxane as a curing agent.

The alkenyl group in the alkenyl group-containing organopolysiloxane may be contained either at an end or in the middle of the molecular chain of the polysiloxane structure, or may be contained at the end and in the middle, but is preferably contained at least at the end, more preferably contained at both ends of the molecular chain having a polysiloxane structure, and even more preferably contained only at both ends.

The alkenyl group is not limited, and has, for example, 2 to 8 carbon atoms. Examples thereof include a vinyl group, an allyl group, a butenyl group, a pentenyl group, a hexenyl group, a heptenyl group, and an octenyl group, with a vinyl group being preferable from the viewpoint of, for example, ease of synthesis, and reactivity. The alkenyl group should be an alkenyl group directly bonded to a silicon atom.

The number of alkenyl groups in one molecule of the alkenyl group-containing organopolysiloxane is only required to be 1 or more, but is preferably 2 or more, more preferably 2 to 25, further more preferably 2 to 10, even more preferably 2 or 3, and particularly preferably 2.

As the residual group bonded to a silicon atom other than that of the alkenyl group, alkyl groups such as a methyl group, an ethyl group, a propyl group, a butyl group, a hexyl group and a dodecyl group, aryl groups such as a phenyl group, and aralkyl groups such as a 2-phenylethyl group and a 2-phenylpropyl group are exemplified, with specific examples including substituted hydrocarbon groups such as a chloromethyl group and a 3,3,3-trifluoropropyl group. Among them, a methyl group is preferable from the viewpoint of ease of synthesis. Preferably 80 mol% or more, more preferably 90 mol% or more, and further more preferably 100 mol% of residual groups bonded to the silicon atoms are methyl groups. The alkenyl group-containing organopolysiloxane should have no hydrogen atom as a residual group bonded to a silicon atom, that is, the alkenyl group-containing organopolysiloxane should be free of a hydrosilyl group.

The alkenyl group-containing organopolysiloxanes may be used alone, or used in combination of two or more thereof.

The hydrogen organopolysiloxane is an organopolysiloxane having a hydrosilyl group. The hydrosilyl group may be contained either at an end of the molecular chain or in the middle of the molecular chain of the polysiloxane structure, or may be contained at the end and in the middle, but is preferably contained at least at the end, and the hydrosilyl group is further more preferably contained at each of both ends of the molecular chain of the polysiloxane structure.

The number of hydrosilyl groups in one molecule is not limited, and is only required to be 1 or more, but is preferably 2 or more, more preferably 2 to 25, and further more preferably 2 to 20.

As the residual group bonded to a silicon atom other than that of the hydrosilyl group in the hydrogen organopolysiloxane, alkyl groups such as a methyl group, an ethyl group, a propyl group, a butyl group, a hexyl group and a dodecyl group, aryl groups such as a phenyl group, and aralkyl groups such as a 2-phenylethyl group and a 2-phenylpropyl group are exemplified, with specific examples including substituted hydrocarbon groups such as a chloromethyl group and a 3,3,3-trifluoropropyl group. Among them, a methyl group is preferable from the viewpoint of ease of synthesis. Preferably 80 mol% or more, more preferably 90 mol% or more, and further more preferably 100 mol% of residual groups bonded to the silicon atoms are methyl groups. The hydrogen organopolysiloxane should have no alkenyl group as a residual group bonded to a silicon atom, that is, the hydrogen organopolysiloxane should be free of an alkenyl group.

The hydrogen organopolysiloxanes may be used alone, or used in combination of two or more thereof.

(Other organopolysiloxanes)

The (A) organopolysiloxane that is in a liquid form at 25°C in the present invention may contain other organopolysiloxanes than the above-described organopolysiloxanes. Examples of the other organopolysiloxane include radical reaction curable silicone, condensation reaction curable silicone, ultraviolet or electron beam curable silicone, moisture curable silicone, and non-reactive silicone. Examples of the non-reactive silicone include straight silicone oil such as dimethyl silicone oil and methylphenyl silicone oil.

The content of the (A) organopolysiloxane that is in a liquid form at 25°C in the thermally conductive composition is preferably 5 mass% or more and 80 mass% or less, more preferably 8 mass% or more and 50 mass% or less, and further more preferably 10 mass% or more and 30 mass% or less.

<(B) Thermally conductive filler having $\pi$ electron>

The thermally conductive composition of the present invention contains (B) a thermally conductive filler. Since the thermally conductive filler is contained, the thermal conductivity of the thermally conductive composition, and a thermally conductive formed product obtained by curing the thermally conductive composition is enhanced.

Examples of the thermally conductive filler include metals, metal oxides, metal nitrides, metal hydroxides, carbon materials, and non-metal oxides, nitrides and carbides. The shape of the thermally conductive filler is a spherical shape, an irregular powder shape or the like.

In the thermally conductive filler, aluminum, copper, nickel and the like can be exemplified as the metal, aluminum oxide typified by alumina, magnesium oxide, zinc oxide and the like can be exemplified as the metal oxide, aluminum nitride and the like can be exemplified as the metal nitride. Examples of the metal hydroxide include aluminum hydroxide. Examples of the carbon material include carbon fiber, graphite such as scale-like graphite, graphene, carbon nanotube, and diamond. Examples of the non-metal oxide, nitride and carbide include quartz, boron nitride, and silicon carbide. The (B) thermally conductive fillers may be used alone, or used in combination of two or more thereof.

In particular, for easily reducing the viscosity and easily enhancing the thermal conductivity by using an organopolysiloxane having a hydroxyl group, the thermally conductive filler is preferably a metal, a metal oxide or a metal hydroxides, more preferably contains at least one selected from the group consisting of a metal oxide and a metal hydroxide, and is further more preferably aluminum oxide or aluminum hydroxide.

The metals, metal oxides and metal hydroxides described above, each of which is a thermally conductive filler having a polar group such as a hydroxyl group, are close in polarity to the organopolysiloxane having a hydroxyl group in the present invention, easily interact with the organopolysiloxane, and are capable of reducing the viscosity of the composition, thus being preferable.

The average particle size of the thermally conductive filler is preferably 0.1 to 500 $\mu$m, more preferably 0.2 to 200 $\mu$m, and further more preferably 0.5 to 100 $\mu$m.

The average particle size is determined as an average value (arithmetic average value) of 50 or more particles observed with a microscope. When the (B) thermally conductive filler is an anisotropic filler described later, the fiber lengths or major diameters of arbitrary 50 or more anisotropic fillers are measured using an electron microscope or an optical microscope, and an average value (arithmetic average value) thereof can be taken as an average particle size. When the (B) thermally conductive filler is a non-anisotropic filler described later, the major diameters of arbitrary 50 or more non-anisotropic fillers are measured using an electron microscope or an optical microscope, and an average value (arithmetic average value) thereof can be taken as an average particle size.

The (B) thermally conductive filler may be an anisotropic filler, or a non-anisotropic filler, but preferably contains an anisotropic filler. The anisotropic filler is a filler which is anisotropic in shape, and can be oriented. That is, when the thermally conductive composition contains an anisotropic filler, a thermally conductive formed product made from the thermally conductive composition can contain an anisotropic filler oriented in a predetermined direction, so that thermal conductivity in a specific direction is easily enhanced.

The anisotropic filler has a high aspect ratio, specifically an aspect ratio of more than 2, with the aspect ratio being preferably 5 or more. By setting the aspect ratio to more than 2, the anisotropic filler is easily oriented, and the thermal conductivity is easily increased. The upper limit of the aspect ratio is not limited, but is 100 from a practical point of view.

The aspect ratio is a ratio of the length in the long axis direction to the length in the short axis direction of the anisotropic filler. In the case of a fiber material, the aspect ratio means a fiber length/fiber diameter. In the case of a scale-like material, the aspect ratio means a length in the long axis direction/thickness of the scale-like material.

The anisotropic filler preferably contains one or more selected from the group consisting of carbon fiber, scale-like graphite and boron nitride. The shape of the boron nitride is not limited, but is preferably a plate shape. Such an anisotropic filler is easily oriented in a specific direction in a thermally conductive formed product, so that the thermal conductivity is likely to increase. In addition, the anisotropic filler, which is a thermally conductive filler having $\pi$ electrons, thus particularly enhances in dispersibility when the organopolysiloxane having a polycyclic aromatic structure is used.

The content of the anisotropic filler in the (B) thermally conductive filler is preferably 3 mass% or more, 5 mass% or more, and preferably 50 mass% or less, and more preferably 30 mass% or less.

The (B) thermally conductive filler may contain a non-anisotropic filler. The aspect ratio of the non-anisotropic filler is 2 or less, and preferably 1.5 or less. When the thermally conductive filler contains both a non-anisotropic filler and an anisotropic filler, the non-anisotropic filler can be interposed in gaps between the anisotropic fillers, so that the thermal conductivity in the formed product is easily increased. The shape of the non-anisotropic filler is, for example, a spherical shape or an irregular shape.

The content of the non-anisotropic filler in the (B) thermally conductive filler is preferably 50 mass% or more, and more preferably 70 mass% or more, and preferably 97 mass% or less, and more preferably 95 mass% or less.

The content of the (B) thermally conductive filler in the thermally conductive composition is preferably 100 parts by mass or more and 1,500 parts by mass or less, more preferably 200 parts by mass or more and 1,000 parts by mass or less, and further more preferably 300 parts by mass or more and 700 parts by mass or less, per 100 parts by mass of the (A) organopolysiloxane.

<Volatile compound>

The thermally conductive composition of the present invention preferably contains a volatile compound. By using a thermally conductive composition containing a volatile compound, a composition having a larger content of a thermally conductive filler as compared to the conventional compositions can be produced, so that the thermal conductivity of a thermally conductive formed product can be increased.

In the present specification, the term "volatile compound" means a compound having at least one of a property in which the temperature T1 at which the weight loss when the temperature is raised under the condition of 2°C/min in thermogravimetric analysis is 90% is in the range of 70 to 300°C, and a property in which the boiling point (1 atm) is in the range of 60 to 200°C. Here, the term "temperature T1 at which the weight loss is 90%" means a temperature at which when the weight of a sample before thermogravimetric analysis is assumed to be 100%, the weight decreases by 90% (that is, a temperature at which the weight is 10% of that before measurement).

Examples of the volatile compound include volatile silane compounds, and volatile solvents, with volatile silane compounds being preferable.

Examples of the volatile silane compound include alkoxysilane compounds. The alkoxysilane compound is a compound having a structure in which among 4 bonds of a silicon atom (Si), 1 to 3 bonds attach to an alkoxy group, and residual bonds attach to an organic substituent. Examples of the alkoxy group of the alkoxysilane compound include a methoxy group, an ethoxy group, a protoxy group, a butoxy group, a pentoxy group, and a hexatoxy group. The alkoxysilane compound may be contained as a dimer or a trimer.

Among the alkoxysilane compounds, alkoxysilane compounds having a methoxy group or an ethoxy group are preferable from the viewpoint of availability. The number of alkoxy groups of the alkoxysilane compound is preferably 3 from the viewpoint of enhancing affinity for the thermally conductive filler as an inorganic substance. The alkoxysilane compound is more preferably at least one selected form a trimethoxysilane compound and a triethoxysilane compound.

Examples of the functional group contained in an organic substituent of the alkoxysilane compound include an acryloyl group, an alkyl group, a carboxyl group, a vinyl group, a methacryl group, an aromatic group, an amino group, an isocyanate group, an isocyanurate group, an epoxy group, a hydroxyl group, and a mercapto group.

For enhancing the dispersibility of the thermally conductive filler to easily increase the amount of filling of the thermally conductive filler, the alkoxysilane compound preferably contains an alkylalkoxysilane compound having an alkyl group boded to a silicon atom, that is, an alkoxysilane compound having an alkyl group as an organic substituent. The number of carbon atoms in the alkyl group bonded to the silicon atom is preferably 4 or more. The number of carbon atoms in the alkyl group bonded to the silicon atom is preferably 16 or less from the viewpoint that the viscosity of the alkoxysilane compound itself is relatively low, so that the viscosity of the thermally conductive composition is kept low.

One or more alkoxysilane compounds can be used. Specific examples of the alkoxysilane compound include alkyl group-containing alkoxysilane compounds, vinyl group-containing alkoxysilane compounds, acryloyl group-containing alkoxysilane compounds, methacryl group-containing alkoxysilane compounds, aromatic group-containing alkoxysilane compounds, amino group-containing alkoxysilane compounds, isocyanate group-containing alkoxysilane compounds, isocyanurate group-containing alkoxysilane compounds, epoxy group-containing alkoxysilane compounds, and mercapto group-containing alkoxysilane compounds.

Examples of the alkyl group-containing alkoxysilane compound include methyltrimethoxysilane, dimethyldimethoxysilane, trimethylmethoxysilane, methyltriethoxysilane, dimethyldiethoxysilane, ethyltrimethoxysilane, n-propyltrimethoxysilane, n-propyltriethoxysilane, isobutyltrimethoxysilane, isobutyltriethoxysilane, n-hexyltrimethoxysilane, n-hexyltriethoxysilane, cyclohexylmethyldimethoxysilane, n-octyltriethoxysilane, and n-decyltrimethoxysilane. Among the alkyl group-containing alkoxysilane compounds, at least one selected from the group consisting of isobutyltrimethoxysilane, isobutyltriethoxysilane, n-hexyltrimethoxysilane, n-hexyltriethoxysilane, cyclohexylmethyldimethoxysilane, n-octyltriethoxysilane and n-decyltrimethoxysilane is preferable, at least one selected from the group consisting of n-octyltriethoxysilane and n-decyltrimethoxysilane is more preferable, and n-decyltrimethoxysilane is particularly preferable.

Examples of the vinyl group-containing alkoxysilane compound include vinyltrimethoxysilane, and vinyltriethoxysilane. Examples of the acryloyl group-containing alkoxysilane compound include 3-acryloxypropyltrimethoxysilane. Examples of the methacryl group-containing alkoxysilane compound include 3-methacryloxypropylmethyldimethoxysilane, 3-methacryloxypropyltrimethoxysilane, and 3-methacryloxypropyltriethoxysilane. Examples of the aromatic group-containing alkoxysilane compound include phenyltrimethoxysilane, and phenyltriethoxysilane. Examples of the amino group-containing alkoxysilane compound include N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, and N-phenyl-3-aminopropyltrimethoxysilane. Examples of the isocyanate group-containing alkoxysilane compound include 3-isocyanatepropyltriethoxysilane. Examples of the isocyanurate group-containing alkoxysilane compound include tris-(trimethoxysilylpropyl)isocyanurate. Examples of the epoxy group-containing alkoxysilane compound include 2-(3,4-epoxycyclohexyl)ethyltrimethoxysilane, 3-glycidoxypropylmethyldimethoxysilane, 3-glycidoxypropyltrimethoxysilane, and 3-glycidoxypropyltriethoxysilane. Examples of the mercapto group-containing alkoxysilane compound include 3-mercaptopropyltrimethoxysilane.

The specific examples of the alkoxysilane compound are illustrative, and the alkoxysilane compound is not limited thereto.

As the volatile solvent, a solvent having a boiling point (at 1 atm) of 60 to 200°C, preferably 100 to 130°C can be used. The volatile solvent preferably has a boiling point higher by 10°C or more than the curing temperature of the organopolysiloxane, and more preferably has a boiling point higher by 20°C or more than the curing temperature of the organopolysiloxane.

For the type of the volatile solvent, a solvent that meets the above-described requirements can be appropriately selected. For example, an aromatic compound such as toluene or an aliphatic compound such as n-hexadecane is preferably used.

The content of the volatile compound in the thermally conductive composition is preferably 5 to 100 parts by mass, and more preferably 15 to 70 parts by mass of the (A) organopolysiloxane.

<Additives>

The thermally conductive composition of the present invention may contain additives. The additive is, for example, at least one selected from a pressure-sensitive adhesive, a flame retardant, an antioxidant, a colorant, an anti-settling agent and the like. When addition reaction type silicone is contained as described above, a curing catalyst for accelerating the curing of the silicone, and a curing retardant for delaying the curing of the silicone may be blended. Examples of the curing catalyst include platinum-based catalysts.

<Viscosity>

The viscosity of the thermally conductive composition of the present invention at a shear rate of 0.1 (1/s) at 25°C is preferably 10 Pa•s or more and $20 \times 10^3$ Pa•s or less. When the viscosity is equal to or larger than the above-described lower limit, it is possible to provide predetermined thermal conductivity. When the viscosity is equal to or smaller than the above-described upper limit, it is possible to ensure excellent operability during use of the thermally conductive composition.

For example, when the thermally conductive composition is sheeted, the viscosity is further preferably 50 Pa•s or more and $15 \times 10^3$ Pa•s or less, and particularly preferably 100 Pa•s or more and $10 \times 10^3$ Pa•s or less. When the viscosity is equal to or larger than the above-described lower limit, dripping hardly occurs during sheeting, and the sheet is likely to have a uniform thickness. When the viscosity is equal to or smaller than the above-described upper limit, the application property is enhanced.

When a block in which an anisotropic filler is oriented in a predetermined direction by a magnetic field orientation method is formed, the viscosity is further preferably 500 Pa•s or more and $10 \times 10^3$ Pa•s or less, and particularly preferably $1.0 \times 10^3$ Pa•s or more and $5.0 \times 10^3$ Pa•s or less. When the viscosity is equal to or larger than the above-described lower limit, settling of the anisotropic filler is easily suppressed. When the viscosity is equal to or smaller than the above-described upper limit, the anisotropic filler is easily oriented in a predetermined direction.

Further, when the thermally conductive composition is applied using a dispenser, the viscosity is further preferably 10 Pa•s or more and $1.0 \times 10^3$ Pa•s or less, and particularly preferably 30 Pa•s or more and 600 Pa•s or less. When the viscosity is equal to or larger than the above-described lower limit, settling of the thermally conductive filler can be easily suppressed. When the viscosity is equal to or smaller than the above-described upper limit, the load on a discharge apparatus is reduced, and discharge from the discharge apparatus can be stably performed.

The viscosity can be a value obtained by, for example, using a rheometer "MCR-302e" manufactured by Anton Paar, adjusting the temperature of the thermally conductive composition to 25°C with a Peltier plate, and performing measurement with the shear rate continuously changed within the shear rate range of 0.0001 to 6.3 (1/s) using a parallel plate of φ25 mm.

<Piercing load>

The piercing load is measured by any of methods shown as piercing loads 1 and 2. A measurement method is selected such that first, measurement of the piercing load 1 is performed, and if the load becomes over the limit, measurement of the piercing load 2 is performed.

[Piercing load 1]

The piercing load 1 is measured as follows. First, the thermally conductive composition is defoamed, and subsequently, 25 g of the thermally conductive composition is introduced into a cylindrical container having a diameter of 25 mm. Subsequently, the tip side of a piercing rod having a disk-shaped member having a diameter of 10 mm at a tip thereof is pressed at a rate of 10 mm/min against the thermally conductive composition introduced into the container. The piercing rod is pushed by 2 mm and 6 mm in depth, at which the load (gf) is measured where the depth at which the load is 0.2 gf is defined as 0 mm. The measurement is performed at 25°C. In a horizontal axis that represents a displacement and a vertical axis that represents a load, the slope of a straight line passing through a plot at a depth of 0 mm and a plot at a depth of 2 mm is defined as a "slope 1-1" and the slope of a straight line passing through a plot at a depth of 0 mm and a plot at a depth of 6 mm is defined as a "slope 1-2". The maximum value of a load (maximum load 1 (gf)) when the piercing rod is pushed by 15 mm in depth is measured.

[Piercing load 2]

The piercing load 2 is measured as follows. First, the thermally conductive composition is defoamed, and subsequently, 25 g of the thermally conductive composition is introduced into a cylindrical container having a diameter of 25 mm. Subsequently, the tip side of a piercing rod having a disk-shaped member having a diameter of 5 mm at a tip thereof is pressed at a rate of 10 mm/min against the thermally conductive composition introduced into the container. The piercing rod is pushed by 2 mm in depth, at which the load (maximum load 2-1 (gf)) is measured where the depth at which the load is 0.2 gf is defined as 0 mm. The measurement is performed at 25°C. In a horizontal axis that represents a displacement and a vertical axis that represents a load, the slope between 0 mm and 2 mm in depth is defined as a "slope 2-1" and the slope between 0 mm and a 6 mm in depth is defined as a "slope 2-2". The maximum value of a load (maximum load 2 (gf)) when the piercing rod is pushed by 15 mm in depth is measured. For samples with an extremely large load, a load at a displacement of 2 mm is recorded as a reference value.

The maximum load 1 in the measurement of the piercing load of the thermally conductive composition of the present invention is preferably 0.2 gf or more and 500 gf or less, more preferably 2 gf or more and 250 gf or less, and further more preferably 5 gf or more and 150 gf or less, from the viewpoint of obtaining a composition having a low viscosity.

The maximum load 2 in the measurement of the piercing load of the thermally conductive composition of the present invention is preferably 0.2 gf or more and 200 gf or less, and more preferably 3 gf or more and 100 gf or less, from the viewpoint of obtaining a composition having a low viscosity.

The slope 1-1 in the thermally conductive composition of the present invention is preferably 0.5 or more and 20 or less, and more preferably 0.1 or more and 15 or less. The slope 1-2 in the thermally conductive composition is preferably 1 or more and 35 or less, and more preferably 3 or more and 25 or less.

The slope 2-1 in the thermally conductive composition of the present invention is preferably 0.2 or more and 30 or less, and more preferably 3 or more and 15 or less. The slope 2-2 in the thermally conductive composition is preferably 3 or more and 30 or less, and preferably 4 or more and 10 or less.

[Thermally conductive formed product]

According to the present invention, there can also be provided a thermally conductive formed product containing a matrix made from a cured product of an organopolysiloxane, and a thermally conductive filler, the organopolysiloxane containing an organopolysiloxane having a hydroxyl group. The thermally conductive formed product, which contains an organopolysiloxane having a hydroxyl group, thus has good dispersibility of the thermally conductive filler. Therefore, the filling ability of the thermally conductive filler is enhanced, so that the thermal conductivity increases.

The thermally conductive formed product can be obtained by curing the thermally conductive composition. Details of a method for producing the thermally conductive formed product will be described later.

The matrix made from a cured product of an organopolysiloxane is a cured product of the (A) organopolysiloxane that is in a liquid form at 25°C. Details of the (A) organopolysiloxane that is in a liquid form at 25°C are as described above. As described above, the main component of the (A) organopolysiloxane that is in a liquid form at 25°C is preferably addition reaction type silicone, and in this case, the matrix is mainly made from a cured product of addition reaction type silicone.

The (A) organopolysiloxane that is in a liquid form at 25°C preferably contains an organopolysiloxane having a hydroxyl group, and an organopolysiloxane having an alkoxy group and/or a fluorescent polysiloxane. In this case, the thermally conductive formed product contains an organopolysiloxane having a hydroxyl group, and an organopolysiloxane having an alkoxy group and/or a fluorescent polysiloxane.

The content of each of the organopolysiloxane having a hydroxyl group, the organopolysiloxane having an alkoxy group, and the fluorescent polysiloxane in the matrix is equivalent to the content of each of the organopolysiloxane having a hydroxyl group, the organopolysiloxane having an alkoxy group, and the fluorescent polysiloxane in the (A) polyorganosiloxane.

When the thermally conductive formed product contains a fluorescent polysiloxane, it is preferable that a predetermined fluorescence spectrum be observed.

In the thermally conductive formed product of the present invention, the fluorescent polysiloxane preferably has the non-associated body fluorescence peak X at a wavelength of 370 nm or more and 430 nm or less, and the exciplex fluorescence peak Y at a wavelength of 430 nm or more and 550 nm or less. For example, when the fluorescent polysiloxane has a polycyclic aromatic structure, and the polycyclic aromatic structure is pyrene or a pyrene derivative, the fluorescent polysiloxane has the non-associated body fluorescence peak X at a wavelength of 370 nm or more and 430 nm or less, and the exciplex fluorescence peak Y at a wavelength of 430 nm or more and 550 nm or less.

The range of wavelengths at which the non-associated body fluorescence peak X is observed (370 nm or more and 430 nm or less) is preferably 370 nm or more and 410 nm or less, and more preferably 370 nm or more and 390 nm or less.

The range of wavelengths at which the exciplex fluorescence peak Y is observed (430 nm or more and 550 nm or less) is preferably 450 nm or more and 530 nm or less, and more preferably 460 nm or more and 500 nm or less.

In the thermally conductive formed product of the present invention, the fluorescent polysiloxane preferably has the non-associated body fluorescence peak X at a wavelength of 430 nm or more and 530 nm or less, and the exciplex fluorescence peak Y at a wavelength of 490 nm or more and 700 nm or less. For example, when the fluorescent polysiloxane has a polycyclic aromatic structure, and the polycyclic aromatic structure is perylene or a perylene derivative, the fluorescent polysiloxane has the non-associated body fluorescence peak X at a wavelength of 430 nm or more and 530 nm or less, and the exciplex fluorescence peak Y at a wavelength of 490 nm or more and 700 nm or less.

The range of wavelengths at which the non-associated body fluorescence peak X is observed (430 nm or more and 530 nm or less) is preferably 430 nm or more and 500 nm or less, and more preferably 440 nm or more and 460 nm or less.

The range of wavelengths at which the exciplex fluorescence peak Y is observed (490 nm or more and 700 nm or less) is preferably 500 nm or more and 650 nm or less, and more preferably 520 nm or more and 600 nm or less.

In the thermally conductive formed product, the fluorescent polysiloxane has a non-associated body fluorescence peak X and an exciplex fluorescence peak Y, and the ratio of the exciplex fluorescence peak intensity FY to the non-associated body fluorescence peak intensity FX (FY/FX) is preferably 0.01 or more and 6.0 or less.

From the viewpoint of enhancing the dispersibility of the fluorescent polysiloxane in the thermally conductive formed product, the ratio of the fluorescence intensity (FY/FX) is preferably 0.02 or more and 1.5 or less, more preferably 0.03 or more and 0.7 or less, and particularly preferably 0.05 or more and 0.4 or less.

The matrix in the thermally conductive formed product is preferably 5 mass% or more and 80 mass% or less, more preferably 8 mass% or more and 50 mass% or less, and further more preferably 10 mass% or more and 30 mass% or less, with respect to the total amount of the thermally conductive formed product.

The thermally conductive filler in the thermally conductive formed product is the same as the (B) thermally conductive filler contained in the thermally conductive composition.

The content of the thermally conductive filler in the thermally conductive formed product is preferably 100 parts by mass or more and 1,500 parts by mass or less, more preferably 200 parts by mass or more and 1,000 parts by mass or less, and further more preferably 300 parts by mass or more and 700 parts by mass or less per 100 parts by mass of the matrix.

[Method for producing thermally conductive formed product]

The method for producing a thermally conductive formed product of the present invention is not limited, but a production method including the following step (1), step (2), step (3) and step (4) is preferable.

The method for producing a thermally conductive formed product is preferably a method for producing a thermally conductive formed product, including step (1) of forming the thermally conductive composition of the present invention into a sheet shape to obtain a sheet-shaped formed product, step (2) of curing the sheet-shaped formed product with the sheet-shaped formed product disposed between two films, at least one of which is a gas-permeable film, thereby obtaining a primary sheet, step (3) of preparing a plurality of the primary sheets, and laminating the plurality of primary sheets to bond the plurality of primary sheets, thereby forming a laminated block, and step (4) of cutting the laminated block along a lamination direction into a sheet shape to obtain a thermally conductive formed product.

<Step (1)>

Step (1) is a step of forming the thermally conductive composition into a sheet shape to obtain a sheet-shaped formed product. The thermally conductive composition is obtained by mixing constituent components. For mixing the components, a known kneader, kneading roll, mixer or vibratory stirrer is preferably used. The thermally conductive composition is a composition in a liquid form, typically a grease form or a clay form.

The thermally conductive composition preferably contains the volatile compound. By using a thermally conductive composition containing a volatile compound, the content of the thermally conductive filler can be increased as compared to the conventional compositions, and application can be easily performed during formation of a sheet shape.

The formation of a sheet shape is preferably performed by applying the thermally conductive composition to a substrate film. When the thermally conductive filler contained in the thermally conductive composition contains an anisotropic filler, the anisotropic filler is easily oriented in an application direction (planar direction of the sheet) by a shear force during application. Here, the thermally conductive composition is preferably applied onto the substrate film by, for example, a coating applicator such as bar coater or a doctor blade, extrusion forming or discharge from a nozzle. By such a method, a shear force along a direction in which the thermally conductive composition is applied can be given. Under the shear force, the anisotropic filler in the thermally conductive composition is oriented in the application direction. The substrate film may be a gas-permeable film described later.

As another method for obtaining a sheet-shaped formed product, a method in which the thermally conductive composition is sandwiched between, for example, two films, and stretched by a stretching roll, or the like can be applied.

<Step (2)>

Step (2) is a step of curing the sheet-shaped formed product obtained by the step (1), with the sheet-shaped formed product disposed between two films, at least one of which is a gas-permeable film, thereby obtaining a primary sheet.

In step (2), the sheet-shaped formed product is disposed between two films. Specifically, two films are provided so as to contact both surfaces of the sheet-shaped formed product. Preferably, at least one of the two films is a gas-permeable film.

When the sheet-shaped formed product contains a volatile compound, the use of a gas-permeable film enables the volatile compound to be appropriately volatilized, so that it is possible to suppress generation of bubbles and the like in the primary sheet made from the sheet-shaped formed product. In addition, the surface of the primary sheet has little irregularities, so that a laminated block is easily formed in step (3).

Here, the term "gas permeability" means a property of being impermeable to liquid and permeable to gas. Preferably, the oxygen permeability of the gas-permeable film is, for example, $1 \times 10^{-16}$ mol•m/(m$^2$•s•Pa) or more. More preferably, the water-vapor permeability of the gas-permeable film is $1 \times 10^{-15}$ mol•m/(m$^2$•s•Pa) or more. Here, the water-vapor permeability is a value determined according to JIS K7126-2:2006, Determination of gas-transmission rate.

The gas-permeable film is, for example, a porous film made from a mixture of a polymer and a filler or a mixture of polymers, and may be a film which is not porous and has gas permeability.

The polymer that forms the gas-permeable film is not limited, and examples thereof include low-density polyethylene, linear low-density polyethylene, poly 4-methylpentene-1, ethylcellulose, and fluorine-based resins such as polytetrafluoroethylene and fluorine-modified resins. Among them, non-porous gas-permeable films made from poly 4-methylpentene-1 and porous gas-permeable films made from a fluorine-based resin are preferable. The use of a gas-permeable film made from poly 4-methylpentene-1 and a fluorine-based resin enables a volatile compound to be appropriately volatilized, and ensures excellent releasability in peeling of the gas-permeable film from the primary sheet. It is particularly preferable to use a non-porous gas-permeable film made from poly 4-methylpentene-1. When a non-porous gas-permeable film made from poly 4-methylpentene-1 is used, a primary sheet is obtained which has particularly excellent releasability because liquid resin does not enter pores when the thermally conductive composition is applied and which has a good surface condition with little irregularities because the film surface has no pores, which means that irregularities caused by pores are not formed.

Preferably, at least one of the two films used in step (2) is a gas-permeable film. Both of the films may be gas-permeable films. Of the two films, one may be a gas-permeable film, with the other being a film which does not have gas permeability, such as a polyester-based film or a polyolefin-based film.

The method for creating a state in which the sheet-shaped formed product obtained by step (1) is disposed

between two films in step (2) is not limited. For example, when the thermally conductive composition is applied onto the substrate film to prepare a sheet-shaped formed product in step (1), the substrate film is preferably used as one of the two films, with the other film being disposed so as to contact the sheet-shaped formed product. When the sheet-shaped formed product alone is obtained by step (1), two films are preferably prepared, with the sheet-shaped formed product being disposed between the two films.

The sheet-shaped formed product can be cured by heating. The heating is preferably performed at a temperature of, for example, about 65 to 100°C. The heating time is, for example, about 10 minutes to 24 hours. In this way, a primary sheet can be obtained.

<Step (3)>

Step (3) is a step of preparing a plurality of primary sheets obtained in the step (2), and laminating the plurality of primary sheets to bond the plurality of primary sheets, thereby forming a laminated block.

For steps (3) and (4), a case in which the thermally conductive filler contains an anisotropic filler 14 will be described with reference to the drawings.

As shown in Figs. 1(a) and 1(b), a plurality of primary sheets 21 are laminated such that the orientation directions of the anisotropic fillers 14 are identical.

The primary sheets 21 can be bonded only by stacking one on top of another as described above, but may be pressurized in a lamination direction x of the primary sheets 21 for achieving stronger bonding. The pressurization is preferably performed at a pressure that does not heavily deform the primary sheets 21, and the pressurization can be performed using, for example, a roller or a press. As an example, the pressure is preferably 0.3 to 3 kgf/50 mm when a roller is used.

The laminated primary sheets 21 may be appropriately heated during, for example, pressurization, but it is preferable not to heat the laminated primary sheets 21 because they can be bonded without heating. Therefore, the temperature during pressing is, for example, 0 to 50°C, preferably about 10 to 40°C.

<Step (4)>

Step (4) is a step of cutting the laminated block obtained by step (3) along a lamination direction into a sheet shape to obtain a thermally conductive sheet.

As shown in Fig. 1(c), a laminated block 22 is cut along the lamination direction x of the primary sheets 21 with a blade 18 to obtain a thermally conductive formed product 10. Here, the laminated block 22 is preferably cut in a direction orthogonally crossing the orientation direction of the anisotropic filler 14. By performing cutting in this manner, the anisotropic filler 14 is oriented in a thickness direction of the thermally conductive formed product 10, so that the thermal conductivity in the thickness direction increases.

As the blade 18, for example, double-edged blades and single-edged blades such as razors and cutter knives, round blades, wire blades, and saw blades can be used. The laminated block 22 is cut by a method such as pressing and cutting, shearing, swiveling or sliding using the blade 18.

From the viewpoint of volatilizing a remaining volatile compound, it is preferable to perform heating treatment on the thermally conductive formed product obtained after cutting, and the heating treatment is preferably performed under conditions of a heating temperature of 80 to 160°C and a heating time of 2 to 48 hours.

In the production method described above, a sheet-shaped formed product (primary sheet) is formed, and a plurality of the primary sheets are then laminated to form a laminated block, but a laminated block equivalent may be prepared by the following method. Specifically, when the anisotropic filler 14 has a anisotropic diamagnetic susceptibility, it is possible to utilize a method in which a thermally conductive composition is injected into a block-shaped mold to form a block with the anisotropic filler 14 oriented in a predetermined direction by a magnetic field orientation method. By cutting the thus-formed block in a direction orthogonally crossing the orientation direction of the anisotropic filler 14, the anisotropic filler 14 is oriented in a thickness direction of the thermally conductive formed product 10, so that a thermally conductive formed product having high thermal conductivity in the thickness direction can be obtained.

[Device]

According to the present invention, a device including a heating element, a heat dissipating element, and the thermally conductive formed product provided between the heating element and the heat dissipating element can be provided. The thermally conductive formed product is interposed between the heating element and the heat dissipating element, and performs heat conduction in which heat generated at the heating element is transferred to the heat dissipating element, and released from the heat dissipating element. Here, examples of the heating element include CPU, LED, coils, and lithium ion batteries. Examples of the heat dissipating element include heat sinks, heat pumps, and

metallic housings for electronic equipment. A Peltier element may be placed instead of the heat dissipating element.

Examples

Hereinafter, the present invention will be described in further detail by way of Examples, but the present invention is in no way limited by the examples.

Thermally conductive compositions in the present Examples and Comparative Examples, and thermally conductive formed products which are cured products thereof were evaluated by the following methods.

[Curing property]

The curing properties of the thermally conductive compositions of Examples and Comparative Examples were confirmed by the following criteria. The curing was performed under two conditions one of which is a condition of 80°C for 8 hours and the other of which is a condition of 150°C for 6 hours.

(Evaluation)

A: With respect to a thermally conductive composition after heating treatment which is sandwiched between a pair of release films, peeling at an interface occurred when peeling was performed.

B: With respect to a thermally conductive composition after heating treatment which is sandwiched between a pair of release films, peeling at an interface did not occur when peeling was performed.

[Viscosity]

The viscosity at 25°C of the thermally conductive composition of each of Examples and Comparative Examples immediately after preparation was measured as follows.

A rheometer "MCR-302e" manufactured by Anton Paar was used, the temperature of the sample was adjusted to 25°C with a Peltier plate, and the viscosity was measured with the shear rate continuously changed within the shear rate range of 0.0001 to 100 (1/s) using a parallel plate of φ25 mm. The viscosity at each of shear rates of 0.05 (1/s), 0.4 (1/s), 1.6 (1/s), 3.2 (1/s) and 6.3 (1/s) was measured. In some Examples and Comparative Examples, the viscosity at each of shear rates of $1 \times 10^{-4}$ (1/s) and 0.1 (1/s) was also measured. The viscosity ratio was calculated by a ratio of shear rates of $1 \times 10^{-4}$ (1/s) and 0.1 (1/s).

[Piercing load 1]

The piercing load 1 was measured as follows. First, the thermally conductive composition was defoamed, and subsequently, 25 g of the thermally conductive composition was introduced into a cylindrical container having a diameter of 25 mm. Subsequently, the tip side of a piercing rod having a disk-shaped member having a diameter of 10 mm at a tip thereof was pressed at a rate of 10 mm/min against the thermally conductive composition introduced into the container. The piercing rod was pushed by 2 mm and 6 mm in depth, at which the load (gf) was measured where the depth at which the load was 0.2 gf was defined as 0 mm. The measurement was performed at 25°C. In a horizontal axis that represents a displacement and a vertical axis that represents a load, the slope of a straight line passing through a plot at a depth of 0 mm and a plot at a depth of 2 mm was defined as a "slope 1-1" and the slope of a straight line passing through a plot at a depth of 0 mm and a plot at a depth of 6 mm was defined as a "slope 1-2". The maximum value of a load (maximum load 1 (gf)) when the piercing rod was pushed by 15 mm in depth was measured.

[Piercing load 2]

The piercing load 2 was measured as follows. First, the thermally conductive composition was defoamed, and subsequently, 25 g of the thermally conductive composition was introduced into a cylindrical container having a diameter of 25 mm. Subsequently, the tip side of a piercing rod having a disk-shaped member having a diameter of 5 mm at a tip thereof was pressed at a rate of 10 mm/min against the thermally conductive composition introduced into the container. The piercing rod was pushed by 2 mm in depth, at which the load (maximum load 2-1 (gf)) was measured where the depth at which the load was 0.2 gf is defined as 0 mm. The measurement was performed at 25°C. In a horizontal axis that represents a displacement and a vertical axis that represents a load, the slope between 0 mm and 2 mm in depth was defined as a "slope 2-1" and the slope between 0 mm and a 6 mm in depth was defined as a "slope 2-2". The maximum value of a load

(maximum load 2 (gf)) when the piercing rod was pushed by 15 mm in depth was measured. For samples with an extremely large load, a load at a displacement of 2 mm was recorded as a reference value.

[Improving effect on fluidity of thermally conductive composition]

The ratio of decrease in fluidity with respect to Comparative Example as a reference was evaluated.

The viscosity decrease ratio (%) at each shear rate, the ratio of decrease (%) in maximum load 1, the ratio of decrease (%) in maximum load 2, the ratio of decrease (%) in maximum load 2-1, the ratio of decrease (%) in slope 1-1, the ratio of decrease (%) in slope 1-2, the ratio of decrease (%) in slope 2-1, and the ratio of decrease (%) in slope 2-2 were each evaluated to confirm the improving effect on fluidity. The evaluation was performed by comparing Example and Comparative Example which are identical in composition of the thermally conductive filler. Specifically, the evaluation was performed by the following expression. A higher evaluated value indicates a higher fluidity improving effect (viscosity reducing effect).

<Viscosity decrease ratios (%) at shear rates>

Viscosity decrease ratio (%) = 100 $\times$ (Comparative Example viscosity as reference - Example viscosity)/Comparative Example viscosity as reference)

In the case where it was not possible to measure the Comparative Example viscosity as a reference, the improving effect on fluidity was evaluated by the following criteria.

A: The improving effect on fluidity is extremely high.
B: There is an improving effect on fluidity.
C: There is little improving effect on fluidity.

<Ratio of decrease (%) in maximum load 1, ratio of decrease (%) in maximum load 2 and ratio of decrease (%) in maximum load 2-1 >

Ratio of decrease (%) in maximum load = 100 $\times$ (Comparative Example maximum load as reference - Example maximum load)/(Comparative Example maximum load as reference)

<Ratio of decrease (%) in slope 1-1, ratio of decrease (%) in slope 1-2, ratio of decrease (%) in slope 2-1 and ratio of decrease (%) in slope 2-2>

Slope decrease ratio (%) = 100 $\times$ (Comparative Example slope as reference - Example slope)/(Comparative Example slope as reference)

[Thermal conductivity]

[Thermal conductivity 1]

Using a thermal resistance measuring machine shown in Fig. 2, the thermal resistance 1 was measured by a method shown below. Specifically, from each sample, a test piece S having a size of 10 mm $\times$ 10 mm was prepared for the present test. The test piece S was attached on a copper block 32 which has a measurement surface of 10 mm $\times$ 10 mm and in which side surfaces are covered with a thermal insulator 31. The test piece S was sandwiched between the copper block 32 and an upper copper block 33, and a load was applied with a load cell 36 to set the thickness to 80% of the original thickness. Here, the lower copper block 32 is in contact with a heater 34. The upper copper block 33 is connected to a heat sink 35 with a fan. Subsequently, the heater 34 was made to generate heat in an amount of 25 W. Ten minutes after the temperature became substantially constant, the temperature of the upper copper block 33 ($\theta j0$), the temperature of the lower copper block 32 ($\theta j1$), and the amount of generation of heat (Q) of the heater were measured, and the thermal

conductivity of each sample was determined from the following expressions (1) and (2).

$$\text{Thermal resistance} = (\theta j1 - \theta j0)/Q \text{ ... expression (1)}$$

$$\text{Thermal conductivity} = T/\text{thermal resistance ... (2)}$$

In the expression (1), θj1 is a temperature of the lower copper block 32, θj0 is a temperature of the upper copper block 33, and Q is an amount of generation of heat. In the expression (2), T is a thickness of the sample during measurement of the thermal resistance.

[Thermal conductivity 2]

Using a thermal resistance measuring machine shown in Fig. 2, the thermal resistance 2 was measured by a method shown below. Specifically, from each sample, a test piece S having a size of 10 mm × 10 mm was prepared for the present test. The test piece S was attached on a copper block 32 which has a measurement surface of 10 mm × 10 mm and side surfaces are covered with a thermal insulator 31. The test piece S was sandwiched between the copper block 32 and an upper copper block 33, and a load was applied with a load cell 36 to set the thickness to 80% of the original thickness. Here, the lower copper block 32 is in contact with a heater 34. The upper copper block 33 is connected to a heat sink 35 with a fan. Subsequently, the heater 34 was made to generate heat in an amount of 5 W. Ten minutes after the temperature became substantially constant, the temperature of the upper copper block 33 (θj0), the temperature of the lower copper block 32 (θj1), and the amount of generation of heat (Q) of the heater were measured, and the thermal conductivity of each sample was determined from the following expressions (1) and (2).

$$\text{Thermal resistance} = (\theta j1 - \theta j0)/Q \text{ ... expression (1)}$$

$$\text{Thermal conductivity} = T/\text{thermal resistance ... (2)}$$

In the expression (1), θj1 is a temperature of the lower copper block 32, θj0 is a temperature of the upper copper block 33, and Q is an amount of generation of heat. In the expression (2), T is a thickness of the sample during measurement of the thermal resistance.

[Compressive load]

In the thermally conductive formed product obtained in each of Examples and Comparative Examples, a compressive load (kgf) at an area of 10 mm × 10 mm was measured. The measurement of the compressive load was performed by measuring a load when a bonding surface at which a plurality of unit layers were bonded together was vertically compressed by 20%.

[Physical properties of materials]

For the thermally conductive compositions of Examples and Comparative Examples, the physical properties of materials were determined as follows.

The concentration of the organopolysiloxane having a hydroxyl group (mmol) was calculated by "blending amount of organopolysiloxane having a hydroxyl group (parts by mass)/number average molecular weight of organopolysiloxane having a hydroxyl group × 1,000".

The number of functional groups as hydroxyl groups is the number of hydroxyl groups in the structure of each material synthesized.

The hydroxyl group concentration (mmol) wads calculated by "Concentration of organopolysiloxane having a hydroxyl group (mmol) × number of functional groups as hydroxyl groups".

The hydroxyl group concentration 2 (μmol/g), which is a [er-unit-weight equivalent to the hydroxyl group concnetration (mmol), was calculated by "hydroxyl group concentration (mmol)/total blending amount (parts by mass) × 1,000".

The total specific surface area of the polar filler (× $10^3 m^2$) was calculated by "specific surface area of each thermally conductive filler measured and calculated by nitrogen adsoption BET method × blending amount (parts by mass)".

The hydroxyl group concentration/total specific surface area of the polar filler (μmol/$m^2$) was calculated from the

values of the hydroxyl group concentration and the total specific surface area of the polar filler.

The number of functional groups as alkoxy groups is the number of alkoxy groups in the structure of each material.

The alkoxy group concentration (mmol) was calculated by "blending amount of alkoxy group-containing organopolysiloxane (parts by mass)/number average molecular weight of alkoxy group-containing organopolysiloxane × number of functional groups as alkoxy groups × 1,000".

The alkoxy group concentration/total specific surface area of the polar filler (μmol/$m^2$) was calculated from the values of the alkoxy group concentration and the total specific surface area of the polar filler.

[Fluorescence spectrum]

With the thermally conductive formed products of Examples and Comparative Examples, which contain a fluorescent polysiloxane, the fluorescence spectrum was measured. Specifically, using "Spectrofluorophotometer F-2700" manufactured by Hitachi High-Tech Science, the wavelength of a non-associated body fluorescence peak X (wavelength of the maximum peak on the short-wavelength side) and the wavelength of an exciplex fluorescence peak Y (wavelength of a maximum peak on the long-wavelength side) were measured at an excitation wavelength of 339 nm (when B was pyrene) or 420 nm (when B was perylene), and the ratio of the non-associated body fluorescence peak intensity FX and the exciplex fluorescence peak intensity FY (FY/FX) was calculated.

Here, for a fluorescence spectrum measurement sample in each of Examples and Comparative Examples, a sheet-shaped cured product (thermally conductive formed product) of 1 cm × 1 cm with a thickness of 1 mm was prepared, and the cured product was sandwiched between glass slides ("Water Slide Glass, Preclean Grinding S7213" manufactured by Matsunami Glass Ind., Ltd., material: crown glass) to obtain a measurement sample in each of Examples. For samples in which an anisotropic filler was oriented, the long axis of the anisotropic filler extended in the thickness direction of the sheet.

The measurement sample was set in a sample holder of the spectrofluorophotometer, followed by measurement of the fluorescence spectrum. A sample chamber of the spectrofluorophotometer, in which a fluorescence detector is placed in the direction of 90 ° with respect to an excitation light incidence direction, was installed such that a sample surface of the measurement sample (surface of the cured product) was at 60 ° with respect to the incidence direction, and at 30 ° with respect to the detector direction. The fluorescence spectrum was measured under conditions of a slit width of 5 nm on the excitation side, a slit width of 5 nm on the fluorescence side, and a scanning speed of 1,500 nm/min.

If the structure of the fluorescent polysiloxane is unknown, the fluorescence spectrum is measured using, as an excitation wavelength, a wavelength at which the fluorescence peak intensity FX of the fluorescence peak X is maximum.

Samples used in Examples and Comparative Examples are as follows.

<A: Organopolysiloxane that is in liquid form at 25°C>

[Addition reaction curable silicone]

- Alkenyl group-containing organopolysiloxane:: an organopolysiloxane which has a vinyl group at both ends of a molecular chain and in which the concentration of functional groups as vinyl groups is 158 μmol/g.
- Hydrogen organopolysiloxane 1: a polyorganosiloxane which has a vinyl group at an end, and a hydrosilyl group on a side chain and at an end and in which the concentration of functional groups as vinyl groups is 158 μmol/g, and the concentration of functional groups as hydrosilyl groups is 774 μmol/g.
- Hydrogen organopolysiloxane 2: an organopolysiloxane which has a cyclic structure and has a hydrosilyl group and in which the concentration of functional groups as hydrosilyl groups is 4,415 μmol/g.

[Organopolysiloxane having hydroxyl group]

- Hydroxy group-containing organopolysiloxane 1: number average molecular weight: 1,000, hydroxyl equivalent: 500
- Hydroxy group-containing organopolysiloxane 2: number average molecular weight: 5,000, hydroxyl equivalent: 2,500
- Hydroxy group-containing organopolysiloxane 3: number average molecular weight: 15,000, hydroxyl equivalent: 7,500
- Hydroxy group-containing organopolysiloxane 4: number average molecular weight: 1,000, hydroxyl equivalent:

1,000
- Hydroxy group-containing organopolysiloxane 5: number average molecular weight: 5,000, hydroxyl equivalent: 5,000
- Hydroxy group-containing organopolysiloxane 6: number average molecular weight: 1,000, hydroxyl equivalent: 500

The hydroxy group-containing organopolysiloxane is sold on the market, and has the following structure.

The structures of hydroxy group-containing organopolysiloxanes 1 to 3 are as follows.

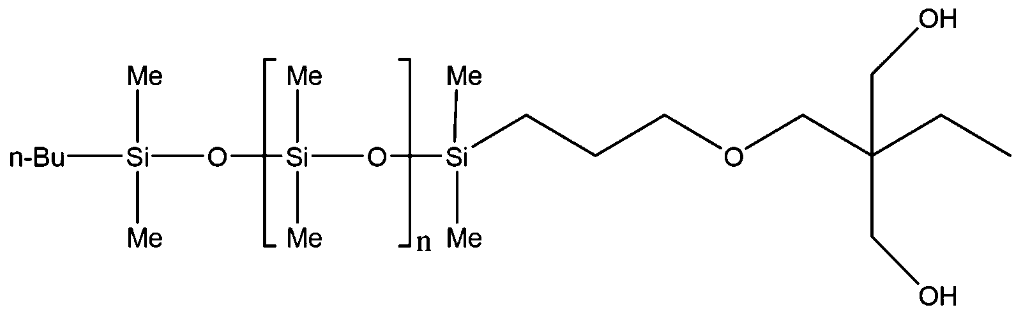

The structures of hydroxy group-containing organopolysiloxanes 4 and 5 are as follows.

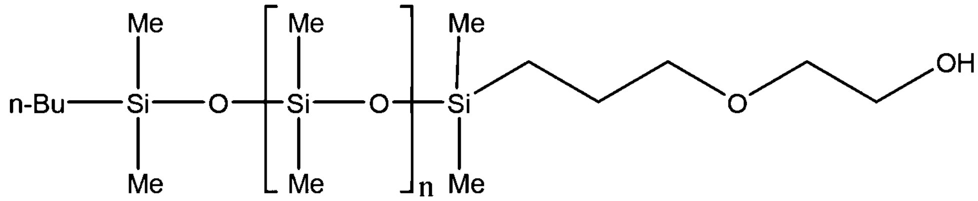

The structure of hydroxy group-containing organopolysiloxane 6 is as follows.

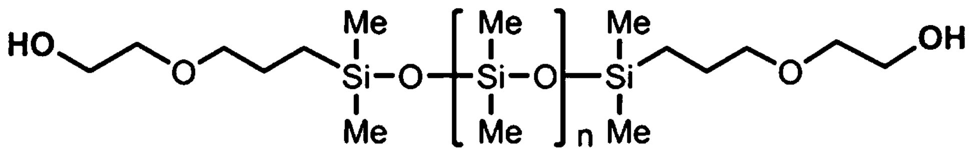

[Organopolysiloxane having alkoxy group]

- Alkoxysiloxane 1: number average molecular weight: 2,500

The alkoxysiloxane 1 has the following structure.

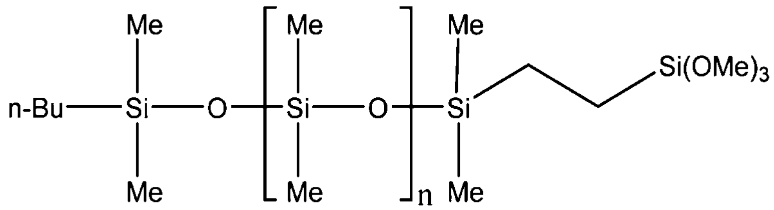

[Fluorescent polysiloxane]

- Perylene dispersant: an organopolysiloxane having perylene, which is synthesized by a method described later, number average molecular weight: 15,300
- Pyrene dispersant 1: an organopolysiloxane having pyrene, which is synthesized by a method described later,

number average molecular weight: 15,300

- Pyrene dispersant 2: an organopolysiloxane having pyrene, which is synthesized by a method described later, number average molecular weight: 4,800

(Synthesis of perylene dispersant)

In a nitrogen atmosphere, 98.6 g of an organosiloxane compound (n=210) having a 1,3-diol group, 1.7 g of 3-perylenecarboxyaldehyde, 50 g of toluene as a solvent, and 0.6 g of a catalyst ("Amberlyst 15 dry" manufactured by Organo Corporation) were reacted at 100°C for 24 hours. After the reaction, filtration with a 5.0 μm PTFE filter was performed to remove the catalyst, and the filtrate was concentrated with a rotary evaporator and a vacuum dryer to obtain a perylene dispersant 1. The reaction scheme is shown below. It was confirmed by $^1$H NMR measurement that the following reaction had proceeded. "ECX-400" manufactured by JEOL Ltd. was used as a NMR measurement apparatus, and the measurement was performed under conditions of a sample concentration of 1 wt%, 25°C, a measurement frequency of 400 MHz, and 8 scans using heavy chloroform as a solvent.

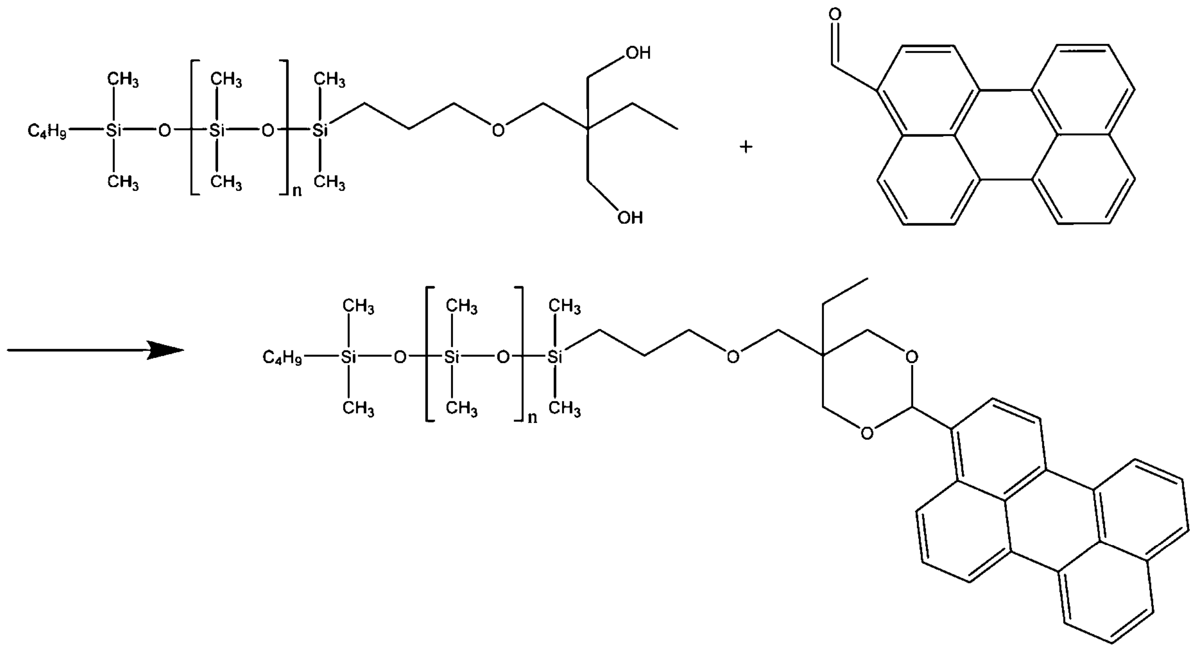

(Synthesis of pyrene dispersant 1)

In a nitrogen atmosphere, 98.6 g of an organosiloxane compound (n=210) having a 1,3-diol group, 1.4 g of 1-pyrenecarboxyaldehyde, 50 g of toluene as a solvent, and 0.6 g of a catalyst ("Amberlyst 15 dry" manufactured by Organo Corporation) were reacted at 100°C for 24 hours. After the reaction, filtration with a 5.0 μm PTFE filter was performed to remove the catalyst, and the filtrate was concentrated with a rotary evaporator and a vacuum dryer to obtain a pyrene dispersant 1. The reaction scheme is shown below. It was confirmed by $^1$H NMR measurement that the following reaction had proceeded. "ECX-400" manufactured by JEOL Ltd. was used as a NMR measurement apparatus, and the measurement was performed under conditions of a sample concentration of 1 wt%, 25°C, a measurement frequency of 400 MHz, and 8 scans using heavy chloroform as a solvent.

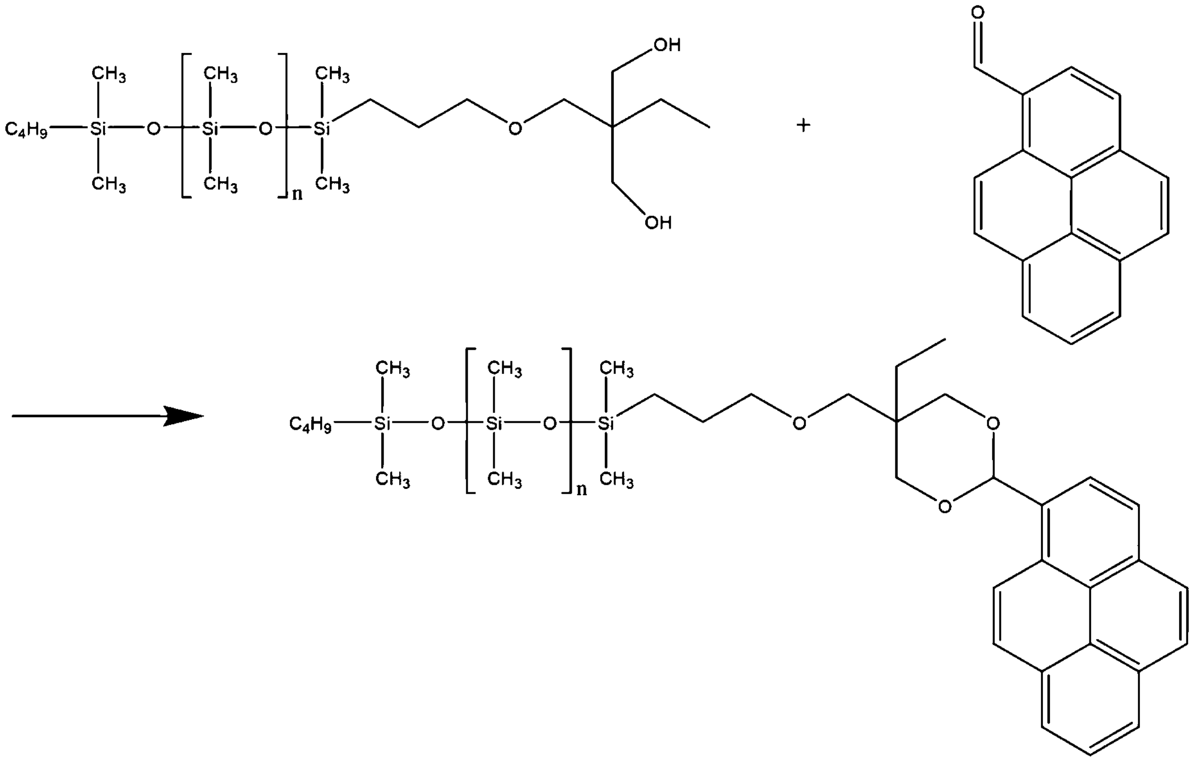

(Synthesis of pyrene dispersant 2)

In a nitrogen atmosphere, 98.6 g of an organosiloxane compound (n=70) having a hydrosilyl group, 5.7 g of 2-(1-pyrene)ethyl methacrylate, 50 g of toluene as a solvent, and 0.01 g of a Karstedt catalyst (platinum-based catalyst) as a catalyst were reacted at 100°C for 24 hours. Subsequently, the reaction liquid was concentrated with a rotary evaporator and a vacuum dryer to obtain a pyrene dispersant 2. The reaction scheme is shown below. It was confirmed by $^{1}$H NMR measurement that the following reaction had proceeded.

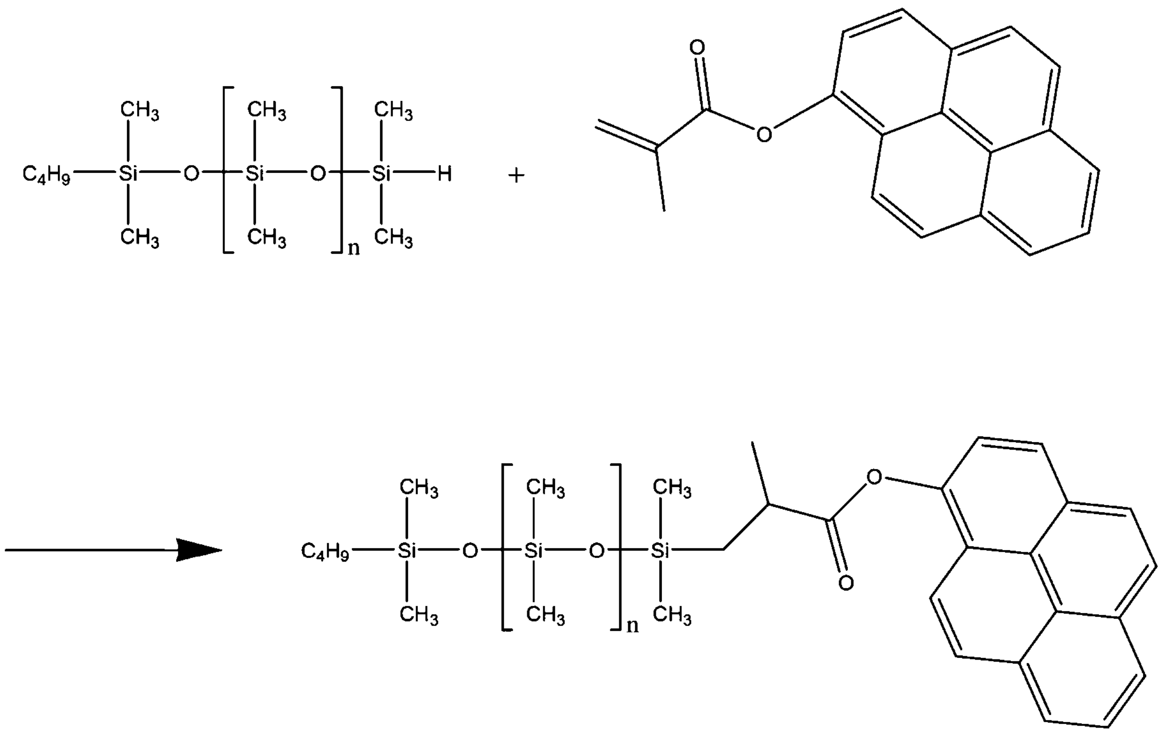

[Other organopolysiloxanes]

- Polydimethylsiloxane 1: Dimethyl silicone oil

<B: Thermally conductive filler>

- Graphitized carbon fiber 1: average fiber length: 174 μm, specific surface area: 0.499 $m^2/g$, anisotropic filler
- Graphitized carbon fiber 2: average fiber length: 169 μm, specific surface area: 0.581 $m^2/g$, anisotropic filler
- Scale-like graphite: average particle size: 15 μm, specific surface area: 8.6 $m^2/g$, anisotropic filler
- Boron nitride : average particle size: 50 μm, specific surface area: 0.7 $m^2/g$, anisotropic filler

The carbon fiber, graphitized carbon fiber 1, graphitized carbon fiber 2, scale-like graphite and boron nitrite are thermally conductive fillers having π electrons.

- Aluminum hydroxide 1: average particle size: 1 μm, specific surface area: 266 $m^2/g$, irregular shape, non-anisotropic filler
- Aluminum hydroxide 2: average particle size: 10 μm, specific surface area: 211 $m^2/g$, irregular shape, non-anisotropic filler
- Aluminum oxide 1: average particle size: 0.5 μm, specific surface area: 3.2 $m^2/g$, spherical shape, non-anisotropic filler
- Aluminum oxide 2: average particle size: 3 μm, specific surface area: 0.6 $m^2/g$, spherical shape, non-anisotropic filler
- Aluminum oxide 3: average particle size: 3 μm, specific surface area: 1.04 $m^2/g$, fragment shape, non-anisotropic filler
- Aluminum: average particle size: 3.5 μm, specific surface area: 0.633 $m^2/g$

<Volatile compound>

n-decyltrimethoxysilane . The temperature T1 at which the weight loss when the temperature is raised under the condition of 2°C/min in thermogravimetric analysis is 90% is 187°C.

<Other additives>

Platinum catalyst

[Examples 1 to 56 and Comparative Examples 1 to 30]

Using a bar coater as a coating applicator, the thermally conductive compositions obtained by mixing the components in accordance with the formulations shown in tables were each unidirectionally applied at 25°C onto a substrate film composed of a gas-permeable film ("TPX film" manufactured by Mitsui Chemicals, Inc.), thereby obtaining a sheet-shaped formed product. Next, a gas-permeable film ("TPX film" manufactured by Mitsui Chemicals, Inc.) was disposed on a surface of the sheet-shaped formed product which does not have the substrate film. The sheet-shaped formed product thus sandwiched between the two films was heated at 80°C for 8 hours to cure the thermally conductive composition contained in the sheet-shaped formed product while volatilizing part of the volatile compound, thereby obtaining a primary sheet having a thickness of 1.0 mm.

Thirty primary sheets obtained were laminated, and pressurized with a roller at a pressure of 1.6 kgf/50 mm in an environment at 25°C to obtain a laminated block. The obtained laminated block was sliced parallel to the lamination direction and perpendicularly to the orientation direction of the anisotropic filler using a cutter blade, and heated at 150°C for 120 minutes. In this way, a thermally conductive formed product was obtained which has a thickness of 2 mm and in which the thickness of each unit layer is 1,000 μm. Tables 1 to 11 show the evaluation results.

[Table 1]

Table 1

| | | | | Example 1 | Example 2 | Example 3 | Example 4 | Example 5 | Example 6 | Coniparative Example 1 | Comparative Example 2 | Comparative Example 3 |
|---|---|---|---|---|---|---|---|---|---|---|---|---|
| Blending amount (parts by mass) | Organopolysilo xane (A) | Organopolysiloxane having no hydroxyl group | Alkenyl group-containing organopolysiloxane | 63.3 | 63.3 | 63.3 | 45.2 | 45.2 | 45.2 | 90.5 | 63.3 | 45.2 |
| | | | Hydrogen organopolysiloxane 1 | 6.48 | 6.48 | 6.48 | 4.63 | 4.63 | 4.63 | 9.27 | 6.48 | 4.63 |
| | | | Hydrogen organopolysiloxane 2 | 0.214 | 0.214 | 0.214 | 0.214 | 0.214 | 0.214 | 0.214 | 0.214 | 0.214 |
| | | | Alkoxysiloxane 1 | 0.00 | 0.00 | 0.00 | 0.00 | 0.00 | 0.00 | 0.00 | 30.0 | 49.9 |
| | | Organopolysiloxane having hydroxyl group | Hydroxy group-containing oraanopolysiloxane 1 | 30.0 | 0.00 | 0.00 | 49.9 | 0.00 | 0.00 | 0.00 | 0.00 | 0.00 |
| | | | Hydroxy group-containing organopolysiloxane 2 | 0.00 | 30.0 | 0.00 | 0.00 | 49.9 | 0.00 | 0.00 | 0.00 | 0.00 |
| | | | Hydroxy group-containing organopolysiloxane 3 | 0.00 | 0 | 30.0 | 0.00 | 0.00 | 49.9 | 0.00 | 0.00 | 0.00 |
| | Thermally conductive filler (B) | Therrrally conductive filler having polar group | Aluminum hydroxide 1 | 21.4 | 21.4 | 21.4 | 21.4 | 21.4 | 21.4 | 21.4 | 21.4 | 21.4 |
| | | | Aluminum hydroxide 2 | 128 | 128 | 128 | 128 | 128 | 128 | 128 | 128 | 128 |
| | | | Aluminum oxide 1 | 71.2 | 71.2 | 71.2 | 71.2 | 71.2 | 71.2 | 71.3 | 71.2 | 71.2 |
| | | | Aluminum oxide 2 | 214 | 214 | 214 | 214 | 214 | 214 | 214 | 214 | 214 |
| | | Anisotropic filler | Graphitized carbon fiber | 142 | 142 | 142 | 142 | 142 | 142 | 143 | 142 | 142 |
| | | | Scale-like graphite | 14.2 | 14.2 | 14.2 | 14.2 | 14.2 | 14.2 | 14.3 | 14.2 | 14.2 |
| | Other additive | | Ratinum catalyst | 0.259 | 0.259 | 0.259 | 0.185 | 0.185 | 0.185 | 0.371 | 0.259 | 0.185 |
| | | | n-decyltrimethoxysilane | 28.5 | 28.5 | 28.5 | 28.5 | 28.5 | 28.5 | 28.5 | 28.5 | 28.5 |
| | H/Vi ratio | | | 0.540 | 0.540 | 0.540 | 0.575 | 0.575 | 0.575 | 0.515 | 0.540 | 0.575 |

(continued)

| | | | Example 1 | Example 2 | Example 3 | Example 4 | Example 5 | Example 6 | Coniparative Example 1 | Comparative Example 2 | Comparative Example 3 |
|---|---|---|---|---|---|---|---|---|---|---|---|
| Property of composition | Viscosity (× $10^3$Pa·s) | Shear rate $0.05s^{-1}$ | 10.6 | 4.80 | 3.86 | 12.8 | 5.65 | 2.39 | 15.3 | 14.8 | 13.2 |
| | | Shear rate $0.1s^{-1}$ | 5.90 | 2.61 | 2.18 | 6.10 | 3.25 | 1.50 | 7.60 | 8.10 | 7.20 |
| | | Shear rate $0.4s^{-1}$ | 1.79 | 0.888 | 0.857 | 1.71 | 1.24 | 0.598 | 2.10 | 2.42 | 220 |
| | | Shear rate $1.6s^{-1}$ | 0.549 | 0.399 | 0.437 | 0.449 | 0.451 | 0.238 | 0.727 | 0.725 | 0.668 |
| | | Shear rate $32s^{-1}$ | 0.302 | 0.282 | 0.325 | 0.229 | 0.272 | 0.149 | 0.485 | 0.396 | 0.367 |
| | | Shear rate $6.3s^{-1}$ | 0.167 | 0.204 | 0.242 | 0.117 | 0.164 | 0.094 | 0.341 | 0.248 | 0.202 |
| | Rercing load 1 | Maximum load 1 (gf) | 77.5 | 32.1 | 19.8 | 80.4 | 42.9 | 19.8 | 100 | 107 | 95.5 |
| | | Slope 1-1 | 5.45 | 3.30 | 3.09 | 8.99 | 3.73 | 3.09 | 11.0 | 11.9 | 9.95 |
| | | Slope 1-2 | 11.3 | 4.50 | 3.48 | 11.7 | 5.38 | 3.48 | 13.6 | 14.4 | 13.4 |
| | Curing property | 80°C×8h | A | A | A | B | A | A | A | A | A |
| | | 150°C×6h | A | A | A | B | A | A | A | A | A |
| Property of formed product | Therrral conductivity 1 (W/m·K) | | 14.0 | 17.0 | 21.8 | - | 11.3 | 16.2 | 25.3 | 22.1 | 13.2 |
| | Compressive load (kgf) | | 0.30 | 0.50 | 0.73 | - | 0.44 | 0.60 | 2.13 | 1.84 | 0.60 |
| Physical property of material | Concentration of organopolysiloxane having hydroxyl group (mmol) | | 30.0 | 6.0 | 2.0 | 49.9 | 10.0 | 3.3 | 0.00 | 0.00 | 0.00 |
| | Number of functional groups as hydroxyl groups | | 2 | 2 | 2 | 2 | 2 | 2 | 0 | 0 | 0 |
| | Hydroxyl group concentration (mmol) | | 60.0 | 12.0 | 4.0 | 99.9 | 20.0 | 6.7 | 0.00 | 0.00 | 0.00 |
| | Hydroxyl group concentration 2 (μmol/g) | | 83.3 | 16.7 | 5.6 | 139 | 27.8 | 9.3 | 0.00 | 0.00 | 0.00 |
| | Total specific surface area of polar filler (× $10^3$rn$^2$) | | 33.1 | 33.1 | 33.1 | 33.1 | 33.1 | 33.1 | 33.2 | 33.1 | 33.1 |
| | Hydroxyl group concentration/total specific surface area of polar filler (μrnol/m$^2$) | | 1.81 | 0.362 | 0.121 | 3.016 | 0.603 | 0.201 | 0.00 | 0.00 | 0.00 |
| Improving effect on fluidity | Reference sample for viscosity decrease ratio and decrease ratio | | Comparative Example 1 | | | | | | - | Comparative Example 1 | |
| | Ratio of decrease in maximum load 1 (%) | | 22.6% | 67.9% | 80.2% | 19.7% | 57.1% | 80.2% | - | -6.6% | 4.6% |
| | Ratio of decrease in slope 1-1 (%) | | 50.6% | 70.1% | 72.0% | 18.5% | 66.2% | 72.0% | - | -7.4% | 9.8% |
| | Ratio of decrease in slope 1-2 (%) | | 17.0% | 67.0% | 74.5% | 14.4% | 60.5% | 74.5% | - | -5.5% | 1.9% |
| | Viscosity decrease ratio at shear rate of 0.05 $s^{-1}$ | | 30.3% | 67.9% | 74.7% | 16.3% | 63.0% | 84.3% | - | 3.0% | 13.7% |

(continued)

| | | Example 1 | Example 2 | Example 3 | Example 4 | Example 5 | Example 6 | Coniparative Example 1 | Comparative Example 2 | Comparative Example 3 |
|---|---|---|---|---|---|---|---|---|---|---|
| | Viscosity decrease ratio at shear rate of 0.1 $s^{-1}$ | 22.4% | 65.7% | 71.3% | 19.7% | 57.2% | 80.3% | - | -6.6% | 5.3% |
| | Viscosity decrease ratio at shear rate of 0.4 $s^{-1}$ | 14.6% | 57.7% | 59.2% | 18.5% | 41.0% | 71.6% | - | -15.2% | -4.7% |
| | Viscosity decrease ratio at shear rate of 1.6 $s^{-1}$ | 24.5% | 45.1% | 39.9% | 38.2% | 37.9% | 67.3% | - | 0.2% | 8.1% |
| | Viscosity decrease ratio at shear rate of 3.2 $s^{-1}$ | 37.6% | 41.9% | 33.0% | 52.7% | 43.9% | 69.2% | - | 18.4% | 24.3% |
| | Viscosity decrease ratio at shear rate of 6.3 $s^{-1}$ | 51.0% | 40.3% | 29.1% | 65.6% | 51.9% | 72.4% | - | 27.3% | 40.8% |

[Table 2]

Table 2

| | | | | Comparative Example 4 | Comparative Example 5 | Comparative Example 6 | Comparative Example 7 | Comparative Example 8 | Comparative Example 9 | Comparative Example 10 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|---|---|---|---|
| Blending amount (parts by mass) | Organopolysiloxane (A) | Organopolysiloxane having no hydroxyl group | Alkenyl group-containing organopolysiloxane | 90.9 | 86.4 | 81.8 | 77.3 | 86.4 | 81.8 | 77.3 | 81.8 | 79.1 | 77.3 | 74.5 | 72.7 | 68.2 | 86.4 | 81.8 | 77.3 |
| | | | Hydrogen organopolysiloxane 1 | 9.09 | 8.64 | 8.18 | 7.73 | 8.64 | 8.18 | 7.73 | 8.18 | 7.91 | 7.73 | 7.45 | 7.27 | 6.82 | 8.64 | 8.18 | 7.73 |
| | | | Hydrogen organopolysiloxane 2 | 0.0642 | 0.714 | 0.714 | 0.714 | 0.714 | 0.714 | 0.714 | 0.714 | 0.714 | 0.714 | 0.714 | 0.714 | 0.714 | 0.714 | 0.714 | 0.714 |
| | | | Polydimethylsiloxane 1 | 0.00 | 5.00 | 10.0 | 15.0 | 0.00 | 0.00 | 0.00 | 0.00 | 0.00 | 0.00 | 0.00 | 0.00 | 0.00 | 0.00 | 0.00 | 0.00 |
| | | Organopolysiloxane having hydroxyl group | Hydroxy group-containing organopolysiloxane 1 | 0.00 | 0.00 | 0.00 | 0.00 | 0.00 | 0.00 | 0.00 | 0.00 | 0.00 | 0.00 | 0.00 | 0.00 | 0.00 | 5.0 | 10.0 | 15.0 |
| | | | Hydroxy group-containing organopolysiloxane 4 | 0.00 | 0.00 | 0.00 | 0.00 | 0.00 | 0.00 | 0.00 | 10.0 | 13.0 | 15.0 | 18.0 | 20.0 | 25.0 | 0.00 | 0.00 | 0.00 |
| | | Organopolysiloxane having hydroxyl group at both ends | Hydroxy group-containing organopolysiloxane 6 | 0.00 | 0.00 | 0.00 | 0.00 | 5.00 | 10.0 | 15.0 | 0.00 | 0.00 | 0.00 | 0.00 | 0.00 | 0.00 | 0.00 | 0.00 | 0.00 |
| | Thermally conductive filler (B) | Thermally conductive filler having polar group | Aluminum hydroxide 1 | 290 | 290 | 290 | 290 | 290 | 290 | 290 | 290 | 290 | 290 | 290 | 290 | 290 | 290 | 290 | 290 |
| | Other additive | | Platinum catalyst | 0.353 | 0.353 | 0.334 | 0.316 | 0.353 | 0.334 | 0.316 | 0.334 | 0.323 | 0.316 | 0.304 | 0.297 | 0.278 | 0.353 | 0.334 | 0.316 |
| | | | n-decyltrimethoxysilane | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 |
| Property of composition | H/Vi ratio | | | 0.463 | 0.655 | 0.667 | 0.680 | 0.655 | 0.667 | 0.680 | 0.667 | 0.675 | 0.680 | 0.689 | 0.695 | 0.711 | 0.655 | 0.667 | 0.680 |
| | Viscosity (Pa·s) | | Shear rate $0.05 s^{-1}$ | - | - | - | - | - | - | - | 4099 | 952 | 811 | 737 | 742 | 784 | 787 | 712 | 649 |
| | | | Shear rate $0.1 s^{-1}$ | - | - | - | - | - | - | - | 3437 | 713 | 687 | 539 | 536 | 553 | 586 | 515 | 467 |
| | | | Shear rate $0.4 s^{-1}$ | - | - | - | - | - | - | - | 2417 | 399 | 492 | 288 | 279 | 275 | 324 | 270 | 243 |
| | | | Shear rate $1.6 s^{-1}$ | - | - | - | - | - | - | - | 1700 | 224 | 353 | 154 | 146 | 137 | 180 | 142 | 126 |
| | | | Shear rate $3.2 s^{-1}$ | - | - | - | - | - | - | - | 1425 | 168 | 299 | 113 | 105 | 96.7 | 134 | 102 | 91.0 |
| | | | Shear rate $6.3 s^{-1}$ | - | - | - | - | - | - | - | - | 125 | 253 | 82.4 | 75.7 | 68.2 | 99.4 | 74.1 | 65.5 |
| | Piercing load 2 | Maximum load 2 (gf) | | 614 | 486 | 474 | 486 | 482 | 506 | 510 | 455 | 6.50 | 4.20 | 4.00 | 3.60 | 3.60 | 3.80 | 3.60 | 3.60 |
| | | Maximum load 2-1 (gf) | | 550 | 445 | 436 | 444 | 415 | 421 | 459 | 398 | 4.50 | 3.30 | 3.00 | 2.60 | 2.70 | 2.70 | 2.60 | 2.70 |
| | Curing property | 80°C×8h | | A | A | A | A | A | A | A | A | A | A | A | A | A | A | A | A |
| | | 150°C×6h | | A | A | A | A | A | A | A | A | A | A | A | A | A | A | A | A |
| Property of formed product | Thermal conductivity 2 (W/m·K) | | | 2.82 | 2.77 | 2.65 | 2.59 | 2.40 | 2.57 | 2.67 | 2.45 | 2.53 | 2.67 | 2.74 | 2.75 | 2.86 | 2.40 | 2.54 | 2.67 |
| | Compressive load (kgf) | | | 0.0208 | 8.58 | 8.51 | 8.46 | OL | 15.7 | 11.2 | 10.6 | 8.97 | 7.55 | 6.78 | 6.43 | 5.82 | OL | 11.5 | 6.80 |
| Physical property of material | Concentration of organopolysiloxane having hydroxyl group (mmol) | | | 0.00 | 0.00 | 0.00 | 0.00 | 5.00 | 10.0 | 15.0 | 10.0 | 13.0 | 15.0 | 18.0 | 20.0 | 25.0 | 5.00 | 10.0 | 15.0 |
| | Number of functional groups as hydroxyl groups | | | 0 | 0 | 0 | 0 | 2 | 2 | 2 | 1 | 1 | 1 | 1 | 1 | 1 | 2 | 2 | 2 |
| | Hydroxyl group concentration (mmol) | | | 0.00 | 0.00 | 0.00 | 0.00 | 10.0 | 20.0 | 30.0 | 10.0 | 13.0 | 15.0 | 18.0 | 20.0 | 25.0 | 10.0 | 20.0 | 30.0 |
| | Hydroxyl group concentration 2 (μmol/g) | | | 0.00 | 0.00 | 0.00 | 0.00 | 25.6 | 51.2 | 76.7 | 25.6 | 33.3 | 38.4 | 46.0 | 51.2 | 64.0 | 25.6 | 51.2 | 76.7 |
| | Total specific surface area of polar filler ($\times 10^3 m^2$) | | | 77.1 | 77.1 | 77.1 | 77.1 | 77.1 | 77.1 | 77.1 | 77.1 | 77.1 | 77.1 | 77.1 | 77.1 | 77.1 | 77.1 | 77.1 | 77.1 |
| | Hydroxyl group concentration/total specific surface area of polar filler ($\mu mol/m^2$) | | | 0.00 | 0.00 | 0.00 | 0.00 | 0.130 | 0.259 | 0.389 | 0.130 | 0.169 | 0.194 | 0.233 | 0.259 | 0.324 | 0.130 | 0.259 | 0.389 |
| Improving effect on fluidity | Reference sample for ratio of decrease in piercing load | | | - | Comparative Example 4 | | | | | | | | | | | | | | |
| | Ratio of decrease in maximum load 2 | | | - | 20.8% | 22.8% | 20.8% | 21.5% | 17.6% | 16.9% | 25.8% | 98.9% | 99.3% | 99.3% | 99.4% | 99.4% | 99.4% | 99.4% | 99.4% |
| | Ratio of decrease in maximum load 2-1 | | | - | 19.1% | 20.7% | 19.4% | 24.5% | 23.4% | 16.6% | 27.6% | 99.2% | 99.4% | 99.5% | 99.5% | 99.5% | 99.5% | 99.5% | 99.5% |
| | Reference sample for viscosity decrease ratio | | | - | Comparative Example 4 | | | | | | | | | | | | | | |
| | Viscosity decrease ratio at shear rate of $0.05 s^{-1}$ | | | - | - | - | - | - | - | - | B | A | A | A | A | A | A | A | A |
| | Viscosity decrease ratio at shear rate of $0.1 s^{-1}$ | | | - | - | - | - | - | - | - | B | A | A | A | A | A | A | A | A |
| | Viscosity decrease ratio at shear rate of $0.4 ^{s-1}$ | | | - | - | - | - | - | - | - | B | A | A | A | A | A | A | A | A |
| | Viscosity decrease ratio at shear rate of $1.6 s^{-1}$ | | | - | - | - | - | - | - | - | B | A | A | A | A | A | A | A | A |
| | Viscosity decrease ratio at shear rate of $3.2 s^{-1}$ | | | - | - | - | - | - | - | - | B | A | A | A | A | A | A | A | A |
| | Viscosity decrease ratio at shear rate of $6.3 s^{-1}$ | | | - | - | - | - | - | - | - | - | A | A | A | A | A | A | A | A |

[Table 3]

Table 3

| | | | | Comparative Example 11 | Comparative Example 12 | Comparative Example 13 | Example 16 | Example 17 |
|---|---|---|---|---|---|---|---|---|
| Blending amount (parts by mass) | Organopolysiloxane (A) | Organopolysiloxane having no hydroxyl group | Alkenyl group-containing organopolysiloxane | 90.7 | 77.0 | 77.0 | 77.0 | 77.0 |
| | | | Hydrogen organopolysiloxane 1 | 9.28 | 7.88 | 7.88 | 7.88 | 7.88 |
| | | | Hydrogen organopolysiloxane 2 | 0.0642 | 0.107 | 0.107 | 0.107 | 0.107 |
| | | | Polydimethylsiloxane 1 | 0.00 | 15.0 | 0.00 | 0.00 | 0.00 |
| | | Organopolysiloxane having hydroxyl group | Hydroxy group-containing organopolysiloxane 1 | 0.00 | 0.00 | 0.00 | 0.00 | 15.0 |
| | | | Hydroxy group-containing organopolysiloxane 4 | 0.00 | 0.00 | 0.00 | 15.0 | 0.00 |
| | | Organopolysiloxane having hydroxyl group at both ends | Hydroxy group-containing organopolysiloxane 6 | 0.00 | 0.00 | 15.0 | 0.00 | 0.00 |
| | Thermally conductive filler (B) | Thermally conductive filler having polar group | Aluminum oxide 1 | 495 | 495 | 495 | 495 | 495 |
| | Other additive | | Ratinum catalyst | 0.371 | 0.315 | 0.315 | 0.315 | 0.315 |
| | | | n-decyltrimethoxysilane | 0.00 | 0.00 | 0.00 | 0.00 | 0.00 |

(continued)

| | | | Comparative Example 11 | Comparative Example 12 | Comparative Example 13 | Example 16 | Example 17 |
|---|---|---|---|---|---|---|---|
| Property of composition | H/Vi | | 0.473 | 0.490 | 0.490 | 0.490 | 0.490 |
| | Viscosity (Pa·s) | Shear rate $0.05s^{-1}$ | - | - | 41833 | 9452 | 6619 |
| | | Shear rate $0.1s^{-1}$ | - | - | 23200 | 5256 | 3850 |
| | | Shear rate $0.4s^{-1}$ | - | - | 7141 | 1627 | 1304 |
| | | Shear rate $1.6s^{-1}$ | - | - | 2203 | 505 | 442 |
| | | Shear rate $3.2s^{-1}$ | - | - | 1220 | 280 | 257 |
| | | Shear rate $6.3s^{-1}$ | - | - | 676 | 156 | 149 |
| | Piercing load 2 | Maximum load 2 (gf) | 611 | - | 186 | 13.7 | 7.20 |
| | | Maximum load 2-1 (gf) | 62.7 | 280 | 38.0 | 12.2 | 5.60 |
| | Curing property | 80°C×8h | A | A | A | A | A |
| | | 150°C×6h | A | A | A | A | A |
| Property of formed product | Thermal conductivity 2 (W/m·K) | | 3.20 | 3.10 | 3.00 | 2.90 | 3.20 |
| | Compressive load (kgf) | | 4.2 | 3.9 | 3.9 | 3.9 | 4.0 |
| Physical property of material | Concentration of organopolysiloxane having hydroxyl group (mmol) | | 0.00 | 0.00 | 15.0 | 15.0 | 15.0 |
| | Number of functional groups as hydroxyl groups | | 0 | 0 | 2 | 1 | 2 |
| | Hydroxyl group concentration (mmol) | | 0.00 | 0.00 | 30.0 | 15.0 | 30.0 |
| | Hydroxyl group concentration 2 (μmol/g) | | 0.00 | 0.00 | 50.4 | 25.2 | 50.4 |
| | Alkoxy group concentration (mmol) | | 0.00 | 0.00 | 0.00 | 0.00 | 0.00 |
| | Total specific surface area of polar filler (x $10^3m^2$) | | 1.58 | 1.58 | 1.58 | 1.58 | 1.58 |
| | Hydroxyl group concentration/total specific surface area of polar filler (μmol/$m^2$) | | 0.00 | 0.00 | 18.9 | 9.47 | 18.9 |
| | Alkoxy group concentration/total specific surface area of polar filler (μmol/$m^2$) | | 0.00 | 0.00 | 0.00 | 0.00 | 0.00 |
| | Reference sample for ratio of decrease in piercing load | | - | Comparative Example 11 | | | |
| | Ratio of decrease in maximum load 2 | | - | - | 69.6% | 97.8% | 98.8% |
| | Ratio of decrease in maximum load 2-1 | | - | -346% | 39.4% | 80.5% | 91.1% |

(continued)

| | | Comparative Example 11 | Comparative Example 12 | Comparative Example 13 | Example 16 | Example 17 |
|---|---|---|---|---|---|---|
| Improving effect on fluidity | Reference sample for viscosity decrease ratio | - | Comparative Example 11 | | | |
| | Viscosity decrease ratio at shear rate of 0.05 $s^{-1}$ | - | - | C | A | A |
| | Viscosity decrease ratio at shear rate of 0.1 $s^{-1}$ | - | - | C | A | A |
| | Viscosity decrease ratio at shear rate of 0.4 $s^{-1}$ | - | - | C | A | A |
| | Viscosity decrease ratio at shear rate of 1.6 $s^{-1}$ | - | - | C | A | A |
| | Viscosity decrease ratio at shear rate of 3.2 $s^{-1}$ | - | - | C | A | A |
| | Viscosity decrease ratio at shear rate of 6.3 $s^{-1}$ | - | - | C | A | A |

[Table 4]

Table 4

| | | | | Comparative Example 14 | Comparative Example 15 | Example 18 |
|---|---|---|---|---|---|---|
| Blending amount (parts by mass) | Organopolysiloxane (A) | Organopolysiloxane having no hydroxyl group | Alkenyl group-containing organopolysiloxane | 90.7 | 77.0 | 77.0 |
| | | | Hydrogen organopolysiloxane 1 | 9.28 | 7.88 | 7.88 |
| | | | Hydrogen organopolysiloxane 2 | 0.064 | 0.107 | 0.107 |
| | | | Alkoxysiloxane 1 | 0.00 | 15.0 | 0.00 |
| | | Organopolysiloxane having hydroxyl group | Hydroxy group-containing organopolysiloxane 2 | 0.00 | 0.00 | 15.0 |
| | Thermally conductive filler (B) | Anisotropic filler | Scale-like graphite | 68.0 | 68.0 | 68.0 |
| | Other additive | | Ratinum catalyst | 0.371 | 0.315 | 0.315 |
| | | | n-decyltrimethoxysilane | 0.00 | 0.00 | 0.00 |
| Property of composition | H/Vi | | | 0.473 | 0.490 | 0.490 |
| | Viscosity (Pa·s) | | Shear rate $0.05s^{-1}$ | - | - | - |
| | | | Shear rate $0.1s^{-1}$ | - | - | - |
| | | | Shear rate $0.4s^{-1}$ | - | - | - |
| | | | Shear rate $1.6s^{-1}$ | - | - | - |
| | | | Shear rate $3.2s^{-1}$ | - | - | - |
| | | | Shear rate $6.3s^{-1}$ | - | - | - |
| | Rercing load 2 | Maximum load 2 (gf) | | 44.6 | 40.5 | 35.4 |
| | | Maximum load 2-1 (gf) | | 15.7 | 13.3 | 8.9 |
| | Curing property | 80°Cx8h | | A | A | A |
| | | 150°C×6h | | A | A | A |
| Property of formed product | Thermal conductivity 2 (W/m·K) | | | 2.32 | 2.23 | 2.32 |
| | Compressive load (kgf) | | | 0.17 | 0.16 | 0.17 |

(continued)

| | | Comparative Example 14 | Comparative Example 15 | Example 18 |
|---|---|---|---|---|
| Physical property of material | Concentration of organopolysiloxane having hydroxyl group (mmol) | 0.00 | 0.00 | 30.0 |
| | Number of functional groups as hydroxyl groups | 0 | 0 | 2 |
| | Hydroxyl group concentration (mmol) | 0.00 | 0.00 | 6.00 |
| | Hydroxyl group concentration 2 (μmol/g) | 0.00 | 0.00 | 35.7 |
| | Number of functional groups as alkoxy groups | 0 | 3 | 0 |
| | Alkoxy group concentration (mmol) | 0.00 | 18.0 | 0.00 |
| | Total specific surface area of polar filler (x $10^3 m^2$) | 0.00 | 0.00 | 0.00 |
| | Hydroxyl group concentration/total specific surface area of polar filler (μmol/$m^2$) | - | - | - |
| | Alkoxy group concentration/total specific surface area of polar filler (μmol/$m^2$) | - | - | - |
| Improving effect on fluidity | Reference sample for ratio of decrease in piercing load | - | Comparative Example 14 | |
| | Ratio of decrease in maximum load 2 | - | 9.1% | 20.6% |
| | Ratio of decrease in maximum load 2-1 | - | 15.1% | 43.4% |

[Table 5]

Table 5

| | | | | Comparative Example 16 | Comparative Example 17 | Comparative Example 18 | Example 19 | Example 20 |
|---|---|---|---|---|---|---|---|---|
| Blending amount (parts by mass) | Organopolysiloxane (A) | Organopolysiloxane having no hydroxyl group | Alkenyl group-containing organopolysiloxane | 90.7 | 77.0 | 72.4 | 77.0 | 72.4 |
| | | | Hydrogen organopolysiloxane 1 | 9.28 | 7.88 | 7.41 | 7.88 | 7.41 |
| | | | Hydrogen organopolysiloxane 2 | 0.064 | 0.107 | 0.107 | 0.107 | 0.107 |
| | | | Polydimethylsiloxane 1 | 0.00 | 15.0 | 20.0 | 0.00 | 0.00 |
| | | Organopolysiloxane having hydroxyl group | Hydroxy group-containing organopolysiloxane 2 | 0.00 | 0.00 | 0.00 | 15.0 | 20.0 |
| | Thermally conductive filler (B) | Thermally conductive filler having polar group | Aluminum | 588 | 588 | 588 | 588 | 588 |
| | Other additive | | Platinum catalyst | 0.371 | 0.371 | 0.297 | 0.371 | 0.297 |
| | | | n-decyltrirrethoxysilane | 0.00 | 0.00 | 0.00 | 0.00 | 0.00 |
| Property of composition | H/Vi | | | 0.473 | 0.490 | 0.492 | 0.490 | 0.492 |
| | Viscosity (Pa·s) | | Shear rate $0.05s^{-1}$ | 2240 | - | - | 952 | 703 |
| | | | Shear rate $0.1s^{-1}$ | 1623 | - | - | 529 | 398 |
| | | | Shear rate $0.4s^{-1}$ | 499 | - | - | 213 | 162 |
| | | | Shear rate $1.6s^{-1}$ | 301 | - | - | 133 | 96.5 |
| | | | Shear rate $3.2s^{-1}$ | 393 | - | - | 120 | 85.3 |
| | | | Shear rate $6.3s^{-1}$ | 60.0 | - | - | 111 | 79.1 |
| | Rercing load 2 | Maximum load 2 (gf) | | 8.90 | 12.0 | 7.10 | 3.60 | 2.90 |
| | | Maximum load 2-1 (gf) | | 5.70 | 4.50 | 3.90 | 2.50 | 2.20 |
| | Curing property | 80°C×8h | | A | A | A | A | A |
| | | 150°C×6h | | A | A | A | A | A |

(continued)

| | | Comparative Example 16 | Comparative Example 17 | Comparative Example 18 | Example 19 | Example 20 |
|---|---|---|---|---|---|---|
| Property of formed product | Thermal conductivity 2 (W/m·K) | 4.17 | 4.10 | 4.00 | 4.20 | 4.10 |
| | Compressive load (kgf) | 8.1 | 7.8 | 7.6 | 8.0 | 7.9 |
| Physical property of material | Concentration of organopolysiloxane having hydroxyl group (mmol) | 0.00 | 0.00 | 0.00 | 30.0 | 4.00 |
| | Number of functional groups as hydroxyl groups | 0 | 0 | 0 | 2 | 2 |
| | Hydroxyl group concentration (mmol) | 0.00 | 0.00 | 0.00 | 6.00 | 8.00 |
| | Hydroxyl group concentration 2 (μmol/g) | 0.00 | 0.00 | 0.00 | 8.7 | 11.6 |
| | Total specific surface area of polar filler (x $10^3 m^2$) | 0.372 | 0.372 | 0.372 | 0.372 | 0.372 |
| | Hydroxyl group concentration/total specific surface area of polar filler (μmol/$m^2$) | 0.00 | 0.00 | 0.00 | 16.1 | 21.5 |
| Improving effect on fluidity | Reference sample for ratio of decrease in piercing load | - | Comparative Example 16 | | | |
| | Ratio of decrease in maximum load 2 | - | -34.8% | 20.2% | 59.6% | 67.4% |
| | Ratio of decrease in maximum load 2-1 | - | 21.1% | 31.6% | 56.1% | 61.4% |
| | Viscosity decrease ratio at shear rate of 0.05 $s^{-1}$ | - | - | - | 57.5% | 68.6% |
| | Viscosity decrease ratio at shear rate of 0.1 $s^{-1}$ | - | - | - | 67.4% | 75.5% |
| | Viscosity decrease ratio at shear rate of 0.4 $^{s-1}$ | - | - | - | 57.3% | 67.5% |
| | Viscosity decrease ratio at shear rate of 1.6 $s^{-1}$ | - | - | - | 55.9% | 67.9% |
| | Viscosity decrease ratio at shear rate of 3.2 $^{s-1}$ | - | - | - | 69.5% | 78.3% |
| | Viscosity decrease ratio at shear rate of 6.3 $^{s-1}$ | - | - | - | 81.4% | 86.8% |

[Table 6]

Table 6

| | | | | Comparative Example 19 | Comparative Example 20 | Example 21 |
|---|---|---|---|---|---|---|
| Blending amount (parts by mass) | Organopolysiloxane (A) | Organopolysiloxane having no hydroxyl group | Alkenyl group-containing organopolysiloxane | 90.7 | 77.0 | 77.0 |
| | | | Hydrogen organopolysiloxane 1 | 9.28 | 7.88 | 7.88 |
| | | | Hydrogen organopolysiloxane 2 | 0.0642 | 0.107 | 0.107 |
| | | | Alkoxysiloxane 1 | 0.00 | 15.0 | 0.00 |
| | | Organopolysiloxane having hydroxyl group | Hydroxy group-containing organopolysiloxane 2 | 0.00 | 0.00 | 15.0 |
| | Thermally conductive filler (B) | Anisotropic filler | Boron nitride | 129 | 129 | 129 |
| | Other additive | | Platinum catalyst | 0.371 | 0.315 | 0.315 |
| | | | n-decyltrimethoxysilane | 0.00 | 0.00 | 0.00 |
| Property of composition | H/Vi | | | 0.473 | 0.490 | 0.490 |
| | Viscosity (Pa·s) | | Shear rate $0.05s^{-1}$ | - | - | - |
| | | | Shear rate $0.1s^{-1}$ | - | - | - |
| | | | Shear rate $0.4s^{-1}$ | - | - | - |
| | | | Shear rate $1.6s^{-1}$ | - | - | - |
| | | | Shear rate $3.2s^{-1}$ | - | - | - |
| | | | Shear rate $6.3s^{-1}$ | - | - | - |
| | Piercing load 2 | Maximum load 2 (gf) | | 131.0 | 79.0 | 47.9 |
| | | Maximum load 2-1 (gf) | | 35.6 | 22.3 | 15.5 |
| | Curing property | 80°C×8h | | A | A | A |
| | | 150°C×6h | | A | A | A |
| Property of formed product | Thermal conductivity 2 (W/m·K) | | | 2.26 | 2.76 | 2.82 |
| | Compressive load (kgf) | | | 0.67 | 0.85 | 0.80 |

(continued)

| | | Comparative Example 19 | Comparative Example 20 | Example 21 |
|---|---|---|---|---|
| Physical property of material | Concentration of organopolysiloxane having hydroxyl group (mmol) * | 0.00 | 0.00 | 3.00 |
| | Number of functional groups as hydroxyl groups | 0 | 0 | 2 |
| | Hydroxyl group concentration (mmol) | 0.00 | 0.00 | 6.00 |
| | Hydroxyl group concentration 2 (μmol/g) | 0.00 | 0.00 | 26.16 |
| | Number of functional groups as alkoxy groups | 0 | 3 | 0 |
| | Alkoxy group concentration (mmol) | 0.00 | 18.0 | 0.00 |
| | Total specific surface area of polar filler ($\times 10^3 m^2$) | 0.00 | 0.00 | 0.00 |
| | Hydroxyl group concentration/total specific surface area of polar filler ($\mu mol/m^2$) | - | - | - |
| | Alkoxy group concentration/total specific surface area of polar filler ($\mu rnol/m^2$) | - | - | - |
| Improving effect on fluidity | Reference sample for ratio of decrease in piercing load | - | Comparative Example 19 | |
| | Ratio of decrease in maximum load 2 | - | 39.7% | 63.4% |
| | Ratio of decrease in maximum load 2-1 | - | 37.4% | 56.5% |

[Table 7]

Table 7

| | | | | Comparative Example 21 | Example 22 | Comparative Example 22 | Example 23 |
|---|---|---|---|---|---|---|---|
| Blending amount (parts by mass) | Organopolysiloxane (A) | Organopolysiloxane having no hydroxyl group | Alkenyl group-containing organopolysiloxane | 90.7 | 77.0 | 90.7 | 77.0 |
| | | | Hydrogen organopolysiloxane 1 | 9.28 | 7.88 | 9.28 | 7.88 |
| | | | Hydrogen organopolysiloxane 2 | 0.064 | 0.107 | 0.064 | 0.107 |
| | | Organopolysiloxane having hydroxyl group | Hydroxy group-containing organopolysiloxane 2 | 0.00 | 15.0 | 0.00 | 15.0 |
| | Thermally conductive filler (B) | Thermally conductive filler having polar group | Aluminum hydroxide 1 | 48.0 | 48.0 | 0.00 | 0.00 |
| | | | Aluminum hydroxide 2 | 341 | 341 | 0.00 | 0.00 |
| | | | Aluminum oxide 1 | 0.00 | 0.00 | 189 | 189 |
| | | | Aluminum oxide 2 | 0.00 | 0.00 | 567 | 567 |
| | | Anisotropic filler | Scale-like graphite | 39.0 | 39.0 | 42.0 | 42.0 |
| | Other additive | | Platinum catalyst | 0.371 | 0.315 | 0.371 | 0.315 |
| | | | n-decyltrirrethoxysilane | 0.00 | 0.00 | 0.00 | 0.00 |
| Property of composition | H/Vi | | | 0.53 | 0.54 | 0.53 | 0.54 |
| | Viscosity (Pa·s) | | Shear rate $0.05s^{-1}$ | - | 1507 | - | 1687 |
| | | | Shear rate $0.1s^{-1}$ | - | 1303 | - | 1507 |
| | | | Shear rate $0.4s^{-1}$ | - | 996 | - | 753 |
| | | | Shear rate $1.6s^{-1}$ | - | 826 | - | 383 |
| | | | Shear rate $3.2s^{-1}$ | - | 756 | - | 287 |
| | | | Shear rate $6.3s^{-1}$ | - | 664 | - | 226 |

(continued)

| | | | Comparative Example 21 | Example 22 | Comparative Example 22 | Example 23 |
|---|---|---|---|---|---|---|
| | Piercing load 2 | Maximum load 2 (gf) | 608 | 11.8 | 607 | 5.00 |
| | | Maximum load 2-1 (gf) | 165 | 3.10 | 94.4 | 3.60 |
| | Curing property | 80°Cx8h | A | A | A | A |
| | | 150°C×6hr | A | A | A | A |
| Property of formed product | Thermal conductivity 2 (W/m·K) | | 3.70 | 3.72 | 4.11 | 4.10 |
| | Compressive load (kgf) | | 4.29 | 4.2 | 2.7 | 2.5 |
| Physical property of material | Concentration of organopolysiloxane having hydroxyl group (mmol) | | 0.00 | 30.0 | 0.00 | 30.0 |
| | Number of functional groups as hydroxyl groups | | 0 | 2 | 0 | 2 |
| | Hydroxyl group concentration (mmol) | | 0.00 | 6.00 | 0.00 | 6.00 |
| | Hydroxyl group concentration 2 (μmol/g) | | 0.00 | 11.4 | 0.00 | 6.7 |
| | Total specific surface area of polar filler (× $10^3 rn^2$) | | 84.8 | 84.8 | 0.945 | 0.945 |
| | Hydroxyl group concentration/total specific surface area of polar filler (μrnol/$m^2$) | | 0.00 | 0.0707 | 0.00 | 6.35 |
| Improving effect on fluidity | Reference sample for ratio of decrease in piercing load | | - | Comparative Example 21 | - | Comparative Example 22 |
| | Ratio of decrease in maximum load 2 | | - | 98.1% | - | 99.2% |
| | Ratio of decrease in maximum load 2-1 | | - | 99.5% | - | 96.2% |
| | Viscosity decrease ratio at shear rate of 0.05 $s^{-1}$ | | - | A | - | A |
| | Viscosity decrease ratio at shear rate of 0.1 $s^{-1}$ | | - | A | - | A |
| | Viscosity decrease ratio at shear rate of 0.4 $^{s-1}$ | | - | A | - | A |
| | Viscosity decrease ratio at shear rate of 1.6 $s^{-1}$ | | - | A | - | A |
| | Viscosity decrease ratio at shear rate of 3.2 $^{s-1}$ | | - | A | - | A |
| | Viscosity decrease ratio at shear rate of 6.3 $s^{-1}$ | | - | A | - | A |

[Table 8]

Table 8

| | | | | Comparative Example 23 | Comparative Example 24 | Example 24 | Example 25 | Example 26 |
|---|---|---|---|---|---|---|---|---|
| Blending amount (parts by mass) | Polyorganosiloxane (A) | Addition reaction type silicone | Alkenyl group-containing organopolysiloxane | 90.6 | 54.2 | 54.2 | 54.2 | 54.2 |
| | | | Hydrogen organopolysiloxane 1 | 9.28 | 5.55 | 5.55 | 5.55 | 5.55 |
| | | | Hydrogen organopolysiloxane 2 | 0.0785 | 0.213 | 0.213 | 0.213 | 0.213 |
| | | Fluorescent polysiloxane | Perylene dispersant | 0.00 | 0.00 | 0.00 | 10.0 | 0.00 |
| | | | Pyrene dispersant 1 | 0.00 | 0.00 | 0.00 | 0.00 | 10.0 |
| | | | Pyrene dispersant 2 | 0.00 | 0.00 | 10.0 | 0.00 | 0.0 |
| | | Organopolysiloxane having alkoxy group | Alkoxysiloxane 1 | 0.00 | 40.0 | 0.00 | 0.00 | 0.00 |
| | | Organopolysiloxane having hydroxyl group | Hydroxy group-containing organopolysiloxane 2 | 0.00 | 0.00 | 30.0 | 30.0 | 30.0 |
| | Thermally conductive filler (B) | Thermally conductive filler having π electron | Graphitized carbon fiber | 142.7 | 142.2 | 142.3 | 142.3 | 142.3 |
| | | | Scale-like graphite | 14.3 | 14.2 | 14.2 | 14.2 | 14.2 |
| | | Thermally conductive filler having no π electron | Aluminum hydroxide 1 | 21.4 | 21.3 | 21.3 | 21.3 | 21.3 |
| | | | Aluminum hydroxide 2 | 128 | 128 | 128 | 128 | 128 |
| | | | Aluminum oxide 1 | 71.4 | 71.1 | 71.1 | 71.1 | 71.1 |
| | | | Aluminum oxide 2 | 214 | 213 | 213 | 213 | 213 |
| | Other additive | Platinum catalyst | | 0.52 | 0.312 | 0.312 | 0.312 | 0.312 |
| | | n-decyltrimethoxysilane | | 28.5 | 28.4 | 28.5 | 28.5 | 28.5 |
| | H/Vi | | | 0.477 | 0.555 | 0.555 | 0.555 | 0.555 |
| | Curing property | | 80°C×8h | A | A | A | A | A |
| | | | 150°C×6h | A | A | A | A | A |

(continued)

| | | | Comparative Example 23 | Comparative Example 24 | Example 24 | Example 25 | Example 26 |
|---|---|---|---|---|---|---|---|
| Property of composition | Viscosity $\times 10^3$(Pa·s) | Shear rate $1\times10^4$ $s^{-1}$ | 2689 | 1547 | 1237 | 704 | 1127 |
| | | Shear rate 0.1 $s^{-1}$ | 6.3 | 3.7 | 3.5 | 2.6 | 3.5 |
| | | Viscosity ratio | 427 | 421 | 357 | 276 | 326 |
| | Piercing load 1 | Maximum load 1 (gf) | 159.4 | 124.5 | 51.7 | 36.8 | 39.3 |
| | | Slope 1-1 | 13.7 | 8.43 | 3.39 | 3.27 | 3.03 |
| | | Slope 1-2 | 24.3 | 10.1 | 9.60 | 5.78 | 6.20 |
| Property of cured product | Fluorescence spectrum | Wavelength of maximum 1 on short-w avelength side | None | None | 375 | 445 | 375 |
| | | Wavelength of maximum 2 on long-w avelength side | None | None | 480 | 550 | 480 |
| | | Strength ratio of maximum 1 and maximum 2 | None | None | 0.512 | 0.068 | 0.530 |
| | Thermal conductivity 1 (W/m K) | | 17.5 | 16.0 | 16.9 | 20.3 | 17.7 |
| | Compressive load (kgf) | | 0.50 | 0.67 | 0.42 | 0.57 | 0.53 |
| Physical property of material | Total specific surface area of thermally conductive filler having $\pi$ electron ($m^2$) | | 193 | 193 | 193 | 193 | 193 |
| | Total w eight of thermally conductive filler having $\pi$ electron (g) | | 157 | 156 | 157 | 157 | 157 |
| | Amount of fluorescent polysiloxane/total specific surface area of thermally conductive filler having $\pi$ electron ($mg/m^2$) | | 0 | 0 | 51.9 | 51.9 | 51.9 |
| | Amount of fluorescent polysiloxane/total w eight of thermally conductive filler having $\pi$ electron (-) | | 0.00 | 0.00 | 0.0639 | 0.0639 | 0.0639 |
| | Concentration of organopolysiloxane having hydroxyl group (mmol) * | | 0.00 | 0.00 | 6.00 | 6.00 | 6.00 |
| | Number of functional groups as hydroxyl groups | | 0 | 0 | 2 | 2 | 2 |
| | Hydroxyl group concentration (mmol) | | 0.00 | 0.00 | 12.0 | 12.0 | 12.0 |
| | Hydroxyl group concentration 2 ($\mu$mol/g) | | 0.00 | 0.00 | 16.7 | 16.7 | 16.7 |
| | Number of functional groups as alkoxy groups | | 0 | 3 | 0 | 0 | 0 |

(continued)

| | | Comparative Example 23 | Comparative Example 24 | Example 24 | Example 25 | Example 26 |
|---|---|---|---|---|---|---|
| | Alkoxy group concentration (mmol) | 0.00 | 48.1 | 0.00 | 0.00 | 0.00 |
| | Total specific surface area of polar filler ($\times 10^3 m^2$) | 33.2 | 33.1 | 33.1 | 33.1 | 33.1 |
| | Hydroxyl group concentration/total specific surface area of polar filler ($\mu mol/m^2$) | 0.00 | 0.00 | 0.363 | 0.363 | 0.363 |
| | Alkoxy group concentration/total specific surface area of polar filler ($\mu mol/m^2$) | 0.00 | 1.45 | 0.00 | 0.00 | 0.00 |
| Improving effect on fluidity | Reference sample for viscosity decrease ratio and decrease ratio | - | Comparative Example 23 | | | |
| | Viscosity decrease ratio at shear rate of $1 \times 10^4 s^{-1}$ (%) | - | 42% | 54% | 74% | 58% |
| | Viscosity decrease ratio at shear rate of $0.1 s^{-1}$ (%) | - | 42% | 45% | 60% | 45% |
| | Reference sample for ratio of decrease in piercing load | | Comparative Example 23 | | | |
| | Ratio of decrease in maximum load 1 (%) | - | 22% | 68% | 77% | 75% |
| | Ratio of decrease in slope 1-1 (%) | - | 38% | 75% | 76% | 78% |
| | Ratio of decrease in slope 1-2 (%) | - | 58% | 60% | 76% | 74% |

[Table 9-1]

Table 9-1

| | | | | Comparative Example 25 | Example 27 | Example 28 | Example 29 | Example 30 | Example 31 | Example 32 | Example 33 |
|---|---|---|---|---|---|---|---|---|---|---|---|
| Blending amount (parts by mass) | Organopolysiloxane (A) | Addition reaction type silicone | Alkenyl group-containing organopolysiloxane | 90.7 | 54.2 | 54.2 | 54.2 | 54.2 | 54.2 | 54.3 | 54.2 |
| | | | Hydrogen organopolysiloxane 1 | 9.28 | 5.55 | 5.55 | 5.55 | 5.55 | 5.55 | 5.56 | 5.55 |
| | | | Hydrogen organopolysiloxane 2 | 0.064 | 0.178 | 0.178 | 0.178 | 0.178 | 0.178 | 0.178 | 0.178 |
| | | Fluorescent polysiloxane | Perylene dispersant | 0.00 | 0.00 | 1.00 | 2.00 | 4.00 | 8.01 | 10.0 | 12.0 |
| | | | Pyrene dispersant 1 | 0.00 | 0.00 | 0.00 | 0.00 | 0.00 | 0.00 | 0.00 | 0.00 |
| | | Organopolysiloxane having alkoxy group | Alkoxysiloxane 1 | 0.00 | 0.00 | 0.00 | 0.00 | 0.00 | 0.00 | 0.00 | 0.00 |
| | | Organopolysiloxane having hydroxyl group | Hydroxy group-containing organopolysiloxane 1 | 0.00 | 0.00 | 0.00 | 0.00 | 0.00 | 0.00 | 0.00 | 0.00 |
| | | | Hydroxy group-containing organopolysiloxane 2 | 0.00 | 0.00 | 0.00 | 0.00 | 0.00 | 0.00 | 0.00 | 0.00 |
| | | | Hydroxy group-containing organopolysiloxane 3 | 0.0 | 40.0 | 39.0 | 38.0 | 36.0 | 32.0 | 30.0 | 28.0 |

(continued)

| | | | | Comparative Example 25 | Example 27 | Example 28 | Example 29 | Example 30 | Example 31 | Example 32 | Example 33 |
|---|---|---|---|---|---|---|---|---|---|---|---|
| | Thermally conductive filler (B) | Thermally conductive filler having π electron | Graphitized carbon fiber 2 | 157 | 157 | 157 | 157 | 157 | 157 | 157 | 157 |
| | | | Scale-like graphite | 17.8 | 17.8 | 17.8 | 17.8 | 17.8 | 17.8 | 17.8 | 17.8 |
| | | Thermally conductive filler no π electron | Aluminum hydroxide 2 | 71.4 | 71.2 | 71.2 | 71.2 | 71.2 | 71.2 | 71.3 | 71.2 |
| | | | Aluminum oxide 1 | 89.2 | 89.0 | 89.0 | 89.0 | 89.0 | 89.0 | 89.1 | 89.0 |
| | | | Aluminum oxide 2 | 314 | 313 | 313 | 313 | 313 | 313 | 314 | 313 |
| | Other additive | Ratinum catalyst | | 0.371 | 0.222 | 0.222 | 0.222 | 0.222 | 0.222 | 0.222 | 0.222 |
| | | n-decyltrimethoxysilane | | 21.4 | 21.4 | 21.4 | 21.4 | 21.4 | 21.4 | 21.4 | 21.4 |
| Property of composition | H/Vi | | | 0.473 | 0.538 | 0.538 | 0.538 | 0.538 | 0.538 | 0.538 | 0.538 |
| | Curing property | | 80°C×8h | A | A | A | A | A | A | A | A |
| | | | 150°C×6h | A | A | A | A | A | A | A | A |
| | Viscosity ×103(Pa·s) | | Shear rate 1 ×$10^4$ $s^{-1}$ | 4966 | 3041 | 1447 | 889 | 462 | 418 | 543 | 790 |
| | | | Shear rate 0.1 $s^{-1}$ | 12.1 | 9.92 | 4.98 | 4.05 | 2.29 | 2.96 | 2.62 | 3.27 |
| | | | Viscosity ratio | 411 | 307 | 290 | 220 | 202 | 141 | 207 | 242 |
| | Rercing load 1 | | Maximum load 1 (gf) | 294 | 167 | 117 | 114 | 123 | 64.1 | 93.4 | 71.2 |
| | | | Slope 1-1 | 21.5 | 12.3 | 7.34 | 5.35 | 4.99 | 4.11 | 4.37 | 3.86 |
| | | | Slope 1-2 | 44.7 | 23.6 | 15.9 | 13.8 | 12.2 | 9.30 | 13.6 | 9.31 |

(continued)

| | | | Comparative Example 25 | Example 27 | Example 28 | Example 29 | Example 30 | Example 31 | Example 32 | Example 33 |
|---|---|---|---|---|---|---|---|---|---|---|
| Property of cured product | Fluorescence spectrum | Wavelength of maximum 1 on short-wavelength side | None | None | 445 | 445 | 445 | 445 | 445 | 445 |
| | | Wavelength of maximum 2 on long-wavelength side | None | None | 550 | 550 | 550 | 550 | 550 | 550 |
| | | Strength ratio of maximum 1 and maximum 2 | None | None | 0.0111 | 0.0158 | 0.0253 | 0.0443 | 0.0679 | 0.0633 |
| | Thermal conductivity 1 (W/m·K) | | 18.1 | 23.0 | 25.4 | 24.0 | 24.0 | 16.8 | 18.3 | 18.9 |
| | Conpressive load (kgf) | | 0.54 | 0.88 | 1.2 | 1.2 | 0.78 | 0.38 | 0.42 | 0.50 |
| Physical property of material | Total specific surface area of thermally conductive filler having π electron ($m^2$) | | 244 | 243 | 243 | 243 | 243 | 243 | 244 | 243 |
| | Total w eight of thermally conductive filler having π electron (g) | | 175 | 174 | 174 | 174 | 174 | 174 | 175 | 174 |
| | Amount of fluorescent polysiloxane/total specific surface area of thermally conductive filler having π electron ($mg/m^2$) | | 0.00 | 0.00 | 4.12 | 8.23 | 16.5 | 32.9 | 41.0 | 49.4 |
| | Amount of fluorescent polysiloxane/total w eight of thermally conductive filler having π electron (-) | | 0.000 | 0.000 | 0.006 | 0.011 | 0.023 | 0.046 | 0.057 | 0.069 |
| | Concentration of organopolysiloxane having hydroxyl group (mmol) | | 0.00 | 2.67 | 2.60 | 2.54 | 2.40 | 2.14 | 2.00 | 1.87 |
| | Number of functional groups as hydroxyl groups | | 0 | 2 | 2 | 2 | 2 | 2 | 2 | 2 |
| | Hydroxyl group concentration (mmol) | | 0.00 | 5.34 | 5.20 | 5.07 | 4.80 | 4.27 | 3.99 | 3.74 |
| | Hydroxyl group concentration 2 (μmol/g) | | 0.00 | 6.9 | 6.8 | 6.6 | 6.2 | 5.6 | 5.2 | 4.9 |
| | Number of functional groups as alkoxy groups | | 0 | 0 | 0 | 0 | 0 | 0 | 0 | 0 |
| | Alkoxy group concentration (mmol) | | 0.00 | 0.00 | 0.00 | 0.00 | 0.00 | 0.00 | 0.00 | 0.00 |
| | Total specific surface area of polar filler ($\times 10^3 m^2$) | | 15.6 | 15.5 | 15.5 | 15.5 | 15.5 | 15.5 | 15.5 | 15.5 |
| | Hydroxyl group concentration/total specific surface area of polar filler ($\mu mol/m^2$) | | 0.00 | 0.344 | 0.335 | 0.327 | 0.310 | 0.275 | 0.257 | 0.241 |

(continued)

| | | Comparative Example 25 | Example 27 | Example 28 | Example 29 | Example 30 | Example 31 | Example 32 | Example 33 |
|---|---|---|---|---|---|---|---|---|---|
| | Alkoxy group concentration/total specific surface area of polar filler (μmol/$m^2$) | 0.00 | 0.00 | 0.00 | 0.00 | 0.00 | 0.00 | 0.00 | 0.00 |
| Improving effect on fluidity | Reference sample for viscosity decrease ratio and decrease ratio | - | Comparative Example 25 | | | | | | |
| | Viscosity decrease ratio at shear rate of $1 \times 10^{-4}$ $s^{-1}$ (%) | - | 38.8% | 70.9% | 82.1% | 90.7% | 91.6% | 89.1% | 84.1% |
| | Viscosity decrease ratio at shear rate of 0.1 $s^{-1}$ (%) | - | 17.8% | 58.7% | 66.5% | 81.0% | 75.5% | 78.3% | 72.9% |
| | Reference sample for ratio of decrease in piercing load | - | Comparative Example 25 | | | | | | |
| | Ratio of decrease in maximum load 1 (%) | - | 43.3% | 60.2% | 61.1% | 58.3% | 78.2% | 68.2% | 75.8% |
| | Ratio of decrease in slope 1-1 (%) | - | 42.7% | 65.8% | 75.1% | 76.7% | 80.8% | 79.6% | 82.0% |
| | Ratio of decrease in slope 1-2 (%) | - | 47.1% | 64.4% | 69.2% | 72.6% | 79.2% | 69.5% | 79.2% |

[Table 9-2]

Table 9-2

| | | | | Comparative Example 25 | Example 34 | Example 35 | Example 36 | Example 37 | Example 38 | Example 39 |
|---|---|---|---|---|---|---|---|---|---|---|
| Blending amount (parts by mass) | Organopolysiloxane (A) | Addition reaction type silicone | Alkenyl group-containing organopolysiloxane | 90.7 | 54.2 | 54.2 | 54.2 | 54.3 | 54.2 | 54.2 |
| | | | Hydrogen organopolysiloxane 1 | 9.28 | 5.55 | 5.55 | 5.55 | 5.56 | 5.55 | 5.55 |
| | | | Hydrogen organopolysiloxane 2 | 0.064 | 0.178 | 0.178 | 0.178 | 0.178 | 0.178 | 0.178 |
| | | Fluorescent polysiloxane | Perylene dispersant | 0.00 | 16.0 | 20.0 | 24.0 | 30.0 | 32.0 | 36.0 |
| | | | Pyrene dispersant 1 | 0.00 | 0.00 | 0.00 | 0.00 | 0.00 | 0.00 | 0.00 |
| | | Organopolysiloxane having alkoxy group | Alkoxysiloxane 1 | 0.00 | 0.00 | 0.00 | 0.00 | 0.00 | 0.00 | 0.00 |
| | | Organopolysiloxane having hydroxyl group | Hydroxy group-containing organopolysiloxane 1 | 0.00 | 0.00 | 0.00 | 0.00 | 0.00 | 0.00 | 0.00 |
| | | | Hydroxy group-containing organopolysiloxane 2 | 0.00 | 0.00 | 0.00 | 0.00 | 0.00 | 0.00 | 0.00 |
| | | | Hydroxy group-containing organopolysiloxane 3 | 0.0 | 24.0 | 20.0 | 16.0 | 10.0 | 8.01 | 4.00 |
| | Thermally conductive filler (B) | Thermally conductive filler having π electron | Graphitized carbon fiber 2 | 157 | 157 | 157 | 157 | 157 | 157 | 157 |
| | | | Scale-like graphite | 17.8 | 17.8 | 17.8 | 17.8 | 17.8 | 17.8 | 17.8 |
| | | Thermally conductive filler having no π electron | Aluminum hydroxide 2 | 71.4 | 71.2 | 71.2 | 71.2 | 71.3 | 71.2 | 71.2 |
| | | | Aluminum oxide 1 | 89.2 | 89.0 | 89.0 | 89.0 | 89.1 | 89.0 | 89.0 |
| | | | Aluminum oxide 2 | 314 | 313 | 313 | 313 | 314 | 313 | 313 |
| | Other additive | Ratinum catalyst | | 0.371 | 0.222 | 0.222 | 0.222 | 0.222 | 0.222 | 0.222 |
| | | n-decyltrimethoxysilane | | 21.4 | 21.4 | 21.4 | 21.4 | 21.4 | 21.4 | 21.4 |
| | H/Vi | | | 0.473 | 0.538 | 0.538 | 0.538 | 0.538 | 0.538 | 0.538 |

(continued)

| | | | Comparative Example 25 | Example 34 | Example 35 | Example 36 | Example 37 | Example 38 | Example 39 |
|---|---|---|---|---|---|---|---|---|---|
| Property of composition | Curing property | 80°Cx8h | A | A | A | A | A | A | A |
| | | 150°C×6h | A | A | A | A | A | A | A |
| | Viscosity $\times 10^3$(Pa·s) | Shear rate 1 $\times 10^{-4}$ $s^{-1}$ | 4966 | 491 | 505 | 1125 | 1013 | 877 | 259 |
| | | Shear rate 0.1 $s^{-1}$ | 12.1 | 2.45 | 2.62 | 4.64 | 3.71 | 3.52 | 2.32 |
| | | Viscosity ratio | 411 | 201 | 193 | 243 | 273 | 249 | 112 |
| | Piercing load 1 | Maximum load 1 (gf) | 294 | 66.6 | 84.6 | 73.5 | 131 | 106 | 106 |
| | | Slope 1-1 | 21.5 | 3.54 | 3.91 | 4.22 | 1.05 | 5.89 | 5.62 |
| | | Slope 1-2 | 44.7 | 8.87 | 11.1 | 11.2 | 12.9 | 14.4 | 14.1 |
| Property of cured product | Fluorescence spectrum | Wavelength of maximum 1 on short-wavelength side | None | 445 | 445 | 445 | 445 | 445 | 445 |
| | | Wavelength of maximum 2 on long-w avelength side | None | 550 | 550 | 550 | 550 | 550 | 550 |
| | | Strength ratio of maximum 1 and maximum 2 | None | 0.0823 | 0.0878 | 0.120 | 0.148 | 0.158 | 0.177 |
| | Thermal conductivity 1 (W/m·K) | | 18.1 | 21.2 | 21.3 | 20.7 | 21.6 | 20.0 | 21.6 |
| | Compressive load (kgf) | | 0.54 | 0.80 | 1.0 | 1.0 | 0.86 | 0.83 | 0.92 |
| Physical property of material | Total specific surface area of thermally conductive filler having π electron ($m^2$) | | 244 | 243 | 243 | 243 | 244 | 243 | 243 |
| | Total weight of thermally conductive filler having π electron (g) | | 175 | 174 | 174 | 174 | 175 | 174 | 174 |
| | Amount of fluorescent polysiloxane/total specific surface area of thermally conductive filler having π electron ($mg/m^2$) | | 0.00 | 65.9 | 82.3 | 98.8 | 123 | 132 | 148 |
| | Amount of fluorescent polysiloxane/total w eight of thermally conductive filler having π electron (-) | | 0.000 | 0.092 | 0.115 | 0.138 | 0.172 | 0.184 | 0.207 |
| | Concentration of organopolysiloxane having hydroxyl group (mmol) | | 0.00 | 1.60 | 1.33 | 1.07 | 0.67 | 0.53 | 0.27 |
| | Number of functional groups as hydroxyl groups | | 0 | 2 | 2 | 2 | 2 | 2 | 2 |

(continued)

| | | Comparative Example 25 | Example 34 | Example 35 | Example 36 | Example 37 | Example 38 | Example 39 |
|---|---|---|---|---|---|---|---|---|
| | Hydroxyl group concentration (mmol) | 0.00 | 3.20 | 2.67 | 2.14 | 1.33 | 1.07 | 0.534 |
| | Hydroxyl group concentration 2 (μmol/g) | 0.00 | 4.2 | 3.5 | 2.8 | 1.7 | 1.4 | 0.69 |
| | Number of functional groups as alkoxy groups | 0 | 0 | 0 | 0 | 0 | 0 | 0 |
| | Alkoxy group concentration (mmol) | 0.00 | 0.00 | 0.00 | 0.00 | 0.00 | 0.00 | 0.00 |
| | Total specific surface area of polar filler ($\times 10^3 rn^2$) | 15.6 | 15.5 | 15.5 | 15.5 | 15.5 | 15.5 | 15.5 |
| | Hydroxyl group concentration/total specific surface area of polar filler ($\mu rnol/m^2$) | 0.00 | 0.206 | 0.172 | 0.138 | 0.086 | 0.069 | 0.034 |
| | Alkoxy group concentration/total specific surface area of polar filler ($\mu mol/m^2$) | 0.00 | 0.00 | 0.00 | 0.00 | 0.00 | 0.00 | 0.00 |
| Improving effect on fluidity | Reference sample for viscosity decrease ratio and decrease ratio | - | Comparative Example 25 | | | | | |
| | Viscosity decrease ratio at shear rate of $1 \times 10^{-4}$ $s^{-1}$ (%) | - | 90.1% | 89.8% | 77.4% | 79.6% | 82.3% | 94.8% |
| | Viscosity decrease ratio at shear rate of 0.1 $s^{-1}$ (%) | - | 79.7% | 78.3% | 61.6% | 69.3% | 70.9% | 80.8% |
| | Reference sample for ratio of decrease in piercing load | - | Comparative Example 25 | | | | | |
| | Ratio of decrease in maximum load 1 (%) | - | 77.3% | 71.2% | 75.0% | 55.5% | 64.0% | 64.0% |
| | Ratio of decrease in slope 1-1 (%) | - | 83.5% | 81.8% | 80.3% | 95.1% | 72.5% | 73.8% |
| | Ratio of decrease in slope 1-2 (%) | - | 80.2% | 75.1% | 75.0% | 71.1% | 67.8% | 68.3% |

[Table 10-1]

Table 10-1

| | | | | Comparative Example 25 | Example 40 | Example 41 | Example 42 | Example 43 | Example 44 | Example 45 | Example 46 |
|---|---|---|---|---|---|---|---|---|---|---|---|
| Blending amount (parts by mass) | Organopolysiloxane (A) | Addition reaction type silicone | Alkenyl group-containing organopolysiloxane | 90.7 | 54.2 | 54.2 | 54.2 | 54.2 | 54.3 | 54.2 | 54.2 |
| | | | Hydrogen organopolysiloxane 1 | 9.28 | 5.55 | 5.55 | 5.55 | 5.55 | 5.56 | 5.55 | 5.55 |
| | | | Hydrogen organopolysiloxane 2 | 0.064 | 0.178 | 0.178 | 0.178 | 0.178 | 0.178 | 0.178 | 0.178 |
| | | Fluorescent polysiloxane | Perylene dispersant | 0.00 | 0.00 | 0.00 | 0.00 | 0.00 | 0.00 | 0.00 | 0.00 |
| | | | Pyrene dispersant 1 | 0.00 | 1.00 | 2.00 | 4.00 | 8.01 | 10.0 | 12.0 | 16.0 |
| | | Organopolysiloxane having alkoxy group | Alkoxysiloxane 1 | 0.00 | 0.00 | 0.00 | 0.00 | 0.00 | 0.00 | 0.00 | 0.00 |
| | | Organopolysiloxane having hydroxyl group | Hydroxy group-containing organopolysiloxane 1 | 0.00 | 0.00 | 0.00 | 0.00 | 0.00 | 0.00 | 0.00 | 0.00 |
| | | | Hydroxy group-containing organopolysiloxane 2 | 0.00 | 0.00 | 0.00 | 0.00 | 0.00 | 0.00 | 0.00 | 0.00 |
| | | | Hydroxy group-containing organopolysiloxane 3 | 0.0 | 39.0 | 38.0 | 36.0 | 32.0 | 30.0 | 28.0 | 24.0 |

(continued)

| | | | | Comparative Example 25 | Example 40 | Example 41 | Example 42 | Example 43 | Example 44 | Example 45 | Example 46 |
|---|---|---|---|---|---|---|---|---|---|---|---|
| | Thermally conductive filler (B) | Thermally conductive filler having π electron | Graphitized carbon fiber 2 | 157 | 157 | 157 | 157 | 157 | 157 | 157 | 157 |
| | | | Scale-like graphite | 17.8 | 17.8 | 17.8 | 17.8 | 17.8 | 17.8 | 17.8 | 17.8 |
| | | Thermally conductive filler having no π electron | Aluminum hydroxide 2 | 71.4 | 71.2 | 71.2 | 71.2 | 71.2 | 71.3 | 71.2 | 71.2 |
| | | | Aluminum oxide 1 | 89.2 | 89.0 | 89.0 | 89.0 | 89.0 | 89.1 | 89.0 | 89.0 |
| | | | Aluminum oxide 2 | 314 | 313 | 313 | 313 | 313 | 314 | 313 | 313 |
| | Other additive | Ratinum catalyst | | 0.371 | 0.312 | 0.312 | 0.312 | 0.312 | 0.312 | 0.312 | 0.312 |
| | | n-decyltrimethoxysilane | | 21.4 | 21.4 | 21.4 | 21.4 | 21.4 | 21.4 | 21.4 | 21.4 |
| Property of composition | H/Vi | | | 0.473 | 0.538 | 0.538 | 0.538 | 0.538 | 0.538 | 0.538 | 0.538 |
| | Curing property | | 80°C×8h | A | A | A | A | A | A | A | A |
| | | | 150°Cx6h | A | A | A | A | A | A | A | A |
| | Viscosity $\times 10^3$(Pa·s) | | Shear rate $1\times 10^4$ $s^{-1}$ | 4966 | 1157 | 871 | 716 | 438 | 618 | 766 | 901 |
| | | | Shear rate 0.1 $s^{-1}$ | 12.1 | 4.50 | 3.77 | 3.37 | 2.73 | 2.80 | 3.44 | 3.91 |
| | | | Viscosity ratio | 411 | 257 | 231 | 212 | 160 | 221 | 222 | 230 |
| | Rercing load 1 | | Maximum load 1 (gf) | 294 | 152 | 103 | 96.4 | 86.4 | 125 | 102.2 | 95.2 |
| | | | Slope 1-1 | 21.5 | 9.78 | 5.78 | 5.40 | 3.56 | 6.56 | 5.02 | 4.69 |
| | | | Slope 1-2 | 44.7 | 20.5 | 12.5 | 12.9 | 9.42 | 14.5 | 12.5 | 12.0 |

(continued)

| | | | Comparative Example 25 | Example 40 | Example 41 | Example 42 | Example 43 | Example 44 | Example 45 | Example 46 |
|---|---|---|---|---|---|---|---|---|---|---|
| Property of cured product | Fluorescence spectrum | Wavelength of maximum 1 on short-wavelength side | None | 375 | 375 | 375 | 375 | 375 | 375 | 375 |
| | | Wavelength of maximum 2 on long-wavelength side | None | 480 | 480 | 480 | 480 | 480 | 480 | 480 |
| | | Strength ratio of maximum 1 and maximum 2 | None | 0.0485 | 0.0653 | 0.0987 | 0.166 | 0.248 | 0.233 | 0.300 |
| | Thermal conductivity 1 (W/m·K) | | 18.1 | 23.7 | 23.5 | 22.6 | 20.8 | 19.0 | 19.4 | 21.2 |
| | Compressive load (kgf) | | 0.54 | 0.80 | 1.07 | 0.93 | 0.69 | 0.52 | 0.57 | 0.80 |
| Physical property of material | Total specific surface area of thermally conductive filler having π electron ($m^2$) | | 244 | 243 | 243 | 243 | 243 | 244 | 243 | 243 |
| | Total weight of thermally conductive filler having π electron (g) | | 175 | 174 | 174 | 174 | 174 | 175 | 174 | 174 |
| | Amount of fluorescent polysiloxane/total specific surface area of thermally conductive filler having π electron ($mg/m^2$) | | 0.00 | 4.12 | 8.2 | 16.5 | 32.9 | 41.0 | 49.4 | 65.9 |
| | Amount of fluorescent polysiloxane/total w eight of thermally conductive filler having π electron (-) | | 0.000 | 0.006 | 0.011 | 0.023 | 0.046 | 0.057 | 0.069 | 0.092 |
| | Concentration of organopolysiloxane having hydroxyl group (mmol) | | 0.00 | 2.60 | 2.54 | 240 | 2.14 | 2.00 | 1.87 | 1.60 |
| | Number of functional groups as hydroxyl groups | | 0 | 2 | 2 | 2 | 2 | 2 | 2 | 2 |
| | Hydroxyl group concentration (mmol) | | 0.00 | 5.20 | 5.07 | 4.80 | 4.27 | 3.99 | 3.74 | 3.20 |
| | Hydroxyl group concentration 2 (μmol/g) | | 0.0 | 6.8 | 6.6 | 6.2 | 5.6 | 5.2 | 4.9 | 4.2 |
| | Number of functional groups as alkoxy groups | | 0 | 0 | 0 | 0 | 0 | 0 | 0 | 0 |
| | Alkoxy group concentration (mmol) | | 0.00 | 0.00 | 0.00 | 0.00 | 0.00 | 0.00 | 0.00 | 0.00 |
| | Total specific surface area of polar filler (x $10^3 rn^2$) | | 15.6 | 15.5 | 15.5 | 15.5 | 15.5 | 15.5 | 15.5 | 15.5 |
| | Hydroxyl group concentration/total specific surface area of polar filler ($\mu mol/m^2$) | | 0.00 | 0.335 | 0.327 | 0.310 | 0.275 | 0.257 | 0.241 | 0.206 |

(continued)

| | | Comparative Example 25 | Example 40 | Example 41 | Example 42 | Example 43 | Example 44 | Example 45 | Example 46 |
|---|---|---|---|---|---|---|---|---|---|
| | Alkoxy group concentration/total specific surface area of polar filler (μmol/m$^2$) | 0.00 | 0.00 | 0.00 | 0.00 | 0.00 | 0.00 | 0.00 | 0.00 |
| Improving effect on fluidity | Reference sample for viscosity decrease ratio and decrease ratio | - | Comparative Example 25 | | | | | | |
| | Viscosity decrease ratio at shear rate of $1 \times 10^{-4}$ $s^{-1}$ (%) | - | 76.7% | 82.5% | 85.6% | 91.2% | 87.6% | 84.6% | 81.9% |
| | Viscosity decrease ratio at shear rate of 0.1 $s^{-1}$ (%) | - | 62.7% | 68.8% | 72.1% | 77.4% | 76.8% | 71.5% | 67.6% |
| | Reference sample for ratio of decrease in piercing load | - | Comparative Example 25 | | | | | | |
| | Ratio of decrease in maximum load 1 (%) | - | 48.4% | 65.1% | 67.2% | 70.6% | 57.5% | 65.2% | 67.6% |
| | Ratio of decrease in slope 1-1 (%) | - | 54.4% | 73.0% | 74.8% | 83.4% | 69.4% | 76.6% | 78.2% |
| | Ratio of decrease in slope 1-2 (%) | - | 54.1% | 72.0% | 71.2% | 78.9% | 67.4% | 71.9% | 73.1% |

[Table 10-2]

Table 10-2

| | | | | Comparative Example 25 | Example 47 | Example 48 | Example 49 | Example 50 | Example 51 |
|---|---|---|---|---|---|---|---|---|---|
| Blending amount (parts by mass) | Organopolysiloxane (A) | Addition reaction type silicone | Alkenyl group-containing organopolysiloxane | 90.7 | 54.2 | 54.2 | 54.2 | 54.2 | 54.2 |
| | | | Hydrogen organopolysiloxane 1 | 9.28 | 5.55 | 5.55 | 5.55 | 5.55 | 5.55 |
| | | | Hydrogen organopolysiloxane 2 | 0.064 | 0.178 | 0.178 | 0.178 | 0.178 | 0.178 |
| | | Fluorescent polysiloxane | Perylene dispersant | 0.00 | 0.00 | 0.00 | 0.00 | 0.00 | 0.00 |
| | | | Pyrene dispersant 1 | 0.00 | 20.0 | 30.0 | 20.0 | 20.0 | 0.00 |
| | | Organopolysiloxane having alkoxy group | Alkoxysiloxane 1 | 0.00 | 0.00 | 0.00 | 0.00 | 0.00 | 8.01 |
| | | Organopolysiloxane having hydroxyl group | Hydroxy group-containing organopolysiloxane 1 | 0.00 | 0.00 | 0.00 | 20.0 | 0.00 | 0.00 |
| | | | Hydroxy group-containing organopolysiloxane 2 | 0.00 | 0.00 | 0.00 | 0.00 | 20.0 | 0.00 |
| | | | Hydroxy group-containing organopolysiloxane 3 | 0.0 | 20.0 | 10.0 | 0.00 | 0.00 | 32.0 |
| | Thermally conductive filler (B) | Thermally conductive filler having π electron | Graphitized carbon fiber 2 | 157 | 157 | 157 | 157 | 157 | 157 |
| | | | Scale-like graphite | 17.8 | 17.8 | 17.8 | 17.8 | 17.8 | 17.8 |
| | | Thermally conductive filler having no π electron | Aluminum hydroxide 2 | 71.4 | 71.2 | 71.2 | 71.2 | 71.2 | 71.2 |
| | | | Aluminum oxide 1 | 89.2 | 89.0 | 89.0 | 89.0 | 89.0 | 89.0 |
| | | | Aluminum oxide 2 | 314 | 313 | 313 | 313 | 313 | 313 |
| | Other additive | Ratinum catalyst | | 0.371 | 0.312 | 0.312 | 0.312 | 0.312 | 0.222 |
| | | n-decyltrirrethoxysilane | | 21.4 | 21.4 | 21.4 | 21.4 | 21.4 | 21.4 |
| | H/Vi | | | 0.473 | 0.538 | 0.538 | 0.538 | 0.538 | 0.538 |
| | Curing property | | 80°C×8h | A | A | A | A | A | A |
| | | | 150°C×6h | A | A | A | A | A | A |

(continued)

| | | | Comparative Example 25 | Example 47 | Example 48 | Example 49 | Example 50 | Example 51 |
|---|---|---|---|---|---|---|---|---|
| Property of composition | Viscosity $\times 10^3$ (Pa·s) | Shear rate $1\times10^4$ $s^{-1}$ | 4966 | 786 | 1056 | 3087 | 1235 | 3008 |
| | | Shear rate 0.1 $s^{-1}$ | 12.1 | 3.84 | 3.69 | 9.60 | 4.80 | 6.71 |
| | | Viscosity ratio | 411 | 205 | 286 | 322 | 257 | 449 |
| | Piercing load 1 | Maximum load 1 (gf) | 294 | 93.1 | 102 | 155 | 77.3 | 197 |
| | | Slope 1-1 | 21.5 | 3.59 | 7.62 | 15.1 | 3.01 | 14.6 |
| | | Slope 1-2 | 44.7 | 9.72 | 15.9 | 30.0 | 10.2 | 28.0 |
| Property of cured product | Fluorescence spectrum | Wavelength of maximum 1 on short-wavelength side | None | 375 | 375 | 375 | 375 | None |
| | | Wavelength of maximum 2 on long-wavelength side | None | 480 | 480 | 480 | 480 | None |
| | | Strength ratio of maximum 1 and maximum 2 | None | 0.366 | 0.534 | 0.366 | 0.366 | None |
| | Thermal conductivity 1 (W/m·K) | | 18.1 | 21.9 | 22.2 | 18.1 | 19.0 | 22.6 |
| | Compressive load (kgf) | | 0.54 | 0.90 | 0.93 | 0.40 | 0.51 | 0.83 |
| Physical property of material | Total specific surface area of thermally conductive filler having $\pi$ electron ($m^2$) | | 244 | 243 | 243 | 243 | 243 | 243 |
| | Total weight of thermally conductive filler having $\pi$ electron (g) | | 175 | 174 | 174 | 174 | 174 | 174 |
| | Amount of fluorescent polysiloxane/total specific surface area of thermally conductive filler having $\pi$ electron (mg/$m^2$) | | 0.00 | 82.3 | 123 | 82.3 | 82.3 | 0.00 |
| | Amount of fluorescent polysiloxane/total weight of thermally conductive filler having $\pi$ electron (-) | | 0.000 | 0.115 | 0.172 | 0.115 | 0.115 | 0.00 |
| | Concentration of organopolysiloxane having hydroxyl group (mmol) | | 0.00 | 1.33 | 0.67 | 20.02 | 4.00 | 2.13 |
| | Number of functional groups as hydroxyl groups | | 0 | 2 | 2 | 2 | 2 | 2 |
| | Hydroxyl group concentration (mmol) | | 0.00 | 2.67 | 1.33 | 40.0 | 8.01 | 4.27 |
| | Hydroxyl group concentration 2 ($\mu$mol/g) | | 0.0 | 3.5 | 1.7 | 52.0 | 10.4 | 5.5 |
| | Number of functional groups as alkoxy groups | | 0 | 0 | 0 | 0 | 0 | 3 |

(continued)

| | | Comparative Example 25 | Example 47 | Example 48 | Example 49 | Example 50 | Example 51 |
|---|---|---|---|---|---|---|---|
| | Alkoxy group concentration (mmol) | 0.00 | 0.00 | 0.00 | 0.00 | 0.00 | 9.61 |
| | Total specific surface area of polar filler ($\times 10^3 m^2$) | 15.6 | 15.5 | 15.5 | 15.5 | 15.5 | 15.5 |
| | Hydroxyl group concentration/total specific surface area of polar filler ($\mu mol/m^2$) | 0.00 | 0.172 | 0.086 | 2.581 | 0.516 | 0.275 |
| | Alkoxy group concentration/total specific surface area of polar filler ($\mu mol/m^2$) | 0.00 | 0.00 | 0.00 | 0.00 | 0.00 | 0.619 |
| Improving effect on fluidity | Reference sample for viscosity decrease ratio and decrease ratio | - | Comparative Example 25 | | | | |
| | Viscosity decrease ratio at shear rate of $1 \times 10^{-4} s^{-1}$ (%) | - | 84.2% | 78.7% | 37.8% | 75.1% | 60.6% |
| | Viscosity decrease ratio at shear rate of 0.1 $s^{-1}$ (%) | - | 68.2% | 69.4% | 20.5% | 60.3% | 55.6% |
| | Reference sample for ratio of decrease in piercing load | - | Comparative Example 25 | | | | |
| | Ratio of decrease in maximum load 1 (%) | - | 68.3% | 65.4% | 47.4% | 73.7% | 32.9% |
| | Ratio of decrease in slope 1-1 (%) | - | 83.3% | 64.5% | 32.8% | 772% | 32.0% |
| | Ratio of decrease in slope 1-2 (%) | - | 78.2% | 64.4% | 29.8% | 86.0% | 37.3% |

[Table 11]

Table 11

| | | | | Comparative Example 26 | Example 52 | Comparative Example 27 | Example 53 | Comparative Example 28 | Example 54 | Comparative Example 29 | Example 55 | Comparative Example 30 | Example 56 |
|---|---|---|---|---|---|---|---|---|---|---|---|---|---|
| Blending amount (parts by mass) | Organopolysiloxane (A) | Organopolysiloxane having no hydroxyl group | Alkenyl group-containing organopolysiloxane | 70.0 | 70.0 | 70.0 | 70.0 | 70.0 | 70.0 | 70.0 | 70.0 | 70.0 | 70.0 |
| | | | Hydrogen organopolysiloxane 1 | 7.00 | 7.00 | 7.00 | 7.00 | 7.00 | 7.00 | 7.00 | 7.00 | 7.00 | 7.00 |
| | | | Hydrogen organopolysiloxane 2 | 0.0500 | 0.100 | 0.0500 | 0.100 | 0.0500 | 0.100 | 0.0500 | 0.100 | 0.0500 | 0.100 |
| | | | Polydimethylsiloxane 1 | 30.0 | 0.00 | 30.0 | 0.00 | 30.0 | 0.00 | 30.0 | 0.00 | 30.0 | 0.00 |
| | | Organopolysiloxane having hydroxyl group | Hydroxy group-containing organopolysiloxane 2 | 0.00 | 30.0 | 0.00 | 30.0 | 0.00 | 30.0 | 0.00 | 30.0 | 0.00 | 30.0 |
| | Thermally conductive filler (B) | Thermally conductive filler having polar group | Aluminum oxide 3 | 123 | 123 | 123 | 123 | 123 | 123 | 123 | 123 | 123 | 123 |
| | | | Aluminum oxide 1 | 328 | 328 | 328 | 328 | 328 | 328 | 328 | 328 | 328 | 328 |
| | | | Aluminum oxide 2 | 230 | 230 | 230 | 230 | 230 | 230 | 230 | 230 | 230 | 230 |
| | | Anisotropic filler | Boron nitride | 200 | 200 | 230 | 230 | 250 | 250 | 270 | 270 | 285 | 285 |
| | Other additive | Platinum catalyst | | 0.150 | 0.150 | 0.150 | 0.150 | 0.150 | 0.150 | 0.150 | 0.150 | 0.150 | 0.150 |
| | | n-decyltrimethoxysilane | | 23.0 | 23.0 | 23.0 | 23.0 | 23.0 | 23.0 | 23.0 | 23.0 | 23.0 | 23.0 |
| Property of composition | H/Vi | | | 0.463 | 0.482 | 0.482 | 0.482 | 0.482 | 0.482 | 0.482 | 0.482 | 0.482 | 0.482 |
| | Viscosity ($\times 10^3$ Pa·s) | | Shear rate $1\times10^{-4}$ $s^{-1}$ | 781 | 47.2 | 8473 | 410 | 9021 | 3366 | 11000 | 4695 | 14384 | 9959 |
| | | | Shear rate 0.1 $s^{-1}$ | 12.1 | 2.7 | 19.0 | 5.0 | 26.0 | 11.0 | 40.0 | 16.0 | 59.0 | 30.0 |
| | | | Viscosity ratio | 64.6 | 17.7 | 445.9 | 82.0 | 347.0 | 306.0 | 275.0 | 293.4 | 243.8 | 332.0 |

(continued)

| | | | Comparative Example 26 | Example 52 | Comparative Example 27 | Example 53 | Comparative Example 28 | Example 54 | Comparative Example 29 | Example 55 | Comparative Example 30 | Example 56 |
|---|---|---|---|---|---|---|---|---|---|---|---|---|
| | Piercing load 2 | Maximum load 2 (gf) | 60.5 | 19.8 | 108.5 | 47.8 | 170.6 | 94.5 | 350.0 | 155.4 | unmeasurable | 247.0 |
| | | Slope 2-1 | 7.35 | 2.41 | 39.11 | 4.98 | 56.94 | 10.31 | 130.00 | 21.17 | 225.40 | 42.10 |
| | | Slope 2-2 | 3.86 | 1.26 | 16.81 | 6.99 | 27.76 | 13.65 | 50.00 | 28.90 | 83.51 | 43.94 |
| | Curing property | 80°C×8h | A | A | A | A | A | A | A | A | A | A |
| | | 150°C×6h | A | A | A | A | A | A | A | A | A | A |
| Property of formed product | Thermal conductivity 1 (W/m·K) | | 11.1 | 10.7 | 11.9 | 11.1 | 12.6 | 11.7 | 13.4 | 12.3 | 13.9 | 12.8 |
| | Compressive load (kgf) | | 0.49 | 0.48 | 3.06 | 1.20 | 3.8 | 2.28 | 5.26 | 4.19 | 6.96 | 6.12 |
| Physical property of material | Concentration of organopolysiloxane having hydroxyl group (mmol) | | 0.00 | 6.00 | 0.00 | 6.00 | 0.00 | 6.00 | 0.00 | 6.00 | 0.00 | 6.00 |
| | Number of functional groups as hydroxyl groups | | 0 | 2 | 0 | 2 | 0 | 2 | 0 | 2 | 0 | 2 |
| | Hydroxyl group concentration (mmol) | | 0.00 | 12.0 | 0.00 | 12.0 | 0.00 | 12.0 | 0.00 | 12.0 | 0.00 | 12.0 |
| | Hydroxyl group concentration 2 (μmol/g) | | 0.00 | 11.9 | 0.00 | 11.5 | 0.00 | 11.3 | 0.00 | 11.1 | 0.00 | 10.9 |
| | Total specific surface area of polar filler (× $10^3 m^2$) | | 1.30 | 1.30 | 1.30 | 1.30 | 1.30 | 1.30 | 1.30 | 1.30 | 1.30 | 1.30 |
| | Hydroxyl group concentration/total specific surface area of polar filler (μmol/$m^2$) | | 0.00 | 9.24 | 9.24 | 9.24 | 9.24 | 9.24 | 9.24 | 9.24 | 9.24 | 9.24 |
| Improving effect on fluidity | Reference sample for viscosity decrease ratio and decrease ratio | | - | Comparative Example 26 | - | Comparative Example 27 | - | Comparative Example 28 | - | Comparative Example 29 | - | Comparative Example 30 |
| | Viscosity decrease ratio at shear rate of 1 × $10^{-4}$ $s^{-1}$ (%) (%) | | - | 94.0% | - | 95.2% | - | 62.7% | - | 57.3% | - | 30.8% |
| | Viscosity decrease ratio at shear rate of 0.1 $s^{-1}$ (%) | | - | 77.9% | - | 73.7% | - | 57.7% | - | 60.0% | - | 49.2% |
| | Reference sample for ratio of decrease in piercing load | | - | Comparative Example 26 | - | Comparative Example 27 | - | Comparative Example 28 | - | Comparative Example 29 | - | Comparative Example 30 |
| | Ratio of decrease in maximum load 2 (%) | | - | 67.3% | - | 55.9% | - | 44.6% | - | 55.6% | - | - |
| | Ratio of decrease in slope 2-1 (%) | | - | 67.3% | - | 87.3% | - | 81.9% | - | 83.7% | - | 81.3% |

As is aparent from the results shown in Table 1, the thermally conductive compositions of the present invention containing a hydroxyl group-containing organopolysiloxane having a specific structure exhibited a better viscosity reducing effect over thermally conductive compositions free of a hydroxyl group-containing organopolysiloxane, and the thermally conductive compositions of Comparative Examples in which an organopolysiloxane having an alkoxy group was used instead of a hydroxyl group-containing organopolysiloxane.

It is demonstrated that with respect to various formulations of thermally conductive fillers, such as systems in which polar group-containing thermally conductive fillers such as aluminum hydroxide, aluminum oxide and aluminum, anisotropic filler such as scale-like graphite and boron nitride, and the like are used alone, and systems in which any of the polar group-containing thermally conductive fillers and any of the anisotropic fillers are combined, the viscosity of the composition is reduced by using the hydroxyl group-containing organopolysiloxane in the present invention.

Further, it is demonstrated that the viscosity of a composition containing a thermally conductive filler having $\pi$ electrons, such as carbon fiber, scale-like graphite or boron nitride is effectively reduced by blending a fluorescent polysiloxane in addition to the hydroxyl group-containing organopolysiloxane.

Reference Signs List

| | |
|---|---|
| 10 | Thermally conductive formed product |
| 14 | Anisotropic filler |
| 18 | Blade |
| 21 | Primary sheet |
| 22 | Laminated block |
| 31 | Thermal insulator |
| 32 | Lower copper block |
| 33 | Upper copper block |
| 34 | Heater |
| 35 | Heat sink |
| 36 | Load cell |
| S | Test piece |

**Claims**

**1.** A thermally conductive composition comprising:

(A) an organopolysiloxane that is in a liquid form at 25°C; and
(B) a thermally conductive filler,

the (A) organopolysiloxane comprising an organopolysiloxane having a hydroxyl group at part of ends of a main chain or on a side chain, or at both the sites.

**2.** The thermally conductive composition according to claim 1, wherein the organopolysiloxane having a hydroxyl group has a hydroxyl group at one end of the main chain.

**3.** The thermally conductive composition according to claim 1 or 2, wherein in the organopolysiloxane having a hydroxyl group, a number n of repeat units represented by a siloxane backbone (-Si-O-) is 11 or more.

**4.** The thermally conductive composition according to claim 1 or 2, wherein the organopolysiloxane having a hydroxyl group has a structure represented by the following formula (X):

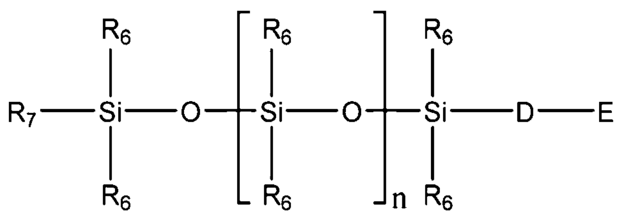

formula (X)

wherein $R_6$ and $R_7$ are each independently an alkyl group, D is ester, amide, ether, an alkylene group, an alkylene ether group, ethylene oxide, or oxime ester, E is an organic group having 1 to 10 carbon atoms and one or more hydroxyl groups, and n is an integer of 1 or more.

**5.** The thermally conductive composition according to claim 1 or 2, wherein a viscosity at a shear rate of 0.1 (1/s) at 25°C is 10 Pa•s or more and $20 \times 10^3$ Pa•s or less.

**6.** The thermally conductive composition according to claim 1 or 2, wherein the (A) organopolysiloxane comprises addition reaction type silicone.

**7.** The thermally conductive composition according to claim 1 or 2, wherein a concentration of hydroxyl groups derived from the organopolysiloxane having a hydroxyl group in the entire thermally conductive composition is 0.5 μmol/g or more and 250 μmol/g or less.

**8.** The thermally conductive composition according to claim 1 or 2, wherein the (B) thermally conductive filler comprises at least one selected from the group consisting of a metal oxide and a metal hydroxide.

**9.** The thermally conductive composition according to claim 1 or 2, wherein the (B) thermally conductive filler comprises an anisotropic filler.

**10.** The thermally conductive composition according to claim 8, wherein the anisotropic filler comprises one or more selected from the group consisting of carbon fiber, scale-like graphite and boron nitride.

**11.** The thermally conductive composition according to claim 1 or 2, wherein the (B) thermally conductive filler comprises a thermally conductive filler having at least one polar group selected from the group consisting of a metal oxide, a metal hydroxide and a metal, and a value obtained by dividing a concentration of hydroxyl groups of the organopolysiloxane having a hydroxyl group contained in the thermally conductive composition (the number of moles of hydroxyl groups in the composition) by a total specific surface area of the thermally conductive filler having a polar group is 0.01 $\mu mol/m^2$ or more and 30 $\mu mol/m^2$ or less.

**12.** The thermally conductive composition according to claim 1 or 2, wherein the (A) organopolysiloxane comprises an organopolysiloxane having an alkoxy group.

**13.** The thermally conductive composition according to claim 1 or 2, further comprising a volatile compound.

**14.** A thermally conductive formed product comprising a matrix comprising a cured product of an organopolysiloxane, and a thermally conductive filler, the organopolysiloxane comprising an organopolysiloxane having a hydroxyl group.

**15.** The thermally conductive formed product according to claim 14, wherein the thermally conductive filler comprises an anisotropic filler oriented in a predetermined direction.

Fig. 1

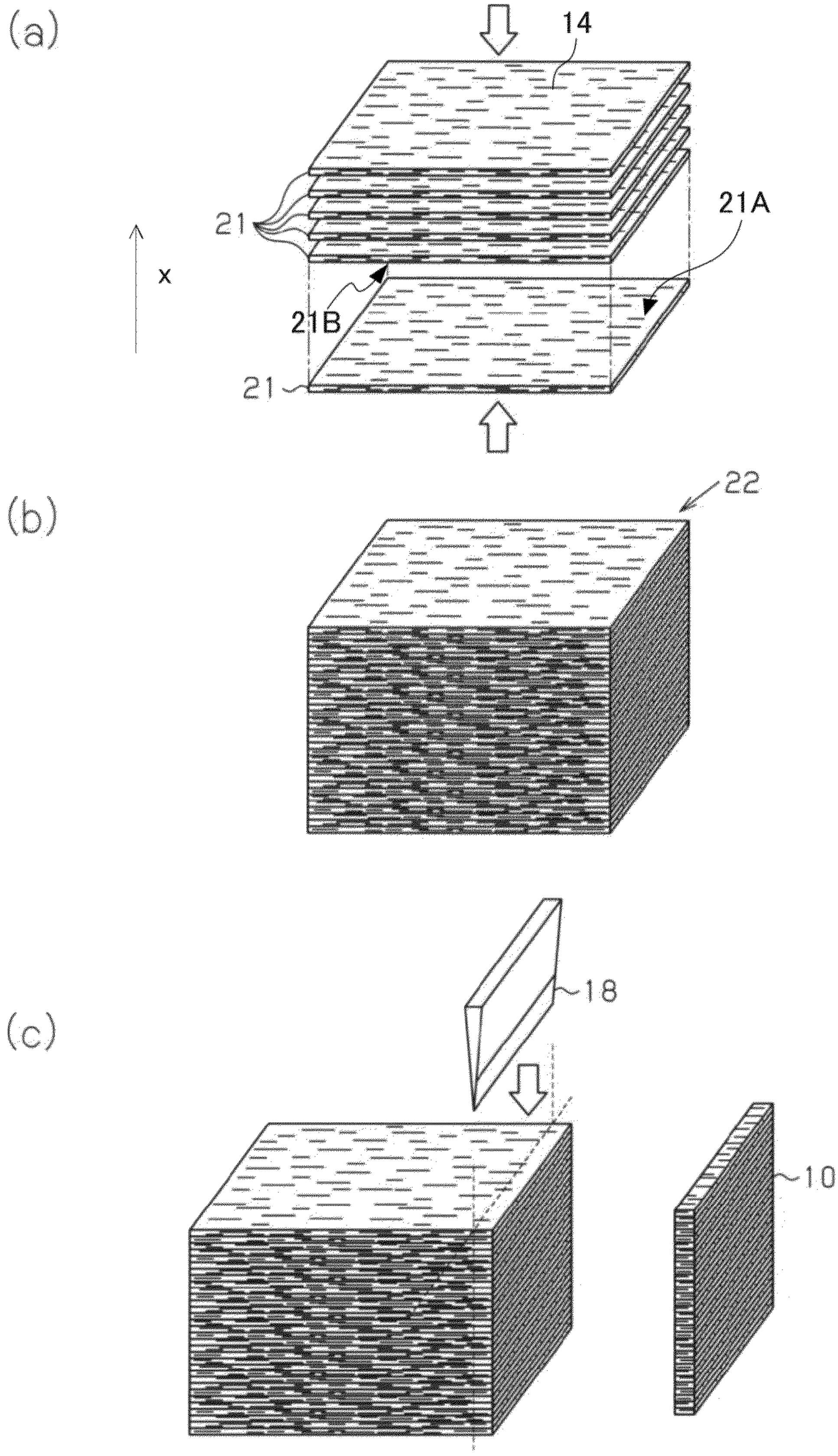

Fig. 2

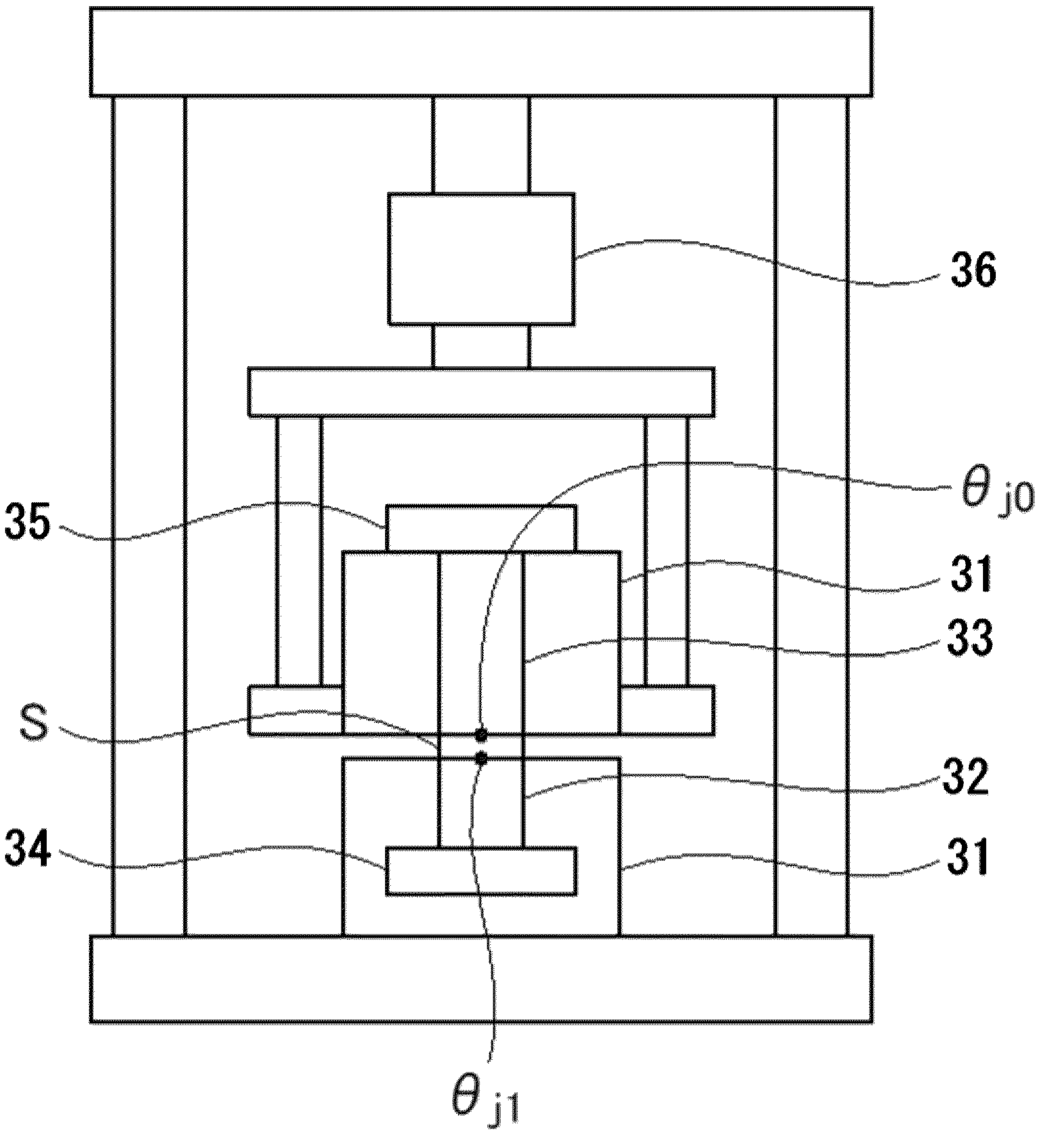

## INTERNATIONAL SEARCH REPORT

International application No.
**PCT/JP2024/003495**

### A. CLASSIFICATION OF SUBJECT MATTER

***C08L 83/06***(2006.01)i; ***C08K 3/04***(2006.01)i; ***C08K 3/22***(2006.01)i; ***C08K 3/28***(2006.01)i; ***C08L 83/05***(2006.01)i; ***C08L 83/07***(2006.01)i
FI: C08L83/06; C08L83/07; C08L83/05; C08K3/22; C08K3/04; C08K3/28

According to International Patent Classification (IPC) or to both national classification and IPC

### B. FIELDS SEARCHED

Minimum documentation searched (classification system followed by classification symbols)

C08L83/06; C08K3/04; C08K3/22; C08K3/28; C08L83/05; C08L83/07

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 2023-12918 A (JNC CORP.) 26 January 2023 (2023-01-26) claim 1, paragraphs [0007], [0018]-[0019], examples 1, 2, comparative examples 1-6, tables 1, 3, 4, amendment, table 2 | 1-11, 13-15 |
| Y | | 6, 12 |
| X | JP 2022-81264 A (JNC CORP.) 31 May 2022 (2022-05-31) claim 3, paragraphs [0006], [0029]-[0030], examples 1-7, comparative examples 1-5, table 3 | 1-11, 13-15 |
| Y | | 6, 12 |
| X | JP 2020-158631 A (SEKISUI CHEMICAL CO., LTD.) 01 October 2020 (2020-10-01) claims, paragraphs [0004], [0013]-[0014], [0054], [0070], [0087], examples 1-15, table 1 | 1, 3, 5-15 |
| Y | | 6 |
| Y | JP 2021-191823 A (SHIN-ETSU CHEMICAL CO., LTD.) 16 December 2021 (2021-12-16) claims, paragraphs [0037], [0093], examples 1-13, tables 1, 2 | 6, 12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (July 2022)

**INTERNATIONAL SEARCH REPORT**

International application No.
**PCT/JP2024/003495**

**C. DOCUMENTS CONSIDERED TO BE RELEVANT**

| Category* | Citation of document, with indication, where appropriate, of the relevant passages | Relevant to claim No. |
|---|---|---|
| A | JP 2018-197300 A (NIIGATA UNIV.) 13 December 2018 (2018-12-13) | 1-15 |
| P, X | JP 2023-148639 A (RESONAC HOLDINGS CORP.) 13 October 2023 (2023-10-13)<br>claims, paragraph [0036], examples | 1-5, 7, 8, 11-15 |
| P, X | CN 116694081 A (SUZHOU ZHONGYUAN NEW MATERIAL TECHNOLOGY CO., LTD.) 05 September 2023 (2023-09-05)<br>claims, examples | 1-5, 7-9, 11, 13-15 |

Form PCT/ISA/210 (second sheet) (July 2022)

**INTERNATIONAL SEARCH REPORT**
**Information on patent family members**

International application No.
**PCT/JP2024/003495**

| Patent document cited in search report | Publication date (day/month/year) | Patent family member(s) | Publication date (day/month/year) |
|---|---|---|---|
| JP 2023-12918 A | 26 January 2023 | (Family: none) | |
| JP 2022-81264 A | 31 May 2022 | (Family: none) | |
| JP 2020-158631 A | 01 October 2020 | (Family: none) | |
| JP 2021-191823 A | 16 December 2021 | (Family: none) | |
| JP 2018-197300 A | 13 December 2018 | (Family: none) | |
| JP 2023-148639 A | 13 October 2023 | US 2023/0399512 A1<br>claims, paragraphs [0051]-[0053], examples<br>CN 116891637 A | |
| CN 116694081 A | 05 September 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7136065 B